# EUROPÄISCHE PATENTANMELDUNG

(11) **EP 4 378 773 A1**
(43) Veröffentlichungstag der Anmeldung: **05.06.2024**
(21) Anmeldenummer: 23211557.6
(22) Anmeldetag: 22.11.2023
(51) Int. Cl.: B60T 17/22, F16D 66/02

(54) **BREMSSYSTEM UND VERWENDUNG EINER DETEKTIONSVORRICHTUNG BEI EINER BREMSVORRICHTUNG UND NACHRÜSTSATZ FÜR EIN BREMSSYSTEM**

(30) Priorität: 30.11.2022 DE 102022131795
(71) Anmelder: Gustav Magenwirth GmbH & Co. KG, 72574 Bad Urach (DE)
(72) Erfinder: Ruopp, Michael, 89180 Berghülen (DE)
(74) Vertreter: Hoeger, Stellrecht & Partner Patentanwälte mbB

(57) **Zusammenfassung**

Um ein Bremssystem, insbesondere für ein lenkergeführtes Fahrzeug und/oder für ein Leichtfahrzeug, mit einer Bremsvorrichtung, welche zumindest einen Träger für einen Bremsbelag und/oder zumindest einen Bremsbelag umfasst, zu verbessern, wird vorgeschlagen, dass das Bremssystem eine Detektionsvorrichtung zum Detektieren eines Verschleißes eines Bremsbelages der Bremsvorrichtung, insbesondere zum Detektieren eines Verschleißes eines von dem zumindest einen Träger getragenen Bremsbelages und/oder zum Detektieren eines Verschleißes des zumindest einen Bremsbelages, umfasst.

## Beschreibung

Die Erfindung betrifft ein Bremssystem, insbesondere ein Bremssystem für ein Fahrzeug, vorzugsweise ein Bremssystem für ein lenkergeführtes Fahrzeug und/oder für ein Leichtfahrzeug, sowie eine Verwendung einer Detektionsvorrichtung sowie einen Nachrüstsatz für ein Bremssystem, insbesondere einen Nachrüstsatz für ein Bremssystem eines Fahrzeuges, vorzugsweise für ein Bremssystem eines lenkergeführten Fahrzeuges und/oder eines Leichtfahrzeuges.

Die der Erfindung zugrunde liegende Aufgabe besteht darin ein Bremssystem und/oder eine Verwendung einer Detektionsvorrichtung und/oder einen Nachrüstsatz zu verbessern und/oder eine günstige Verwendung einer Detektionsvorrichtung und/oder einen günstigen Nachrüstsatz bereitzustellen.

Bei Ausführungsformen der Erfindung wird die Aufgabe durch ein Bremssystem mit einer Bremsvorrichtung, welche zumindest einen Träger für einen Bremsbelag und/oder zumindest einen Bremsbelag umfasst, gelöst, wobei das Bremssystem eine Detektionsvorrichtung zum Detektieren eines Verschleißes eines Bremsbelages der Bremsvorrichtung umfasst, wobei insbesondere die Detektionsvorrichtung zumindest zum Detektieren eines Verschleißes eines von dem zumindest einen Träger getragenen Bremsbelages und/oder zum Detektieren eines Verschleißes des zumindest einen Bremsbelages vorgesehen und ausgebildet ist.

Insbesondere ist ein Vorteil bei Ausführungsformen der Erfindung, dass mit der Detektionsvorrichtung bei zumindest einem Bremsbelag der Bremsvorrichtung ein Verschleiß detektiert wird und beispielsweise, wenn eine Dicke des Bremsbelages einen Schwellenwert unterschreitet, dies von der Detektionsvorrichtung detektiert wird und diese günstigerweise ein entsprechendes Signal über den Verschleiß des Bremsbelages bereitstellt. Insbesondere wird es hierdurch vereinfacht, einen Fahrer eines Fahrzeuges mit dem Bremssystem über einen Verschleiß des zumindest einen Bremsbelages zu informieren.

Insbesondere ist dies vorteilhaft, da es typischerweise für einen Fahrer zumindest umständlich ist einen Verschleiß eines Bremsbelages direkt in Augenschein zu nehmen. Insbesondere ist oft der Bremsbelag in der Bremsvorrichtung, insbesondere in einem Gehäuse der Bremsvorrichtung, zumindest schwer einsehbar angeordnet.

Bei Ausführungsformen der Erfindung wird die Aufgabe durch die Verwendung einer Detektionsvorrichtung zum Detektieren eines Verschleißes eines Bremsbelages einer Bremsvorrichtung, insbesondere eines Verschleißes eines Bremsbelages einer Bremsvorrichtung eines Bremssystems, gelöst. Vorzugsweise wird die Detektionsvorrichtung bei einem Fahrzeug, insbesondere bei einem lenkergeführten Fahrzeug und/oder einem Leichtfahrzeug verwendet.

Insbesondere ist bei Ausführungsformen der Erfindung ein Vorteil, dass durch die Verwendung der Detektionsvorrichtung ein Verschleiß eines Bremsbelages detektiert wird und beispielsweise ein Fahrer über den Bremsbelagverschleiß informiert wird. Insbesondere ist dies wie voranstehend und nachstehend erläutert vorteilhaft.

Bei Ausführungsformen der Erfindung wird die Aufgabe durch einen Nachrüstsatz für eine Bremsvorrichtung beispielsweise eines Bremssystems, insbesondere durch einen Nachrüstsatz für eine Bremsvorrichtung eines Fahrzeuges, vorzugsweise für eine Bremsvorrichtung eines lenkergeführten Fahrzeuges und/oder eines Leichtfahrzeuges, gelöst, wobei der Nachrüstsatz eine Detektionsvorrichtung zum Detektieren eines Verschleißes zumindest eines Bremsbelages bei der Bremsvorrichtung umfasst. Insbesondere ist die Detektionsvorrichtung zum Detektieren eines Verschleißes eines Bremsbelages ausgelegt und ausgebildet.

Insbesondere ist ein Vorteil bei Ausführungsformen der Erfindung, dass ein Bremssystem und/oder eine Bremsvorrichtung mit der Detektionsvorrichtung nachgerüstet und ausgestattet werden kann, sodass bei dem Bremssystem und/oder der Bremsvorrichtung ein Bremsbelagverschleiß detektiert werden kann, wobei insbesondere das Bremssystem und/oder die Bremsvorrichtung bereits ausgeliefert ist. Günstigerweise können so auch auf bereits in Gebrauch befindliche Bremssysteme und/oder Bremsvorrichtungen die Vorteile der Detektionsvorrichtung übertragen werden.

Insbesondere ist das Bremssystem und/oder die Bremsvorrichtung mit dem Bremsbelag für die Sicherheit beispielsweise bei der Fahrt mit dem Fahrzeug hochrelevant und ein zu stark abgenutzter Bremsbelag ist ein hohes Sicherheitsrisiko und kann beispielsweise zu schwerwiegenden Unfällen führen. Somit ist es für die Sicherheit von großer Bedeutung, einen Bremsbelagverschleiß zu detektieren und beispielsweise zu überwachen und insbesondere bei Überschreiten eines Schwellenwertes für die Dicke des Bremsbelages den Fahrer hierüber zu informieren.

Daher ist es ein besonderes Bedürfnis, eine neue und/oder eine bereits in Gebrauch befindliche Bremsvorrichtung mit einer Detektionsvorrichtung auszustatten und bei einer Bremsvorrichtung eine Detektionsvorrichtung mit dem Bremsbelagverschleiß zu verwenden.

Weil das Bremssystem und/oder die Verwendung einer Detektionsvorrichtung und/oder der Nachrüstsatz gemeinsame Merkmale und/oder Elemente und/oder Vorteile aufweisen, werden diese nachfolgend gemeinsam beschrieben, um Wiederholungen zu vermeiden.

Hinsichtlich der Detektionsvorrichtung des Bremssystems und/oder der Detektionsvorrichtung des Nachrüstsatzes und/oder der Verwendung und/oder der verwendeten Detektionsvorrichtung wurden bislang keine weiteren Details gegeben.

Bei vorteilhaften Ausführungsformen umfasst die Detektionsvorrichtung eine Sensoreinheit mit zumindest einem Sensor, also mit genau einem Sensor oder mit mehreren Sensoren.

Insbesondere weist der genau eine Sensor oder weist zumindest ein Sensor von mehreren Sensoren, beispielsweise weisen zumindest einige von mehreren Sensoren zumindest eines oder zumindest einige der nachfolgend erläuterten Merkmale auf.

Insbesondere ist zumindest ein Sensor der Sensoreinheit ausgebildet, um einen Bremsbelagverschleiß zu detektieren, insbesondere um einen Zustand und/oder eine Beschaffenheit des Bremsbelages und vorzugsweise zumindest einen hierfür zumindest indikativen Parameter zu detektieren und beispielsweise zu messen.

Insbesondere ist zumindest ein Sensor ausgebildet, um zumindest einen für eine Dicke des Bremsbelages indikativen Parameter zu detektieren und beispielsweise zu messen, sodass aus dem detektierten und beispielsweise gemessenen Parameter zumindest geschlossen werden kann, ob eine Dicke des Bremsbelages größer oder kleiner als ein Schwellenwert ist und beispielsweise kann aus diesem Parameter zumindest geschlossen werden, ob die Dicke des Bremsbelages in einem bestimmten Dickenbereich liegt. Bei einigen bevorzugten Ausführungsformen kann aus diesem zumindest einen Parameter zumindest innerhalb vorbestimmter Fehlertoleranzen auf den tatsächlichen Wert der Dicke des Bremsbelages geschlossen werden.

Insbesondere umfasst die Bremsvorrichtung zumindest eine Beaufschlagungseinheit, günstigerweise zwei Beaufschlagungseinheiten.

Insbesondere umfasst zumindest eine Beaufschlagungseinheit zumindest einen Träger für einen Bremsbelag und/oder einen Bremsbelag. Günstigerweise umfassen zumindest einige, vorzugsweise sämtliche, der mehreren Beaufschlagungseinheiten jeweils zumindest einen Träger für einen Bremsbelag und/oder einen Bremsbelag.

Günstigerweise beaufschlagt die zumindest eine Beaufschlagungseinheit mit ihrem Bremsbelag bei einem Bremsvorgang bremswirksam ein Bremsgegenstück, insbesondere einen Bremsring.

Günstigerweise ist die Bremsvorrichtung dafür ausgelegt, dass bei einem Bremsvorgang das Bremsgegenstück, insbesondere der Bremsring, bezogen auf eine Beaufschlagungsachse beidseits von je einem Bremsbelag, der günstigerweise von einem jeweiligen Träger getragen wird, beaufschlagt wird.

Insbesondere wird der Bremsvorgang durch eine Betätigung der Bremsvorrichtung ausgelöst.

Insbesondere ist bei einer bremswirksamen Beaufschlagung eine Beaufschlagungseinheit in einer Bremsstellung.

Insbesondere ist eine Ausgangsstellung zumindest einer Beaufschlagungseinheit definiert und insbesondere sind jeweilige Ausgangsstellungen der mehreren Beaufschlagungseinheiten definiert. Insbesondere ist in einem unbetätigten Zustand der Bremsvorrichtung eine Beaufschlagungseinheit in ihrer Ausgangsstellung.

Insbesondere wird eine Beaufschlagungseinheit bei einer Betätigung der Bremsvorrichtung in ihren bremswirksamen Zustand versetzt, insbesondere aus ihrer Ausgangsstellung in ihre Bremsstellung versetzt, wobei insbesondere die Beaufschlagungseinheit einen vorzugsweise vordefinierten Verfahrweg dabei zurücklegt.

Bei vorteilhaften Ausführungsformen detektiert die Detektionsvorrichtung zumindest eine Position einer Beaufschlagungseinheit der Bremsvorrichtung und/oder zumindest eine räumliche Verschiebung einer Beaufschlagungseinheit der Bremsvorrichtung. Insbesondere ist die Detektionsvorrichtung zumindest für diese Detektion ausgelegt und ausgebildet.

Günstigerweise ist eine Position, insbesondere die detektierte Position, und/oder eine räumliche Verschiebung, insbesondere die detektierte räumliche Verschiebung, einer Beaufschlagungseinheit zumindest indikativ für den Bremsbelagverschleiß, vorzugsweise zumindest indikativ für eine Dicke des Bremsbelages, dessen Bremsbelagverschleiß detektiert werden soll.

Insbesondere ist eine Position, beispielsweise eine Position in der Ausgangsstellung und/oder in der Bremsstellung, und/oder eine räumliche Verschiebung, insbesondere in den bremswirksamen Zustand hinein, einer Beaufschlagungseinheit abhängig von einer Dicke eines Bremsbelages und somit zumindest indikativ für einen Bremsbelagverschleiß, insbesondere indikativ für die Dicke des Bremsbelages.

Bei einigen vorteilhaften Ausführungsformen ist die Ausgangsstellung einer Beaufschlagungseinheit so definiert, dass bei einem Bremsvorgang die Beaufschlagungseinheit einen in seiner Länge zumindest im Wesentlichen festgelegten und vordefinierten Verfahrweg, der günstigerweise unabhängig ist von der Dicke des Bremsbelages, in den bremswirksamen Zustand hat. Insbesondere ist dabei die Ausgangsstellung und insbesondere eine Position der Beaufschlagungseinheit in der Ausgangsstellung von der Dicke des Bremsbelages abhängig.

Bei einigen Ausführungsformen ist bei einem Bremsvorgang die Länge des Verfahrwegs einer Beaufschlagungseinheit in den bremswirksamen Zustand von der Dicke eines Bremsbelages abhängig.

Bei vorteilhaften Ausführungsformen ist die Detektionsvorrichtung, insbesondere zumindest ein Sensor einer Sensoreinheit der Detektionsvorrichtung, auf einen Zustand der Bremsvorrichtung, insbesondere einen Zustand einer Beaufschlagungseinheit, bei einer bekannten Dicke des Bremsbelages kalibriert. Günstigerweise kann so die Detektionsvorrichtung aus einer Änderung zu dem kalibrierten Zustand auf den Bremsbelagverschleiß schließen. Beispielsweise ist die Detektionsvorrichtung auf eine Position einer Beaufschlagungseinheit, insbesondere in deren Ausgangsstellung und/oder Bremsstellung, kalibriert und/oder bezüglich einer räumlichen Verschiebung, insbesondere eines Verfahrweges bei einem Bremsvorgang, der Beaufschlagungseinheit kalibriert.

Bei einigen vorteilhaften Ausführungsformen umfasst die Sensoreinheit zumindest einen berührungsfrei detektierenden Sensor.

Beispielsweise ist dies vorteilhaft, da durch die berührungsfreie Detektion mit diesem Sensor eine bremswirksame Funktionsweise der Bremsvorrichtung zumindest im Wesentlichen nicht beeinträchtigt wird.

Insbesondere ist eine berührungsfreie Detektion mit dem Sensor bei einigen Ausführungsformen vorteilhaft, da hierbei zumindest im Wesentlichen keine Reibungsverluste und/oder keine Abnutzung von mechanisch wirkenden Teilen auftritt.

Bei vorteilhaften Ausführungsformen umfasst die Sensoreinheit zumindest einen elektromagnetisch wirkenden Sensor.

Insbesondere ist dies günstig, da mit dem elektromagnetisch wirkenden Sensor eine präzise Messung eines zu detektierenden Parameters erfolgen kann und beispielsweise in einfacher Weise ein Detektionsergebnis signalübertragend weitergeleitet werden kann.

Bei besonders vorteilhaften Ausführungsformen umfasst die Sensoreinheit zumindest einen als Magnetfeldsensor ausgebildeten Sensor zur Detektion eines Magnetfeldes.

Insbesondere ist mit einem Magnetfeldsensor eine präzise Messung ermöglicht.

Beispielsweise lässt sich in konstruktiv günstiger Weise ein Magnetfeldsensor in die Bremsvorrichtung integrieren, beispielsweise bei einer neu zu fertigenden Bremsvorrichtung und/oder bei einer bereits in Gebrauch befindlichen Bremsvorrichtung als Nachrüstsatz.

Insbesondere ist das von dem Magnetfeldsensor zu detektierende Magnetfeld zumindest indikativ für einen Verschleiß eines Bremsbelages, dessen Verschleiß detektiert werden soll.

Günstigerweise kann so aus einer Detektion des Magnetfeldes, beispielsweise aus der Detektion einer lokalen Stärke des Magnetfeldes und/oder einer lokalen Ausrichtung des Magnetfeldes und/oder aus der Detektion einer lokalen und/oder globalen Änderung des Magnetfeldes, beispielsweise einer Änderung von dessen Stärke und/oder von dessen Ausrichtung, bei einem Bremsvorgang, auf den Verschleiß zumindest eines Bremsbelages und insbesondere auf eine Dicke des Bremsbelages geschlossen werden.

Unterschiedlichste elektromagnetisch wirkende Sensoren, insbesondere Magnetfeldsensoren, sind günstig.

Bei einigen vorteilhaften Ausführungsformen ist zumindest ein Sensor der Sensoreinheit ein Hall-Sensor.

Bei besonders günstigen Ausführungsformen umfasst die Bremsvorrichtung zumindest einen Magneten, also insbesondere genau einen Magneten oder vorzugsweise mehrere Magnete, beispielsweise zumindest zwei Magnete.

Vorteilhafterweise ist ein Magnetfeld zumindest eines Magneten der Bremsvorrichtung, beispielsweise ein Magnetfeld von zumindest zwei Magneten der Bremsvorrichtung, zumindest indikativ für einen Bremsbelagverschleiß, also insbesondere zumindest indikativ für einen Verschleiß zumindest eines von dem zumindest einen Träger getragenen Bremsbelages und/oder zumindest indikativ für einen Verschleiß des zumindest einen Bremsbelages.

Vorteilhafterweise ist zumindest ein Magnet zumindest mit dem zumindest einen Träger für einen Bremsbelag und/oder mit dem zumindest einen Bremsbelag gekoppelt und die Kopplung ist so ausgebildet, dass das Magnetfeld des zumindest einen Magneten zumindest indikativ für den Bremsbelagverschleiß ist.

Insbesondere ist eine Position des zumindest einen Magneten, beispielsweise eine Position des Magneten in einer Ausgangsstellung und/oder Bremsstellung der Bremsvorrichtung, zumindest indikativ für den Bremsbelagverschleiß.

Insbesondere ist die Position des zumindest einen Magneten abhängig von der Dicke des zumindest einen Bremsbelages und somit zumindest indikativ für den Bremsbelagverschleiß, insbesondere zumindest indikativ für die Dicke des Bremsbelages.

Bei einigen günstigen Ausführungsformen ist eine räumliche Verschiebung des zumindest einen Magneten, insbesondere eine Verschiebung entlang des Verfahrweges bei einem Bremsvorgang, zumindest indikativ für den Bremsbelagverschleiß.

Insbesondere ist, wenn eine Position und/oder eine räumliche Verschiebung des zumindest einen Magneten zumindest indikativ für einen Bremsbelagverschleiß ist, auch das Magnetfeld des zumindest einen Magneten entsprechend für den Bremsbelagverschleiß zumindest indikativ.

Insbesondere wird der Magnetfeldsensor bei einer bekannten Dicke des Bremsbelages kalibriert, sodass Änderungen bei dem Magnetfeld zu dem kalibrierten Zustand zumindest indikativ für den Bremsbelagverschleiß sind.

Insbesondere ist durch die Kopplung eine Relativposition des zumindest einen Magneten zu dem zumindest einen Träger und/oder zu dem zumindest einen Bremsbelag festgelegt.

Beispielsweise ist der zumindest eine Magnet unmittelbar oder mittelbar fest an den zumindest einen Träger und/oder den zumindest einen Bremsbelag zumindest montierbar und insbesondere zumindest in einem montierten Zustand montiert.

Vorzugsweise ist vorgesehen, dass zumindest ein Magnet, welcher und/oder dessen Magnetfeld zumindest indikativ für den Bremsbelagverschleiß ist, in der Beaufschlagungseinheit mit dem zumindest einen Träger und/oder dem zumindest einen Bremsbelag angeordnet ist.

Besonders vorteilhaft ist es, wenn der zumindest eine Magnet in der Beaufschlagungseinheit an der Seite, an welcher der zumindest eine Träger und/oder der zumindest eine Bremsbelag angeordnet ist, angeordnet ist.

Beispielsweise ist dies vorteilhaft, da dann der zumindest eine Magnet zumindest in der Nähe des Trägers und/oder des Bremsbelages angeordnet ist und so in besonders günstiger Weise für den Bremsbelagverschleiß indikativ ist.

Bei vorteilhaften Ausführungsformen umfasst zumindest eine Beaufschlagungseinheit zumindest einen Magneten, welcher zumindest vorgesehen ist, einen Bremsbelag dieser Beaufschlagungseinheit zu halten und insbesondere den Bremsbelag hält.

Beispielsweise ist dies vorteilhaft, da so günstigerweise der Bremsbelag an der Beaufschlagungseinheit befestigt werden kann und, wenn der Bremsbelag verschlissen ist, dieser einfach entfernt und durch einen neuen Bremsbelag ausgetauscht werden kann.

Bei besonders bevorzugten Ausführungsformen ist vorgesehen, dass zumindest ein Magnet, dessen Magnetfeld von der Detektionsvorrichtung detektiert werden soll, vorgesehen ist, den Bremsbelag, insbesondere dessen Bremsbelagverschleiß detektiert werden soll, zu halten. Insbesondere hält dieser Magnet diesen Bremsbelag in einem montierten Zustand.

Insbesondere ist dies vorteilhaft, da so dieser eine Magnet die zwei Funktionen des Haltens des Bremsbelages und indikativ für den Bremsbelagverschleiß zu sein erfüllt. Beispielsweise ist durch diese Funktionsintegration eine konstruktiv einfachere Beaufschlagungseinheit und/oder eine Beaufschlagungseinheit mit weniger Bauteilen möglich.

Insbesondere, aber nicht ausschließlich, ist dies bei einem Nachrüstsatz vorteilhaft. Wenn die Beaufschlagungseinheit bereits einen solchen Magneten zum Halten des Bremsbelages umfasst, kann dessen Magnetfeld von einem Sensor des Nachrüstsatzes ausgenützt werden, um einen Bremsbelagverschleiß zu detektieren.

Insbesondere ist das Magnetfeld zumindest zweier Magnete zumindest indikativ für den Bremsbelagverschleiß zumindest eines Bremsbelages, beispielsweise zumindest indikativ für den Bremsbelagverschleiß zumindest zweier Bremsbeläge.

Besonders vorteilhaft ist es, wenn das Magnetfeld zumindest zweier Magnete von der Detektionsvorrichtung für die Bremsbelagsverschleißerkennung detektiert wird.

Beispielsweise umfasst die Bremsvorrichtung zwei Beaufschlagungseinheiten mit je zumindest einem Magneten.

Insbesondere sind zumindest zwei Magnete zum Halten zumindest eines jeweiligen Bremsbelages vorgesehen.

Bei vorteilhaften Ausführungsformen ist vorgesehen, dass zumindest zwei Magnete mit zumindest einem gleichen magnetischen Pol, also beispielsweise mit ihrem jeweiligen Nordpol und/oder ihrem jeweiligen Südpol, einander zugewandt sind, insbesondere bezogen auf eine Beaufschlagungsachse einander zugewandt sind.

Günstigerweise werden Feldlinien eines Magnetfeldes der zumindest zwei Magnete dadurch, dass diese mit zumindest einem gleichen Pol einander zugewandt sind, aus einem Bereich zwischen den zwei Magneten herausgedrängt und das Magnetfeld ist in einer Umgebung der Magnete stärker und somit für die Detektionsvorrichtung besser zu detektieren.

Besonders günstig ist es, wenn eine Magnetachse zumindest eines Magneten, insbesondere eine jeweilige Magnetachse von den zumindest zwei Magneten, zumindest näherungsweise parallel zu einer Beaufschlagungsachse der Bremsvorrichtung ausgerichtet ist/sind.

Bei einigen vorteilhaften Ausführungsformen ist zumindest ein Sensor der Sensoreinheit der Detektionsvorrichtung ein Kontaktsensor.

Insbesondere umfasst der Kontaktsensor zumindest ein Kontaktelement. Günstigerweise ist der Kontaktsensor so ausgebildet, dass der Kontaktsensor zumindest bei einer Kontaktierung des Kontaktelementes an einer Kontaktstelle ein entsprechendes Signal bereitstellt.

Insbesondere ist ein Abstand zwischen dem Kontaktelement und der Kontaktstelle, günstigerweise ein Abstand zwischen einer der Kontaktstelle zugewandten Stirnseite des Kontaktelements und der Kontaktstelle, zumindest in einer Stellung der Bremsvorrichtung zumindest indikativ für einen Bremsbelagverschleiß.

Insbesondere ist der Abstand zumindest in der Bremsstellung der Bremsvorrichtung zumindest indikativ für den Bremsbelagverschleiß.

Vorteilhafterweise sind das Kontaktelement und die Kontaktstelle in zumindest einer Stellung, insbesondere zumindest in der Bremsstellung und/oder Ausgangsstellung, der Bremsvorrichtung in einer kontaktfreien Relativposition zueinander, solange eine Dicke eines Bremsbelages, dessen Verschleiß detektiert werden soll, größer ist als ein Kontaktwert der Dicke.

Günstigerweise sind das Kontaktelement und die Kontaktstelle in zumindest einigen, insbesondere in sämtlichen ordnungsgemäßen Stellungen der Bremsvorrichtung, in einer kontaktfreien Relativposition zueinander, solange eine Dicke eines Bremsbelages, dessen Verschleiß detektiert werden soll, größer ist als der Kontaktwert der Dicke.

Günstigerweise sind das Kontaktelement und die Kontaktstelle in zumindest einer Stellung, insbesondere zumindest in der Bremsstellung, der Bremsvorrichtung in einer kontaktierenden Relativposition zueinander, wenn eine Dicke eines Bremsbelages, dessen Verschleiß detektiert werden soll, kleiner ist als der Kontaktwert der Dicke des Bremsbelages.

Insbesondere detektiert somit der Kontaktsensor zumindest, ob die Dicke des Bremsbelages größer oder kleiner als der Kontaktwert ist. Günstigerweise dient hier der Kontaktwert als zumindest ein Schwellenwert für die Detektion des Bremsbelagverschleißes.

Beispielsweise ist es günstig, wenn das Kontaktelement und die Kontaktstelle in der Ausgangsstellung der Bremsvorrichtung in einer kontaktierenden Relativposition zueinander sind, wenn eine Dicke eines Bremsbelages, dessen Verschleiß detektiert werden soll, kleiner ist als der Kontaktwert der Dicke, da dann der Kontaktsensor auch in der Ausgangsstellung einen Bremsbelagverschleiß detektieren und beispielsweise signalisieren kann.

Bei einigen vorteilhaften Ausführungsformen sind das Kontaktelement und die Kontaktstelle in der Ausgangsstellung der Bremsvorrichtung in einer kontaktfreien Relativposition zueinander, zumindest wenn eine Dicke eines Bremsbelages, dessen Bremsbelagverschleiß detektiert werden soll, beispielsweise zumindest um höchstens eine vordefinierte Differenz, kleiner ist als der Kontaktwert der Dicke.

Bei einigen günstigen Ausführungsformen ist vorgesehen, dass das Kontaktelement und die Kontaktstelle in der Ausgangsstellung in einer kontaktierenden Relativposition zueinander sind, wenn die Dicke eines Bremsbelages, dessen Verschleiß detektiert werden soll, kleiner ist als eine kritische Dicke.

Beispielsweise ist es günstig, wenn in der Ausgangsstellung eine signalauslösende Kontaktierung bei dem Kontaktsensor vorliegt, wenn die Bremsbelagdicke kleiner ist als eine kritische Dicke, welche dann als zumindest ein Schwellenwert für die Detektion dient, da so beispielsweise ein Fahrer auf eine kritische geringe Dicke des Bremsbelages auch in der Ausgangsstellung durch die Detektionsvorrichtung hingewiesen werden kann.

Insbesondere ist kritische Dicke kleiner als der Kontaktwert der Dicke.

Bei einigen bevorzugten Ausführungsformen ist vorgesehen, dass das Kontaktelement und die Kontaktstelle in der Ausgangsstellung, zumindest bei ordnungsgemäßen Zuständen der Bremsvorrichtung, stets in einer kontaktfreien Relativposition zueinander sind. Beispielsweise ist dies vorteilhaft, da so in der Ausgangsstellung der Kontaktsensor stets keine Kontaktierung aufweist und insbesondere hierfür keine Energie verbraucht wird und/oder ein Hinausverfahren einer Beaufschlagungseinheit aus der Ausgangsstellung durch die Kontaktierung nicht beeinträchtigt wird.

Insbesondere ist der Kontaktsensor so ausgelegt, dass bei einer signalauslösenden Kontaktierung ein Stromkreis geschlossen wird.

Günstigerweise ist ein Pol des bei einer Kontaktierung zu schließenden Stromkreises mit dem Kontaktelement elektrisch leitend verbunden und es ist vorgesehen, dass der andere Pol, insbesondere die Masse, des bei einer Kontaktierung zu schließenden Stromkreises zumindest mit einer Kontaktstelle elektrisch leitend verbindbar ist und insbesondere zumindest in einem montierten Zustand mit der Kontaktstelle elektrisch leitend verbunden ist.

Bei einigen vorteilhaften Ausführungsformen ist vorgesehen, dass die Kontaktstelle zumindest von einem Gehäusekörper eines Gehäuses der Bremsvorrichtung elektrisch getrennt ist. Beispielsweise ist die Kontaktstelle von dem gesamten Gehäuse der Bremsvorrichtung elektrisch getrennt.

Beispielsweise ist ein Vorteil der zumindest gegenüber dem Gehäusekörper elektrisch isolierten Kontaktstelle, dass ein bei der Kontaktierung fließender Strom nicht über den Gehäusekörper und insbesondere nicht über weitere elektrisch getrennte Gehäuseteile fließt und somit diese nicht beeinträchtigt.

Beispielsweise ist ein Vorteil der zumindest gegenüber dem Gehäusekörper und beispielsweise gegenüber dem gesamten Gehäuse isolierten Kontaktstelle, dass insbesondere ein definierter Leitungspfad für den Kontaktierungsstrom vorgesehen ist und so beispielsweise eine sicherere und/oder weniger störanfällige Realisierung ermöglicht wird.

Bei einigen bevorzugten Ausführungsformen ist vorgesehen, dass der andere Pol des bei einer Kontaktierung zu schließenden Stromkreises mit dem Gehäusekörper des Gehäuses der Bremsvorrichtung elektrisch leitend zu verbinden ist. Insbesondere ist der andere Pol zumindest in einem montierten Zustand mit dem Gehäusekörper elektrisch leitend verbunden.

Insbesondere ist dabei der andere Pol über den Gehäusekörper mit der Kontaktstelle elektrisch leitend verbindbar, insbesondere elektrisch leitend verbunden.

Beispielsweise ist ein Vorteil hiervon, dass eine konstruktiv einfache Lösung ermöglicht wird. Beispielsweise ist dies für einen Nachrüstsatz, aber nicht ausschließlich für diesen, vorteilhaft, da insbesondere lediglich zu dem Kontaktelement eine elektrische Leitung einzumontieren ist.

Bei vorteilhaften Ausführungsformen ist vorgesehen, dass die Kontaktstelle an dem Gehäusekörper des Gehäuses der Bremsvorrichtung angeordnet ist, beispielsweise elektrisch getrennt angeordnet oder elektrisch leitend angeordnet.

Bei einigen bevorzugten Ausführungsformen ist die Kontaktstelle durch den Gehäusekörper ausgebildet ist.

Bei einigen bevorzugten Ausführungsformen ist vorgesehen, dass die Kontaktstelle an einem Träger für einen Bremsbelag zumindest angeordnet ist und insbesondere durch den Träger ausgebildet ist.

Beispielsweise bietet dies den Vorteil, dass die Kontaktstelle zumindest in der Nähe eines Bremsbelages ist und günstigerweise so die Detektierung eines Bremsbelagverschleißes präziser und/oder weniger störanfällig ist.

Bei günstigen Ausführungsformen ist der Kontaktsensor beispielsweise mit dem zumindest einen Träger und/oder mit dem zumindest einen Bremsbelag und/oder insbesondere mit einer Beaufschlagungseinheit der Bremsvorrichtung so gekoppelt, dass zumindest in einer Stellung der Bremsvorrichtung, beispielsweise in der Ausgangsstellung und/oder insbesondere in der Bremsstellung, eine signalauslösende Kontaktierung bei dem Kontaktsensor vorliegt, wenn eine Dicke eines Bremsbelages, dessen Bremsbelagverschleiß detektiert werden soll, kleiner ist als ein Schwellenwert, beispielsweise kleiner ist als der Kontaktwert der Dicke und/oder kleiner ist als die kritische Dicke.

Insbesondere ist der Kontaktsensor, beispielswiese bei einer Verwendung und/oder bei einem Nachrüstsatz, zumindest für eine Kopplung wie voranstehend und nachstehend erläutert, zumindest vorgesehen und ausgebildet.

Vorzugsweise ist die Kopplung des Kontaktsensors so, dass dieser bei einer Bewegung, insbesondere entlang des Verfahrwegs bei einem Bremsvorgang, mit dem Träger und/oder dem Bremsbelag und/oder der Beaufschlagungseinheit zumindest teilweise mitbewegt wird.

Bei einigen besonders vorteilhaften Ausführungsformen ist der Kontaktsensor an den Träger und/oder den Bremsbelag und/oder an die Beaufschlagungseinheit zumindest montierbar und insbesondere zumindest in einem montierten Zustand montiert.

Insbesondere ist der Kontaktsensor zumindest in einem montierten Zustand an dem zumindest einen Träger und/oder an dem zumindest einen Bremsbelag direkt oder indirekt angeordnet, insbesondere in einer festgelegten Relativposition fest angeordnet und/oder montiert.

Insbesondere ist der Kontaktsensor zumindest in einem montierten Zustand an die Beaufschlagungseinheit angeordnet und günstigerweise in einer fixierten Relativposition montiert.

Insbesondere ist vorgesehen, dass wenn der Kontaktsensor mit einer Beaufschlagungseinheit, beispielsweise mit deren Träger und/oder Bremsbelag, gekoppelt ist, dass dann die Kontaktstelle an einem Teil des Gehäusekörpers angeordnet und/oder ausgebildet ist, wobei dieser Teil des Gehäusekörpers eine Führung für eine andere Beaufschlagungseinheit der Bremsvorrichtung ausbildet.

Insbesondere ist vorgesehen, dass wenn der Kontaktsensor mit einer Beaufschlagungseinheit, insbesondere mit deren Träger und/oder deren Bremsbelag, gekoppelt ist, dass dann die Kontaktstelle an einem Träger einer anderen Beaufschlagungseinheit der Bremsvorrichtung angeordnet und/oder ausgebildet ist.

Insbesondere ist die Kopplung des Kontaktsensors mit dem Träger und/oder dem Bremsbelag und/oder der Beaufschlagungseinheit so, dass in zumindest einer Stellung, insbesondere zumindest in der Bremsstellung und/oder zumindest in der Ausgangsstellung, und/oder bei einer Bewegung günstigerweise beispielsweise bei einem Bremsvorgang in die Bremsstellung hinein bei dem Kontaktsensor eine signalauslösende Kontaktierung erfolgt, wenn eine Dicke eines Bremsbelages, dessen Bremsbelagverschleiß detektiert werden soll, kleiner ist als ein Schwellenwert, beispielsweise kleiner ist als der Kontaktwert und/oder kleiner ist als die kritische Dicke.

Vorzugsweise ist das Kontaktelement in einem Lagerelement des Kontaktsensors zumindest teilweise beweglich gelagert, vorzugsweise zumindest teilweise linear beweglich gelagert.

Günstigerweise ist das Kontaktelement zumindest aus einer Grundposition in zumindest eine zurückgezogene Position beweglich, insbesondere linear beweglich, in dem Lagerelement gelagert.

Besonders günstig ist es, wenn das Kontaktelement zumindest teilweise relativ zu dem zumindest einen Träger und/oder dem zumindest einen Bremsbelag und/oder den weiteren Teilen der Beaufschlagungseinheit, mit welchem/welcher der Kontaktsensor gekoppelt und/oder an welchen/welcher der Kontaktsensor angeordnet ist, beweglich gelagert ist, insbesondere aus einer Grundposition heraus zumindest teilweise beweglich gelagert ist.

Insbesondere ist dies vorteilhaft, da dadurch ermöglicht wird, dass eine Bewegung des Trägers und/oder des Bremsbelages und/oder der weiteren Teile der Beaufschlagungseinheit bei einem Bremsvorgang zumindest nicht wesentlich durch die Kontaktierung des Kontaktelementes an der Kontaktstelle beeinträchtigt wird. Insbesondere wird bei solch einer weiteren Bewegung, wenn eine Kontaktierung erfolgt, das Kontaktelement aus seiner Grundposition heraus in zumindest eine zurückgezogene Position versetzt, insbesondere relativ zu dem Teil, mit welchem der Kontaktsensor gekoppelt ist und/oder an welchem der Kontaktsensor angeordnet ist, bewegt.

Vorzugsweise ist hierfür das Kontaktelement in der Beaufschlagungsrichtung linear beweglich gelagert.

Vorteilhafterweise ist das insbesondere beweglich gelagerte Kontaktelement in die Grundposition vorgespannt, insbesondere federvorgespannt.

Weitere Angaben zu einer vorgesehenen Anordnung insbesondere eines Sensors bei der Verwendung und/oder eines Sensors des Nachrüstsatzes und/oder einer Anordnung eines Sensors, welcher beispielsweise in das Bremssystem integriert ist und/oder in dieses montiert ist, wurden bislang nicht gemacht.

Soweit voranstehend und nachfolgend vorteilhafte Anordnungen eines Sensors erläutert werden, sind diese Ausführungen insbesondere hinsichtlich der Verwendung und/oder des Nachrüstsatzes auch derart zu verstehen, dass zumindest der Sensor und/oder weitere Teile zumindest für eine derartige Anordnung ausgelegt und ausgebildet ist/sind.

Bei vorteilhaften Ausführungsformen ist vorgesehen, dass zumindest ein Sensor der Detektionsvorrichtung in einem Gehäuse des Bremssystems, insbesondere in dem Gehäuse der Bremsvorrichtung, angeordnet ist.

Beispielsweise ist hierdurch eine durch das Gehäuse geschützte Anordnung des Sensors ermöglicht.

Bei einigen vorteilhaften Ausführungsformen weist der Gehäusekörper des Gehäuses für den Sensor eine Sensorkammer auf und zumindest ein Sensor der Detektionsvorrichtung ist in der Sensorkammer des Gehäusekörpers angeordnet.

Vorzugsweise ist zumindest ein Sensor beispielsweise in der Sensorkammer in dem Gehäusekörper eingebettet.

Beispielsweise bildet die Sensorkammer für den Sensor eine Fassung aus.

Günstigerweise ist eine Form der Sensorkammer entsprechend der Form des aufzunehmenden Sensors ausgestaltet und beispielsweise sitzt der Sensor passgenau in der Sensorkammer.

Beispielsweise ist die Anordnung in einer Sensorkammer vorteilhaft, da bei der Ausbildung der Sensorkammer ein günstiger Platz für die Positionierung des Sensors ausgewählt werden kann.

Beispielsweise ist eine solche Anordnung vorteilhaft, da der Sensor günstigerweise geschützt und/oder fest in dem Gehäusekörper angeordnet ist.

Bei einigen vorteilhaften Ausführungsformen ist zumindest ein Sensor der Detektionsvorrichtung in einem freien Hohlraum eines Gehäuses des Bremssystems angeordnet, günstigerweise in einem freien Hohlraum des Gehäuses der Bremsvorrichtung angeordnet.

Beispielsweise kann hierdurch ein bereits vorhandener freier Hohlraum für die Anordnung des Sensors ausgenutzt werden. Insbesondere ist dies bei einem Sensor eines Nachrüstsatzes vorteilhaft. Bei einem ab dem Werk mit einer Detektionsvorrichtung ausgestatteten Bremssystem ist dies günstig, da beispielsweise kostengünstig der Sensor in dem Gehäuse untergebracht werden kann.

Günstigerweise umfasst das Gehäuse einen insbesondere einstückigen Gehäusekörper.

Insbesondere weist das Gehäuse, insbesondere der Gehäusekörper, einen Führungsraum für eine Beaufschlagungseinheit auf.

Günstigerweise ist die zumindest eine Beaufschlagungseinheit in dem Führungsraum zumindest abschnittsweise beweglich gelagert, vorzugsweise linear und/oder geführt beweglich gelagert.

Insbesondere weist das Gehäuse, insbesondere der Gehäusekörper, einen Eingriffsraum für das Bremsgegenstück, insbesondere für den Bremsring, auf.

Insbesondere weisen der Führungsraum und der Eingriffsraum teilweise einen gemeinsamen Raumbereich auf.

Bei einigen günstigen Ausführungsformen weist ein Verschlusselement des Gehäuses den freien Hohlraum, beispielsweise als Aussparung, auf. Günstigerweise ist zumindest ein Sensor in diesem Hohlraum angeordnet.

Beispielsweise verschließt das Verschlusselement den Führungsraum.

Bei besonders günstigen Ausführungsformen ist zumindest ein Sensor der Detektionsvorrichtung in dem Eingriffsraum des Gehäuses und/oder in dem Führungsraum des Gehäuses zumindest teilweise angeordnet.

Besonders vorteilhaft ist es dabei, wenn zumindest ein Sensor in dem gemeinsamen Raumbereich des Eingriffsraumes und des Führungsraumes zumindest teilweise angeordnet ist.

Beispielsweise umfasst das Gehäuse, insbesondere einer als Bremszange ausgebildeten Bremsvorrichtung, zwei Gehäusehälften. Insbesondere umhaust jede der zwei Gehäusehälften jeweils eine Beaufschlagungseinheit. Insbesondere ist insbesondere bezogen auf eine Beaufschlagungsachse zwischen den zwei Gehäusehälften ein zu beaufschlagender Teil des Bremsgegenstückes in dem Eingriffsraum gelegen.

Bei einigen günstigen Ausführungsformen ist zumindest ein Sensor zwischen den zwei Gehäusehälften zumindest teilweise angeordnet.

Bei vorteilhaften Ausführungsformen ist zumindest ein Sensor, vorzugsweise sind zumindest einige, beispielsweise sämtliche, Sensoren, versetzt zu zumindest einem Bremsbelag, vorzugsweise versetzt zu zumindest einigen, beispielsweise sämtlichen, Bremsbelägen, angeordnet.

Bei einer versetzten Anordnung eines Sensors ist dieser Sensor insbesondere entfernt und/oder in der Nähe des Bremsbelages angeordnet, aber nicht direkt an und nicht zumindest teilweise direkt in dem Bremsbelag angeordnet.

Vorzugsweise ist zumindest ein Bremsbelag, bevorzugt sind zumindest einige, günstigerweise sämtliche, Bremsbeläge, der Bremsvorrichtung frei von Sensoren der Detektionsvorrichtung ausgebildet.

Vorteilhafterweise wird so eine Bremswirkung der Bremsbeläge im Wesentlichen nicht beeinträchtigt.

Insbesondere ist dies bei Bremssystemen für ein leichtgewichtiges Fahrzeug und/oder ein lenkergeführtes Fahrzeugs vorteilhaft, da diese typischerweise dünne Bremsbeläge aufweisen und eine Anordnung eines Sensors an und/oder in diese dünnen Bremsbeläge höchstens schwer möglich ist.

Bei einigen günstigen Ausführungsformen ist zumindest ein Sensor der Detektionsvorrichtung in zur Beaufschlagungsachse axialer Richtung zu zumindest einem Bremsbelag versetzt angeordnet.

Bei einigen günstigen Ausführungsformen ist zumindest ein Sensor der Detektionsvorrichtung quer zu der Beaufschlagungsachse versetzt zu zumindest einem Bremsbelag versetzt angeordnet.

Bei einigen vorteilhaften Ausführungsformen ist zumindest ein Sensor der Detektionsvorrichtung außerhalb des Gehäuses der Bremsvorrichtung angeordnet.

Beispielsweise ist dies vorteilhaft, da so die Bremsvorrichtung gezielt für ihre Funktionsweise konstruiert werden kann. Beispielsweise ist eine Anordnung außerhalb des Gehäuses bei einem Nachrüstsatz besonders vorteilhaft, da so die Bremsvorrichtung in konstruktiv einfacher Weise mit dem Sensor nachgerüstet werden kann.

Bei einigen vorteilhaften Ausführungsformen ist zumindest ein Sensor der Detektionsvorrichtung an einer Halterung angeordnet.

Günstigerweise weist die Halterung zumindest eine Formschlussausbildung auf für eine formschlüssige Verbindung, insbesondere für eine formschlüssige Befestigung.

Beispielsweise ist zumindest eine Formschlussausbildung ein Formschlusselement, welches zur formschlüssigen Aufnahme in einer Formschlussaufnahme vorgesehen und ausgebildet ist.

Beispielsweise ist zumindest eine Formschlussausbildung eine Formschlussaufnahme, welche zur formschlüssigen Aufnahme eines Formschlusselementes vorgesehen und ausgebildet ist.

Beispielsweise ist zumindest eine Formschlussausbildung ein Hinterschnitt, der zum Zusammenwirken mit einem anderen Teil vorgesehen und ausgebildet ist.

Besonders vorteilhaft ist es, wenn die Halterung für eine positionsgenaue Festlegung und insbesondere positionsgenaue Befestigung, vorgesehen und ausgebildet ist.

Vorteilhafterweise ist zumindest eine Formschlussausbildung für die positionsgenaue Festlegung ausgebildet.

Vorteilhafterweise wird so der zumindest eine Sensor mit der Halterung in seiner Position festgelegt und eine präzise Detektierung ermöglicht und/oder verbessert.

Insbesondere ist die Halterung zur unmittelbaren oder mittelbaren Befestigung an dem Gehäuse der Bremsvorrichtung vorgesehen und ausgebildet.

Bei einigen vorteilhaften Ausführungsformen ist die Halterung für eine Befestigung an dem Gehäusekörper des Gehäuses der Bremsvorrichtung ausgelegt und ausgebildet. Insbesondere ist diese Halterung zumindest in einem montierten Zustand an dem Gehäusekörper befestigt.

Insbesondere, aber nicht ausschließlich, ist die Befestigung mit der Halterung an dem Gehäusekörper außerhalb des Gehäuses vorteilhaft.

Bei einigen bevorzugten Ausführungsformen ist die Halterung für eine Befestigung an einer Beaufschlagungseinheit der Bremsvorrichtung ausgelegt und ausgebildet. Insbesondere ist die Halterung zumindest in einem montierten Zustand an der Beaufschlagungseinheit befestigt.

Besonders vorteilhaft ist es, wenn die Halterung für eine Befestigung an einem Träger für einen Bremsbelag ausgelegt und ausgebildet ist. Insbesondere ist die Halterung zumindest in einem montierten Zustand an dem Träger befestigt.

Insbesondere ist die Befestigung mit der Halterung an der Beaufschlagungseinheit und insbesondere an dem Träger bei einem Kontaktsensor vorteilhaft.

Aber auch bei einem berührungsfrei wirkenden Sensor kann die Halterung an der Beaufschlagungseinheit vorteilhaft sein. Beispielsweise detektiert der Sensor dann eine Eigenschaft, insbesondere ein Magnetfeld eines Magneten, einer zweiten Beaufschlagungseinheit.

Besonders günstig ist es, wenn die Halterung eine Aufnahme, insbesondere eine Formschlussaufnahme, für einen Teil des Trägers aufweist.

Besonders günstig ist es, wenn die Halterung einen Hinterschnitt für die Befestigung mit dem Träger aufweist. Insbesondere ist der Hinterschnitt für eine positionsgenaue Festlegung der Halterung ausgelegt und ausgebildet. Beispielsweise ist der Hinterschnitt für eine formschlüssige Verbindung ausgebildet.

Bei besonders vorteilhaften Ausführungsformen ist die Halterung als Aufstecker für den Träger ausgebildet.

Beispielsweise ist dies bei einem Nachrüstsatz besonders vorteilhaft, da so in konstruktiv einfacher Weise die Bremsvorrichtung an dem Träger mit dem Sensor nachgerüstet werden kann. Auch bei einem bereits im Werk mit der Detektionsvorrichtung ausgerüsteten Bremssystem ist dies günstig, da so in konstruktiv einfacher Weise die Halterung befestigt werden kann.

Besonders vorteilhaft ist es, wenn die Detektionsvorrichtung zumindest eine Schnittstelle für eine signalübertragende Verbindung mit einem Gerät zur Übertragung von Signalen, welche insbesondere zumindest für einen Zustand eines Bremsbelages zumindest repräsentativ sind, umfasst.

Insbesondere sind die Signale für einen Bremsbelagverschleiß zumindest repräsentativ. Vorzugsweise sind die Signale für eine Dicke eines Bremsbelages zumindest repräsentativ. Günstigerweise sind die Signale dafür, ob eine Dicke zumindest eines Bremsbelages größer als ein Schwellenwert und/oder eine Dicke zumindest eines Bremsbelages kleiner ist als ein Schwellenwert, und/oder ob eine Dicke eines Bremsbelages in einem vordefinierten Dickenbereich liegt, und/oder für die Dicke zumindest eines Bremsbelages zumindest innerhalb vordefinierter Fehlertoleranzen zumindest repräsentativ.

Insbesondere ist die Sensoreinheit mit der Schnittstelle signalübertragend verbunden.

Insbesondere wird hiermit in günstiger Weise erreicht, dass zumindest die von Detektionsvorrichtung detektierten Parameter und/oder eine Auswertung derselben über die Schnittstelle an ein Gerät zur Anzeige derselben übertragen werden können.

Bei einigen vorteilhaften Ausführungsformen ist die Schnittstelle für eine drahtlose Signalübertragung ausgebildet.

Bei einigen bevorzugten Ausführungsformen ist die Schnittstelle für eine kabelgebundene Signalübertragung ausgebildet.

Bei einigen vorteilhaften Ausführungsformen ist vorgesehen, dass die Schnittstelle zur signalübertragenden Verbindung mit einem externen Gerät ausgebildet ist.

Insbesondere kann so ein externes Gerät mit einer Anzeigeeinheit zur Darstellung der übertragenen Signale verwendet werden. Beispielsweise ist das externe Gerät ein insbesondere tragbares Kommunikationsgerät, beispielsweise ein Smartphone, eines Fahrers.

Bei einigen bevorzugten Ausführungsformen umfasst die Detektionsvorrichtung eine Anzeigeeinrichtung zur Anzeige von Signalen, die insbesondere zumindest für einen Zustand eines Bremsbelages, beispielsweise eines Bremsbelagverschleißes und/oder eine Dicke zumindest eines Bremsbelages, zumindest repräsentativ sind.

Damit kann mit dem Bremssystem, welches beispielsweise ab dem Werk und/oder mit einem Nachrüstsatz mit der Detektionsvorrichtung ausgestattet ist, zumindest ein Zustand eines Bremsbelages für einen Fahrer angezeigt werden.

Insbesondere umfasst die Anzeigeeinrichtung ein Anzeigegerät zur Anzeige zumindest eines Zustandes eines Bremsbelages, insbesondere basierend auf den detektierten Parametern und/oder basierend auf den übertragenen Signalen.

Beispielsweise ist das Anzeigegerät insbesondere über die Schnittstelle mit der Sensoreinheit signalübertragend, beispielsweise drahtlos und/oder drahtgebunden, verbindbar und insbesondere zumindest in einem montierten Zustand verbunden.

Bei einigen günstigen Ausführungsformen ist zumindest eine Anzeigeeinheit der Anzeigeeinrichtung, insbesondere das Anzeigegerät, zur Anordnung an das Gehäuse der Bremsvorrichtung ausgebildet und beispielsweise an dieses angeordnet.

Bei vorteilhaften Ausführungsformen ist das Anzeigegerät der Anzeigeeinrichtung zur Anordnung an einen Lenker eines lenkergeführten Fahrzeuges ausgebildet. Insbesondere ist zumindest in einem montierten Zustand das Anzeigegerät an den Lenker angeordnet.

Bei einigen besonders günstigen Ausführungsformen ist das Anzeigegerät der Anzeigeeinrichtung zur Integration in einen Lenker ausgebildet und insbesondere in einen Lenker integriert.

Insbesondere ist dabei das Anzeigegerät zumindest teilweise, vorzugsweise zumindest im Wesentlichen in einem Inneren des Lenkers angeordnet.

Bei einigen vorteilhaften Ausführungsformen ist das Anzeigegerät der Anzeigeeinrichtung zur Befestigung an einem Lenker eines lenkergeführten Fahrzeuges ausgebildet. Insbesondere ist dieses Anzeigegerät zumindest in einem montierten Zustand an dem Lenker des lenkergeführten Fahrzeuges befestigt.

Günstigerweise umfasst hierfür die Anzeigeeinrichtung einen Befestigungsmechanismus zur Befestigung des Anzeigegerätes an dem Lenker.

Insbesondere ist die Befestigung des Anzeigegerätes an einer Außenseite des Lenkers vorgesehen.

Bei einigen günstigen Ausführungsformen ist die Anzeigeeinrichtung und/oder das Anzeigegerät auch zur Anzeige anderer Zustände, beispielsweise des Bremssystems und/oder des Fahrzeuges und/oder zur Anzeige weiterer Daten, insbesondere zur Anzeige von Fahrdaten, wie beispielsweise einer zurückgelegten, gefahrenen Strecke und/oder von gefahrenen Geschwindigkeiten, vorgesehen und ausgebildet.

Insbesondere weist hierfür die Anzeigeeinrichtung und/oder das Anzeigegerät zumindest eine Schnittstelle für eine Datenübertragung auf. Insbesondere ist hierfür zumindest in einem montierten Zustand die Anzeigeeinrichtung und/oder das Anzeigegerät mit entsprechenden Sensoren zur Erfassung der anzuzeigenden Zustände und/oder Daten signalübertragend verbunden.

Besonders vorteilhaft ist es, wenn zumindest die Detektionsvorrichtung und/oder die Anzeigeeinrichtung zumindest mit einer Energieversorgung ausrüstbar ist/sind und insbesondere zumindest eine Energieversorgung aufweist/aufweisen.

Günstigerweise ist die Energieversorgung zur Versorgung der Detektionsvorrichtung und/oder der Anzeigeeinrichtung mit elektrischer Energie ausgebildet.

Günstigerweise umfasst die Energieversorgung zumindest einen Speicher für elektrische Energie.

Bei einigen günstigen Ausführungsformen umfasst die Energieversorgung ein Gerät zur Umwandlung von, beispielsweise zugeführter oder gespeicherter, Energie in elektrische Energie.

Bei einigen vorteilhaften Ausführungsformen ist eine gemeinsame Energieversorgung für die Detektionsvorrichtung, insbesondere ihre Sensoreinheit, und die Anzeigeeinrichtung vorgesehen. Insbesondere versorgt die gemeinsame Energieversorgung sowohl die Anzeigeeinrichtung als auch die Detektionsvorrichtung mit elektrischer Energie.

Beispielsweise ist dies günstig bei Ausführungsformen mit einer kabelgebundenen Signalübertragung, wobei über eine Kabelverbindung, beispielsweise über ein gemeinsames Kabel und/oder über separate Kabel, Signale und Energie übertragen werden.

Bei einigen vorteilhaften Ausführungsformen weisen sowohl die Anzeigeeinrichtung als auch die Detektionsvorrichtung, insbesondere ihre Sensoreinheit, jeweils eine eigene Energieversorgung auf. Insbesondere werden sie somit separat voneinander mit elektrischer Energie versorgt.

Beispielsweise ist dies günstig, wenn die Signalübertagung drahtlos erfolgt und somit günstigerweise das Anzeigegerät und Teile der Detektionsvorrichtung, insbesondere die Sensoreinheit, insgesamt baulich nicht miteinander verbunden sind, außer der gemeinsamen Anordnung an demselben Fahrzeug.

Die Beaufschlagungsweise der Beaufschlagungseinheit und die Betätigung der Bremsvorrichtung können unterschiedlichst ausgebildet sein.

Bei einigen bevorzugten Ausführungsformen ist zumindest eine elektrische Beaufschlagungseinheit vorgesehen.

Insbesondere wird bei der elektrischen Beaufschlagungseinheit zumindest ein Träger für einen Bremsbelag und/oder zumindest ein Bremsbelag, die beispielsweise an einem Kolbenelement angeordnet sind, durch einen elektrischen Antrieb in den bremswirksamen Zustand versetzt.

Insbesondere bewirkt ein elektrischer Antrieb der elektrischen Beaufschlagungseinheit einen für den Bremsvorgang erforderlichen Verfahrweg der Beaufschlagungseinheit.

Insbesondere ist der elektrische Antrieb in dem Gehäuse der Bremsvorrichtung angeordnet.

Unterschiedliche elektrische Antriebe können eingesetzt werden.

Beispielsweise ist der elektrische Antrieb ein elektrischer Stellmotor.

Bei einigen vorteilhaften Ausführungsformen ist zumindest eine hydraulische Beaufschlagungseinheit vorgesehen.

Bei besonders vorteilhaften Ausführungsformen umfasst das Bremssystem ein Hydrauliksystem günstigerweise zur Bereitstellung eines druckbeaufschlagten Hydraulikmediums bei einer Betätigung des Bremssystems.

Günstigerweise ist das Bremssystem ein hydraulisches Bremssystem.

Insbesondere ist im Gehäuse der Bremsvorrichtung zumindest eine Drucckammer für ein Hydraulikmedium ausgebildet. Insbesondere wird die bremswirksame Druckbeaufschlagung durch eine Beaufschlagungseinheit durch das druckbeaufschlagte Hydraulikmedium ausgelöst. Günstigerweise ist für jede Beaufschlagungseinheit eine Druckkammer vorgesehen und ausgebildet.

Vorteilhafterweise ist eine Beaufschlagungseinheit angrenzend an der ihr zugeordneten Druckkammer angeordnet. Insbesondere begrenzt eine Beaufschlagungseinheit die ihr zugeordnete Druckkammer beispielweise mit einem Kolbenelement.

Günstigerweise ist bezogen auf eine axiale Richtung der Beaufschlagungsachse die der Beaufschlagungseinheit zugeordnete Druckkammer an einer Seite, welche der Seite mit dem Träger und/oder dem Bremsbelag entgegengesetzt ist, angeordnet.

Vorzugsweise umfasst das Bremssystem eine Betätigungseinrichtung für die Bremsvorrichtung. Insbesondere ist die Betätigungseinrichtung betätigungswirksam mit der Bremsvorrichtung gekoppelt und bei einer Betätigung der Betätigungseinrichtung wird die bremswirksame Beaufschlagung ausgelöst.

Bei einigen vorteilhaften Ausführungsformen ist eine elektrische Betätigungseinrichtung vorgesehen. Insbesondere sendet die elektrische Betätigungseinrichtung bei einer Betätigung elektrische Signale an die Bremsvorrichtung und insbesondere an die zumindest eine Beaufschlagungseinheit, wobei die gesendeten elektrischen Signale die bremswirksame Beaufschlagung auslösen.

Bei einigen bevorzugten Ausführungsformen ist eine hydraulische Betätigungseinrichtung vorgesehen. Günstigerweise umfasst die hydraulische Betätigungseinrichtung einen Geberzylinder, welcher bei einer Betätigung der Betätigungseinrichtung druckbeaufschlagtes Hydraulikmedium bereitstellt. Insbesondere ist dabei die Betätigungseinrichtung mit der Bremsvorrichtung über eine Hydraulikleitung des Hydrauliksystems verbunden und über die Hydraulikleitung wird von der Betätigungseinrichtung bereitgestelltes druckbeaufschlagtes Hydraulikmedium der Bremsvorrichtung und insbesondere der zumindest einen Beaufschlagungseinheit zugeführt.

Bei einigen günstigen Ausführungsformen ist die Betätigungseinrichtung eine fußbetätigte Betätigungseinrichtung und insbesondere zur Anordnung an einen Rahmen des insbesondere lenkergeführten und/oder leichtgewichtigen Fahrzeuges ausgebildet und vorzugsweise an den Rahmen angeordnet.

Bei besonders vorteilhaften Ausführungsformen ist die Betätigungseinrichtung eine handbetätigte Betätigungseinrichtung. Beispielsweise umfasst die Betätigungseinrichtung einen handbetätigten Hebel.

Besonders vorteilhaft ist es, wenn die Betätigungseinrichtung, insbesondere die handbetätigte Betätigungseinrichtung, zur Anordnung an einen Lenker eines lenkergeführten und insbesondere leichtgewichtigen Fahrzeuges vorgesehen und ausgebildet ist. Insbesondere ist dabei die Betätigungseinrichtung zumindest in einem montierten Zustand an dem Lenker angeordnet und beispielweise befestigt.

Bei günstigen Ausführungsformen wird die der Erfindung zugrundeliegende Aufgabe durch ein Fahrzeug gelöst, welches ein Bremssystem und/oder eine Detektionsvorrichtung und/oder eine Anzeigeeinrichtung mit zumindest einem, günstigerweise mehreren, der voranstehend erläuterten beispielsweise optionalen Merkmalen umfasst.

Vorzugsweise ist dabei das Fahrzeug ein lenkergeführtes Fahrzeug insbesondere mit einem handbetätigten Lenker. Insbesondere ist der Lenker zur Steuerung der Fahrtrichtung des Fahrzeuges ausgebildet.

Beispielsweise ist das insbesondere lenkergeführte Fahrzeug ein Motorrad.

Insbesondere weist das insbesondere lenkergeführte Fahrzeug, beispielsweise das Motorrad, einen Motor auf, welcher je nach Variante unterschiedlich stark ist. Beispielsweise hat der Motor des insbesondere lenkergeführten Fahrzeugs, günstigerweise der Motor des Motorrads, eine Leistung von mehreren 10 Kilowatt, insbesondere von mindestens 35 Kilowatt und beispielsweise bei einigen Ausführungsformen von über 100 Kilowatt.

Beispielsweise ist der Motor des insbesondere lenkergeführten Fahrzeugs, insbesondere des Motorrads, ein Verbrennungsmotor.

Vorzugsweise ist das Fahrzeug ein Leichtfahrzeug.

Beispielsweise ist bei günstigen Ausführungsformen das insbesondere leichtgewichtige und/oder lenkergeführte Fahrzeug ein zwei- oder mehrrädriges Fahrrad und/oder ein E-Bike oder ein Pedelec.

Insbesondere wirken sich die voranstehend genannten Vorteile bei einem leichtgewichtigen Fahrzeug besonders günstig aus, da bei diesem die Bremsvorrichtung, beispielweise die Bremsbeläge und/oder die Beaufschlagungseinheit und/oder das Gehäuse, auf das leichte Gewicht des Fahrzeuges und/oder dessen geringe Fahrleistung und/oder dessen geringe Höchstgeschwindigkeit und die damit erforderliche Bremswirkung ausgelegt und entsprechend ausgebildet ist/sind.

Beispielsweise ist eine Bremsvorrichtung für ein leichtgewichtiges und/oder lenkergeführtes Fahrzeug kompakter ausgebildet als eine Bremsvorrichtung für schwere Fahrzeuge, beispielweise Kraftfahrzeuge, und es ist ein geringerer Bauraum vorhanden.

Beispielsweise sind Bremsbeläge in einer Bremsvorrichtung für ein lenkergeführtes Fahrzeug und/oder ein leichtgewichtiges Fahrzeug dünner ausgebildet als bei einer Bremsvorrichtung für schwere Fahrzeuge und somit typischerweise zumindest nicht sonderlich gut für die Anordnung eines Sensors geeignet.

Insbesondere umfasst das insbesondere leichtgewichtige und/oder lenkergeführte Fahrzeug ein zumindest teilweise muskelangetriebenes Antriebssystem. Günstigerweise kann so ein Fahrer durch seine Muskelkraft das Fahrzeug antreiben.

Bei einigen vorteilhaften Ausführungsformen ist das Fahrzeug lediglich durch die Muskelkraft eines Fahrers antreibbar.

Bei einigen bevorzugten Ausführungsformen umfasst das Antriebssystem einen Motor, insbesondere einen Kleinmotor, vorzugsweise als Zusatzantrieb. Insbesondere ist dabei der Motor vorgesehen und ausgebildet, um einen Antrieb durch eine menschliche Muskelkraft des Fahrers zu ergänzen und/oder, insbesondere phasenweise, beispielsweise bei für den Fahrer anstrengenden Fahrabschnitten, zu ersetzen.

Vorzugsweise ist der Motor ein elektrischer Antriebsmotor.

Bei günstigen Ausführungsformen benötigt der Motor und insbesondere somit auch das Fahrzeug zum Antrieb keine fossilen Brennstoffe.

Insbesondere ist das leichtgewichtige und/oder lenkergeführte Fahrzeug und das Bremssystem für dieses Fahrzeug für Höchstgeschwindigkeiten von höchstens 100 Kilometer pro Stunde, beispielsweise von höchstens 80 Kilometer pro Stunde, insbesondere von höchstens 60 Kilometer pro Stunde, beispielsweise von höchstens 40 Kilometer pro Stunde, ausgelegt und ausgebildet.

Insbesondere ist das leichtgewichtige und/oder lenkergeführte Fahrzeug und das Bremssystem für dieses Fahrzeug für einen Antrieb mit einer Leistung von höchstens 40 Kilowatt, günstigerweise von höchstens 25 Kilowatt, insbesondere von höchstens 15 Kilowatt, beispielsweise von höchstens 5 Kilowatt, ausgelegt und ausgebildet. Insbesondere hat der Kleinmotor, sofern vorhanden, höchstens eine derartige Leistung.

Günstigerweise hat das leichtgewichtige und/oder lenkergeführte Fahrzeug ein Gewicht von höchstens 100 Kilogramm, insbesondere von höchstens 80 Kilogramm, vorteilhafterweise von höchstens 50 Kilogramm, beispielsweise von höchstens 30 Kilogramm. Insbesondere sind somit das Fahrzeug und das Bremssystem für das Fahrzeug für eine Belastung mit einem derartigen Höchstgewicht plus das Gewicht des Fahrers ausgelegt und ausgebildet. Voranstehend und nachfolgend sind Elemente und Merkmale, welche als beispielweise und/oder insbesondere und/oder günstigerweise und/oder vorteilhafterweise und/oder bei Varianten und/oder dergleichen vorgesehen beschrieben sind, optionale Elemente und/oder Merkmale, welche beispielsweise erfinderische vorteilhafte Weiterentwicklungen beinhalten, aber insbesondere nicht zwingend erforderlich für den Erfolg der zugrundeliegenden Erfindung sind.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Bremssystem (100), insbesondere für ein lenkergeführtes Fahrzeug (110) und/oder für ein Leichtfahrzeug (110), mit einer Bremsvorrichtung (210), welche zumindest einen Träger (342) für einen Bremsbelag (332) und/oder zumindest einen Bremsbelag (332) umfasst,
   wobei das Bremssystem (100) eine Detektionsvorrichtung (350) zum Detektieren eines Verschleißes eines Bremsbelages (332) der Bremsvorrichtung (210), insbesondere zum Detektieren eines Verschleißes eines von dem zumindest einen Träger (342) getragenen Bremsbelages (332) und/oder zum Detektieren eines Verschleißes des zumindest einen Bremsbelages (332), umfasst.
2. Verwendung einer Detektionsvorrichtung (350) zum Detektieren eines Verschleißes eines Bremsbelages (332) einer Bremsvorrichtung (210) insbesondere bei einem lenkergeführten Fahrzeug (110) und/oder einem Leichtfahrzeug (110).
3. Nachrüstsatz für eine Bremsvorrichtung (210), insbesondere für eine Bremsvorrichtung (210) eines lenkergeführten Fahrzeuges (110) und/oder eines Leichtfahrzeuges (110), umfassend eine Detektionsvorrichtung (350) zum Detektieren eines Verschleißes zumindest eines Bremsbelages (332) der Bremsvorrichtung (210).
4. Bremssystem (100) nach Ausführungsform 1 und/oder Verwendung nach Ausführungsform 2 und/oder Nachrüstsatz nach Ausführungsform 3, wobei die Detektionsvorrichtung (350) zumindest eine Position einer Beaufschlagungseinheit (212) der Bremsvorrichtung (210) und/oder zumindest eine räumliche Verschiebung einer Beaufschlagungseinheit (212) der Bremsvorrichtung (210) detektiert, wobei insbesondere die detektierte Position und/oder die detektierte räumliche Verschiebung zumindest indikativ für den Bremsbelagverschleiß ist.
5. Bremssystem (100) und/oder Verwendung und/oder Nachrüstsatz nach einer der voranstehenden Ausführungsformen, wobei die Detektionsvorrichtung (350) eine Sensoreinheit (354) mit zumindest einem berührungsfrei detektierenden Sensor (356) umfasst und/oder zumindest einen elektromagnetisch wirkenden Sensor (356) umfasst.
6. Bremssystem (100) und/oder Verwendung und/oder Nachrüstsatz nach einer der voranstehenden Ausführungsformen, wobei die Detektionsvorrichtung (350) eine Sensoreinheit (354) mit zumindest einem als Magnetfeldsensor ausgebildeten Sensor (356) zur Detektion eines Magnetfeldes (364) umfasst, wobei insbesondere das zu detektierende Magnetfeld (364) zumindest indikativ für einen Verschleiß eines Bremsbelages (332) ist.
7. Bremssystem (100) und/oder Verwendung und/oder Nachrüstsatz nach einer der voranstehenden Ausführungsformen, wobei zumindest ein Sensor (356) der Sensoreinheit (354) ein Hall-Sensor ist.
8. Bremssystem (100) und/oder Verwendung und/oder Nachrüstsatz nach einer der voranstehenden Ausführungsformen, wobei die Bremsvorrichtung (210) zumindest einen Magneten (362, 346) umfasst, wobei insbesondere das Magnetfeld (364) des zumindest einen Magneten (362, 346) zumindest indikativ für einen Verschleiß zumindest eines von dem zumindest einen Träger (342) getragenen Bremsbelages (332) und/oder zumindest indikativ für einen Verschleiß des zumindest einen Bremsbelages (332) ist, wobei insbesondere der zumindest eine Magnet (362, 346) zumindest mit dem zumindest einen Träger (342) für einen Bremsbelag (332) und/oder mit dem zumindest einen Bremsbelag (332) gekoppelt ist und die Kopplung so ausgebildet ist, dass das Magnetfeld (364) des zumindest einen Magneten (362, 346) zumindest indikativ für den Bremsbelagverschleiß ist.
9. Bremssystem (100) und/oder Verwendung und/oder Nachrüstsatz nach einer der voranstehenden Ausführungsformen, wobei die Position zumindest eines Magneten (362, 346) und/oder eine räumliche Verschiebung zumindest eines Magneten (362, 346) bei einem Bremsvorgang zumindest indikativ für den Bremsbelagverschleiß ist.
10. Bremssystem (100) und/oder Verwendung und/oder Nachrüstsatz nach einer der voranstehenden Ausführungsformen, wobei durch die Kopplung eine Relativposition des zumindest einen Magneten (362, 346) zu dem zumindest einen Träger (342) und/oder zu dem zumindest einen Bremsbelag (332) festgelegt ist.
11. Bremssystem (100) und/oder Verwendung und/oder Nachrüstsatz nach einer der voranstehenden Ausführungsformen, wobei zumindest ein Magnet (362, 346) in der Beaufschlagungseinheit (212) mit dem zumindest einen Träger (342) und/oder dem zumindest einen Bremsbelag (332) angeordnet ist.
12. Bremssystem (100) und/oder Verwendung und/oder Nachrüstsatz nach einer der voranstehenden Ausführungsformen, wobei zumindest ein Magnet (362, 346) in der Beaufschlagungseinheit (212) an der Seite, an welcher der zumindest eine Träger (342) und/oder der zumindest eine Bremsbelag (332) angeordnet ist, angeordnet ist.
13. Bremssystem (100) und/oder Verwendung und/oder Nachrüstsatz, wobei zumindest ein Magnet (362, 346), dessen Magnetfeld (364) von der Detektionsvorrichtung (350) detektiert werden soll, vorgesehen und insbesondere ausgebildet und/oder angeordnet ist, den Bremsbelag (332), dessen Bremsbelagverschleiß detektiert werden soll, zu halten.
14. Bremssystem (100) und/oder Verwendung und/oder Nachrüstsatz nach einer der voranstehenden Ausführungsformen, wobei die Bremsvorrichtung (210) zumindest zwei Magnete (362, 346) umfasst, wobei insbesondere das Magnetfeld (364) der zumindest zwei Magnete (362, 346) zumindest indikativ für den Bremsbelagverschleiß zumindest eines Bremsbelages (332) ist und/oder das Magnetfeld (364) der zumindest zwei Magnete (362, 346) von der Detektionsvorrichtung (350) für die Bremsbelagsverschleißerkennung detektiert wird.
15. Bremssystem (100) und/oder Verwendung und/oder Nachrüstsatz nach einer der voranstehenden Ausführungsformen, wobei die Bremsvorrichtung (210) zwei Beaufschlagungseinheiten (212) mit je zumindest einem Magneten (362, 346) umfasst.
16. Bremssystem (100) und/oder Verwendung und/oder Nachrüstsatz nach einer der voranstehenden Ausführungsformen, wobei zumindest zwei Magnete (362, 346) mit einem gleichen magnetischen Pol (366, 368) einander zugewandt sind.
17. Bremssystem (100) und/oder Verwendung und/oder Nachrüstsatz nach einer der voranstehenden Ausführungsformen, wobei eine Magnetachse (372) zumindest eines Magneten (362, 346), insbesondere eine jeweilige Magnetachse (372) von zumindest zwei Magneten (362, 346), zumindest näherungsweise parallel zu einer Beaufschlagungsachse (264) der Bremsvorrichtung (210) ausgerichtet ist/sind.
18. Bremssystem (100) und/oder Verwendung und/oder Nachrüstsatz nach einer der voranstehenden Ausführungsformen, wobei zumindest ein Sensor (356) der Detektionsvorrichtung (350) ein Kontaktsensor ist.
19. Bremssystem (100) und/oder Verwendung und/oder Nachrüstsatz nach einer der voranstehenden Ausführungsformen, wobei der Kontaktsensor (356c) so ausgelegt ist, dass bei einer signalauslösenden Kontaktierung ein Stromkreis geschlossen wird.
20. Bremssystem (100) und/oder Verwendung und/oder Nachrüstsatz nach einer der voranstehenden Ausführungsformen, wobei ein Pol des zu schließenden Stromkreises mit dem Kontaktelement (452) elektrisch leitend verbunden ist und der andere Pol des zu schließenden Stromkreises zumindest mit einer Kontaktstelle (454) elektrisch leitend verbindbar ist, insbesondere ist der andere Pol zumindest in einem montierten Zustand mit der Kontaktstelle elektrisch leitend verbunden.
21. Bremssystem (100) und/oder Verwendung und/oder Nachrüstsatz, wobei die Kontaktstelle (454) zumindest von einem Gehäusekörper (254) eines Gehäuses (252) der Bremsvorrichtung (210) elektrisch getrennt ist.
22. Bremssystem (100) und/oder Verwendung und/oder Nachrüstsatz nach einer der voranstehenden Ausführungsformen außer der unmittelbar voranstehenden Ausführungsform, wobei der andere Pol des zu schließenden Stromkreises mit einem Gehäusekörper (254) eines Gehäuses (252) der Bremsvorrichtung (210) zu verbinden ist.
23. Bremssystem (100) und/oder Verwendung und/oder Nachrüstsatz nach einer der voranstehenden Ausführungsformen, wobei die Kontaktstelle (454) an einem Gehäusekörper (254) eines Gehäuses der Bremsvorrichtung (210) angeordnet ist.
24. Bremssystem (100) und/oder Verwendung und/oder Nachrüstsatz nach einer der voranstehenden Ausführungsformen, wobei die Kontaktstelle (454) an einem Träger (342) für einen Bremsbelag (332) angeordnet und insbesondere ausgebildet ist.
25. Bremssystem (100) und/oder Verwendung und/oder Nachrüstsatz nach einer der voranstehenden Ausführungsformen, wobei der Kontaktsensor (350c) mit dem zumindest einen Träger (342) und/oder mit dem zumindest einen Bremsbelag (332) und/oder mit einer Beaufschlagungseinheit (212) der Bremsvorrichtung (210) so koppelbar ist und insbesondere gekoppelt ist, dass zumindest in einer Stellung der Bremsvorrichtung (210) eine signalauslösende Kontaktierung bei dem Kontaktsensor vorliegt, wenn eine Dicke eines Bremsbelages (332), dessen Bremsbelagverschleiß detektiert werden soll, kleiner ist als ein Schwellenwert.
26. Bremssystem (100) und/oder Verwendung und/oder Nachrüstsatz nach einer der voranstehenden Ausführungsformen, wobei das Kontaktelement (452) aus einer Grundposition heraus zumindest teilweise relativ zu dem zumindest einen Träger (342) und/oder dem zumindest einen Bremsbelag (332) beweglich gelagert ist.
27. Bremssystem (100) und/oder Verwendung und/oder Nachrüstsatz nach einer der voranstehenden Ausführungsformen, wobei das beweglich gelagerte Kontaktelement (452) in die Grundposition vorgespannt, insbesondere federvorgespannt, ist.
28. Bremssystem (100) und/oder Verwendung und/oder Nachrüstsatz nach einer der voranstehenden Ausführungsformen, wobei zumindest ein Sensor (356) der Detektionsvorrichtung (350) in einem Gehäuse des Bremssystems (100) angeordnet ist.
29. Bremssystem (100) und/oder Verwendung und/oder Nachrüstsatz nach einer der voranstehenden Ausführungsformen, wobei zumindest ein Sensor (356) der Detektionsvorrichtung (350) in einer Sensorkammer (424) des Gehäusekörpers (254) des Gehäuses (252) der Bremsvorrichtung (210) angeordnet ist.
30. Bremssystem (100) und/oder Verwendung und/oder Nachrüstsatz nach einer der voranstehenden Ausführungsformen, wobei zumindest ein Sensor (356) der Detektionsvorrichtung (350) in einem freien Hohlraum (412) eines Gehäuses (252) des Bremssystems (100), insbesondere der Bremsvorrichtung (210), angeordnet ist.
31. Bremssystem (100) und/oder Verwendung und/oder Nachrüstsatz nach einer der voranstehenden Ausführungsformen, wobei zumindest ein Sensor (356) der Detektionsvorrichtung (350) an einem Verschlusselement (292) des Gehäuses (252), insbesondere in einer Aussparung (416) des Verschlusselementes (292), angeordnet ist.
32. Bremssystem (100) und/oder Verwendung und/oder Nachrüstsatz nach einer der voranstehenden Ausführungsformen, wobei zumindest ein Sensor (356) der Detektionsvorrichtung (350) in einem Eingriffsraum (266) des Gehäuses für ein Bremsgegenstück (232) und/oder in einem Führungsraum (272) des Gehäuses (252) zumindest teilweise angeordnet ist.
33. Bremssystem (100) und/oder Verwendung und/oder Nachrüstsatz nach einer der voranstehenden Ausführungsformen, wobei zumindest ein Sensor (356), insbesondere sämtliche Sensoren (356), der Detektionsvorrichtung (350) versetzt zu zumindest einem Bremsbelag (332), insbesondere versetzt zu sämtlichen Bremsbelägen (332), angeordnet ist/sind.
34. Bremssystem (100) und/oder Verwendung und/oder Nachrüstsatz nach einer der voranstehenden Ausführungsformen, wobei zumindest ein Bremsbelag (332), insbesondere sämtliche Bremsbeläge (332), frei von Sensoren (356) der Detektionsvorrichtung (350) ausgebildet sind.
35. Bremssystem (100) und/oder Verwendung und/oder Nachrüstsatz nach einer der voranstehenden Ausführungsformen, wobei zumindest ein Sensor (356) der Detektionsvorrichtung (350) bezogen auf eine axiale Richtung einer Beaufschlagungsachse (264) versetzt zu zumindest einem Bremsbelag (332) angeordnet ist.
36. Bremssystem (100) und/oder Verwendung und/oder Nachrüstsatz nach einer der voranstehenden Ausführungsformen, wobei zumindest ein Sensor (356) der Detektionsvorrichtung (350) quer zu einer Beaufschlagungsachse (264) versetzt zu zumindest einem Bremsbelag (332) angeordnet ist.
37. Bremssystem (100) und/oder Verwendung und/oder Nachrüstsatz nach einer der voranstehenden Ausführungsformen, wobei zumindest ein Sensor (356) der Detektionsvorrichtung (350) außerhalb des Gehäuses (252) der Bremsvorrichtung (210) angeordnet ist.
38. Bremssystem (100) und/oder Verwendung und/oder Nachrüstsatz nach einer der voranstehenden Ausführungsformen, wobei zumindest ein Sensor (356) der Detektionsvorrichtung (350) an einer Halterung (432) angeordnet ist.
39. Bremssystem (100) und/oder Verwendung und/oder Nachrüstsatz nach einer der voranstehenden Ausführungsformen, wobei die Halterung (432) zumindest eine Formschlussausbildung (436, 438), insbesondere zumindest ein Formschlusselement (436) und/oder eine Formschlussaufnahme (438), aufweist für eine formschlüssige Verbindung.
40. Bremssystem (100) und/oder Verwendung und/oder Nachrüstsatz nach einer der voranstehenden Ausführungsformen, wobei die Halterung (432) insbesondere mit zumindest einer Formschlussausbildung (436, 438) für eine positionsgenaue Festlegung ausgebildet ist.
41. Bremssystem (100) und/oder Verwendung und/oder Nachrüstsatz nach einer der voranstehenden Ausführungsformen, wobei die Halterung (432) für eine Befestigung an dem Gehäusekörper (254) des Gehäuses (252) der Bremsvorrichtung (210) ausgelegt und ausgebildet ist.
42. Bremssystem (100) und/oder Verwendung und/oder Nachrüstsatz nach einer der voranstehenden Ausführungsformen, wobei die Halterung (432) für eine Befestigung an einer Beaufschlagungseinheit (212) der Bremsvorrichtung (210) ausgelegt und ausgebildet ist.
43. Bremssystem (100) und/oder Verwendung und/oder Nachrüstsatz nach einer der voranstehenden Ausführungsformen, wobei die Halterung (432) für eine Befestigung an einem Träger (342) für einen Bremsbelag ausgelegt und ausgebildet ist.
44. Bremssystem (100) und/oder Verwendung und/oder Nachrüstsatz nach einer der voranstehenden Ausführungsformen, wobei die Halterung (432) eine Aufnahme, insbesondere eine Formschlussaufnahme (438), für einen Teil des Trägers (342) aufweist.
45. Bremssystem (100) und/oder Verwendung und/oder Nachrüstsatz nach einer der voranstehenden Ausführungsformen, wobei die Halterung (432) einen Hinterschnitt (476) für die Befestigung mit dem Träger (342), insbesondere zur positionsgenauen Festlegung der Halterung (432), aufweist.
46. Bremssystem (100) und/oder Verwendung und/oder Nachrüstsatz nach einer der voranstehenden Ausführungsformen, wobei die Halterung (432) als Aufstecker für den Träger (342) ausgebildet ist.
47. Bremssystem (100) und/oder Verwendung und/oder Nachrüstsatz nach einer der voranstehenden Ausführungsformen, wobei die Detektionsvorrichtung (350) zumindest eine Schnittstelle für eine signalübertragende Verbindung mit einem Gerät zur Übertragung von Signalen, die zumindest für einen Zustand eines Bremsbelages (332) zumindest repräsentativ sind, umfasst.
48. Bremssystem (100) und/oder Verwendung und/oder Nachrüstsatz nach einer der voranstehenden Ausführungsformen, wobei die Detektionsvorrichtung (350) eine Anzeigeeinrichtung (510) zur Anzeige von Signalen, die zumindest für einen Zustand eines Bremsbelages (332) zumindest repräsentativ sind, umfasst.
49. Bremssystem (100) und/oder Verwendung und/oder Nachrüstsatz nach einer der voranstehenden Ausführungsformen, wobei zumindest eine Anzeigeeinheit der Anzeigeeinrichtung (510), insbesondere ein Anzeigegerät (514), zur Anordnung an ein Gehäuse (252) der Bremsvorrichtung (210) ausgebildet ist und / oder insbesondere dass die zumindest eine Anzeigeeinheit, insbesondere das Anzeigegerät (514), an das Gehäuse (252) der Bremsvorrichtung (210) angeordnet ist.
50. Bremssystem (100) und/oder Verwendung und/oder Nachrüstsatz nach einer der voranstehenden Ausführungsformen, wobei ein Anzeigegerät (514) der Anzeigeeinrichtung (510) zur Anordnung an einen Lenker (136) eines lenkergeführten Fahrzeuges (110) ausgebildet ist.
51. Bremssystem (100) und/oder Verwendung und/oder Nachrüstsatz nach einer der voranstehenden Ausführungsformen, wobei ein Anzeigegerät (514) der Anzeigeeinrichtung (510) zur Integration in einen Lenker (136) eines lenkergeführten Fahrzeuges (110) ausgebildet ist und insbesondere in einen Lenker (136) integriert ist.
52. Bremssystem (100) und/oder Verwendung und/oder Nachrüstsatz nach einer der voranstehenden Ausführungsformen, wobei ein Anzeigegerät (514) der Anzeigeeinrichtung (510) zur Befestigung an einem Lenker (136) eines lenkergeführten Fahrzeugs (110) ausgebildet ist und insbesondere an einem Lenker (136) befestigt ist.
53. Bremssystem (100) und/oder Verwendung und/oder Nachrüstsatz, wobei die Detektionsvorrichtung (350) und/oder die Anzeigeeinrichtung (510) zumindest mit einer Energieversorgung ausrüstbar ist/sind und insbesondere eine Energieversorgung aufweist/aufweisen.
54. Bremssystem (100) und/oder Verwendung und/oder Nachrüstsatz, wobei das Bremssystem (100) ein Hydrauliksystem (226) umfasst und ein hydraulisches Bremssystem (100) ist.
55. Bremssystem (100) und/oder Verwendung und/oder Nachrüstsatz, wobei das Bremssystem (100) eine Betätigungseinrichtung (220) für die Bremsvorrichtung (210) umfasst, wobei insbesondere die Betätigungseinrichtung (220) zur Anordnung an einen Lenker (136) eines lenkergeführten Fahrzeuges (110) vorgesehen und ausgebildet ist. 56. Fahrzeug (110), insbesondere lenkergeführtes Fahrzeug (110) und/oder Leichtfahrzeug (110), umfassend ein Bremssystem (100) nach einer der voranstehenden Ausführungsformen.

Bevorzugte Ausbildungen und Merkmale der Erfindung und beispielsweise Vorteile derselben sind Gegenstand der nachfolgenden Detailbeschreibung und der zeichnerischen Darstellung einiger Ausführungsbeispiele in unterschiedlichen Varianten.

In der Zeichnung zeigen:
- Fig. 1: ein Ausführungsbeispiel eines lenkergeführten Leichtgewichtfahrzeuges;
- Fig. 2: ein weiteres Ausführungsbeispiel eines lenkergeführten Leichtgewichtfahrzeuges;
- Fig. 3: eine perspektivische Darstellung einer Bremsvorrichtung eines Bremssystems eines ersten Ausführungsbeispiels;
- Fig. 4: eine Schnittdarstellung der Bremsvorrichtung gemäß dem in Fig. 3 eingezeichneten Schnitt IV-IV;
- Fig. 5: schematische Darstellungen unterschiedlicher Stellungen einer Beaufschlagungseinheit der Bremsvorrichtung;
- Fig. 6: eine schematische Darstellung einer Variante einer Anordnung zweier Magnete in der Bremsvorrichtung;
- Fig. 7: eine schematische Darstellung einer Variante einer Anordnung zweier Magnete in der Bremsvorrichtung;
- Fig. 8: eine perspektivische Darstellung einer Bremsvorrichtung eines weiteren Ausführungsbeispiels;
- Fig. 9: eine Schnittdarstellung der Bremsvorrichtung gemäß dem in der Fig. 8 eingezeichneten Schnitt IX-IX;
- Fig. 10: eine Schnittdarstellung der Bremsvorrichtung gemäß dem in der Fig. 8 eingezeichneten Schnitt X-X;
- Fig. 11: eine perspektivische Darstellung einer Bremsvorrichtung eines weiteren Ausführungsbeispiels;
- Fig. 12: eine ausschnittsweise vergrößerte Darstellung der Bremsvorrichtung gemäß Fig. 11;
- Fig. 13: eine Schnittdarstellung gemäß dem in Fig. 12 eingezeichneten Schnitt XIII-XIII;
- Fig. 14: eine perspektivische Darstellung einer Bremsvorrichtung gemäß einem weiteren Ausführungsbeispiel;
- Fig. 15: eine ausschnittsweise vergrößerte Darstellung in einer Aufsicht der Bremsvorrichtung gemäß Fig. 14;
- Fig. 16: eine Schnittdarstellung der Bremsvorrichtung gemäß dem in der Fig. 14 eingezeichneten Schnitt XVI-XVI, wobei ein Kontaktsensor in einer nicht kontaktierenden Stellung ist;
- Fig. 17: eine Schnittdarstellung der Bremsvorrichtung gemäß dem in der Fig. 14 eingezeichneten Schnitt XVII-XVII, wobei ein Kontaktsensor in einer Kontaktstellung ist;
- Fig. 18: eine perspektivische Darstellung eines an einem Träger angeordneten Sensors;
- Fig. 19: eine Darstellung gemäß der in Fig. 18 eingezeichneten Blick-richtung XIX.

Ausführungsbeispiele eines im Ganzen mit 100 bezeichneten Bremssystems sind insbesondere für ein Fahrzeug 110 ausgebildet und beispielsweise an dieses angeordnet. Insbesondere ist das Fahrzeug 110 ein Leichtgewichtfahrzeug und/oder ein lenkergeführtes Fahrzeug, beispielsweise ein Fahrrad.

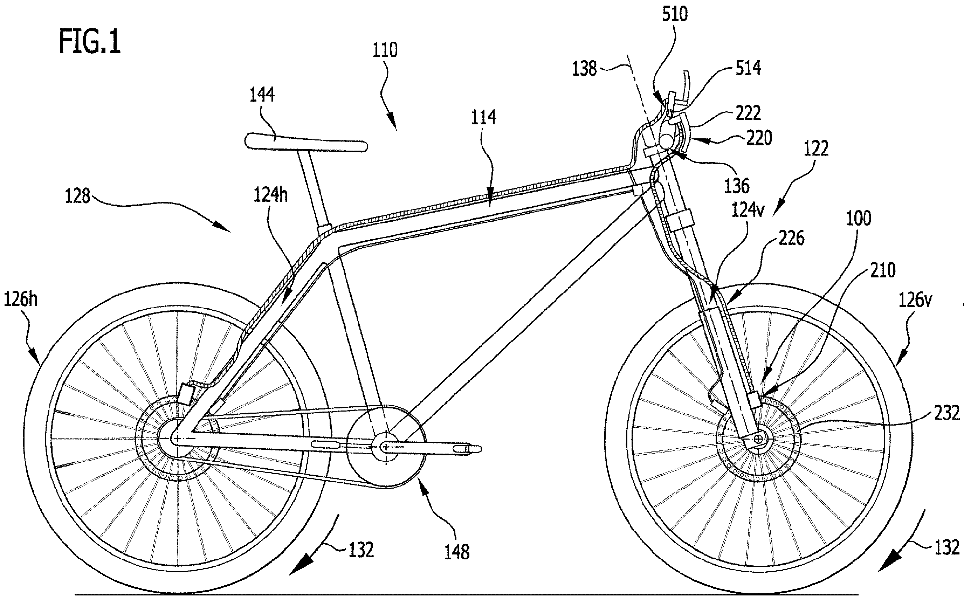

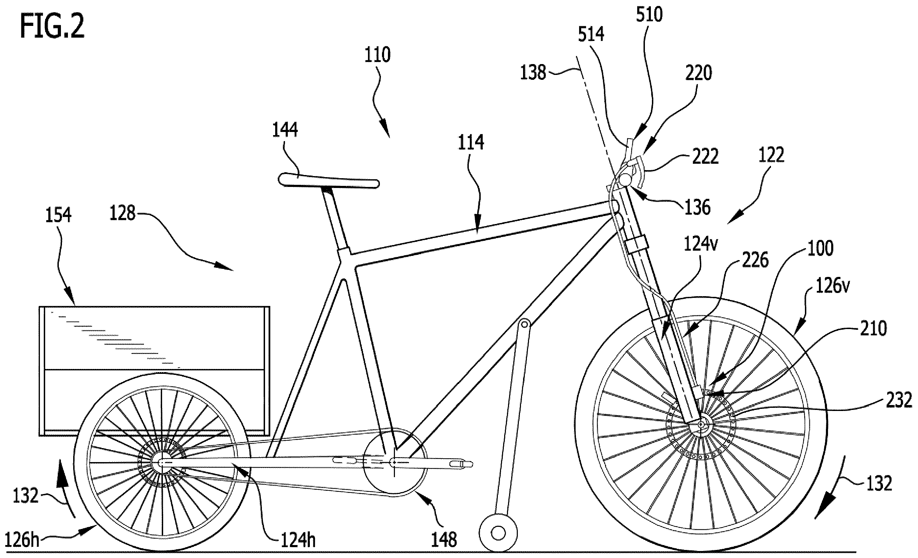

Beispielhaft sind jeweils ein Ausführungsbeispiel eines insbesondere lenkergeführten und/oder leichtgewichtigen Fahrzeugs 110 in den Fign. 1 und 2 dargestellt.

Insbesondere umfasst das Fahrzeug 110 einen Rahmen 114, welcher insbesondere aus mehreren Streben ausgebildet ist. An einer Vorderseite 122 umfasst das Fahrzeug 110, insbesondere dessen Rahmen 114, eine vordere Radaufhängung 124v mit zumindest einem Vorderrad 126v. An einer hinteren Seite 128 weist das Fahrzeug 110, insbesondere dessen Rahmen 114, eine hintere Radaufhängung 124h mit zumindest einem Hinterrad 126h auf. Dabei sind die Vorderseite 122 und die hintere Seite 128 auf eine übliche Fahrtrichtung des Fahrzeugs 110 bezogen, sodass die Vorderseite 122 bei einer üblichen Vorwärtsfahrt des Fahrzeugs 110 vorne und die hintere Seite 128 hinten bei dem Fahrzeug 110 sind.

Das jeweilige zumindest eine Rad 126 ist an der jeweiligen Radaufhängung 124 um eine jeweilige Drehachse drehbar gelagert. Insbesondere verlaufen die Drehachsen zumindest bei einer Geradeausfahrt des Fahrzeugs 110 zumindest näherungsweise senkrecht zu einer Fahrtrichtung des Fahrzeugs 110. Bei einer Vorwärtsfahrt des Fahrzeugs 110 in eine Vorwärtsrichtung drehen sich die Räder 126v, h in einer jeweiligen Laufrichtung 132 um ihre jeweilige Drehachse.

Insbesondere weist das Fahrzeug 110 einen Lenker 136 auf, welcher insbesondere um eine Lenkerdrehachse 138 drehbar am Rahmen 114 befestigt ist.

Mit dem Lenker 136 lässt sich zumindest ein Rad 124 lenken und somit bei einer Fahrt mit dem Fahrzeug 110 dessen Fahrtrichtung beeinflussen.

Günstigerweise ist der Lenker 136 mit der vorderen Radaufhängung 124 verbunden und eine Drehbewegung des Lenkers 136 um die Lenkerdrehachse 138 wird insbesondere über die vordere Radaufhängung 124v auf das zumindest eine Vorderrad 126v zum Lenken des Fahrzeugs 110 übertragen. Insbesondere ist die Lenkerdrehachse 138 quer, beispielsweise zumindest näherungsweise senkrecht, zu der Drehachse des Vorderrades 126v ausgerichtet.

Bei einigen Ausführungsbeispielen ist das Fahrzeug 110 ein Zweirad mit genau einem Vorderrad 126v und genau einem Hinterrad 126h, wie beispielhaft in Fig. 1 dargestellt ist.

Bei einigen Ausführungsbeispielen sind an einer Radaufhängung 124 beispielsweise zwei Räder 126 an die Drehachse drehbar gelagert angeordnet, wie beispielsweise bei dem beispielhaft in Fig. 2 dargestellten Ausführungsbeispiel, wobei in der Fig. 2 nur eines der zwei Hinterräder 126h sichtbar dargestellt ist.

Insbesondere umfassen die Räder 126 jeweils eine Nabe und eine Felge, welche günstigerweise durch eine Vielzahl von Speichen miteinander verbunden sind. Insbesondere ist auf die Felge ein Reifen aufgezogen.

Vorzugsweise sind die Räder 126 entsprechend dem Leichtgewichtfahrzeug in Leichtbauweise ausgebildet. So ist beispielsweise eine kleine Nabe vorgesehen, welche im Wesentlichen lediglich ein Gehäuse für ein Lager einer Radachse für die Drehung um die Drehachse ausbildet. Insbesondere sind die Speichen für das Leichtbaurad zwar ausreichend stabile aber dünne Speichen und beispielsweise drahtartig ausgebildete Speichen. Beispielsweise weisen diese Speichen senkrecht zu ihrer Längserstreckung von der Nabe zu der Felge im Wesentlichen einen Durchmesser zwischen 1 mm und 10 mm, beispielsweise zwischen 1 mm und 5 mm, auf.

Vorzugsweise weist das Fahrzeug 110 außerdem einen günstigerweise am Rahmen 114 angeordneten Sattel 144 für einen Fahrer auf.

Außerdem ist noch ein im Ganzen mit 148 bezeichnetes Antriebssystem für das Fahrzeug 110 vorgesehen.

Insbesondere ist das Antriebssystem 148 ein zumindest teilweise muskelangetriebenes Antriebssystem, welches eine muskelangetriebene Antriebseinrichtung umfasst. Beispielsweise umfasst das Antriebssystem 148 Pedale, welche drehbar gelagert an dem Rahmen 112 angeordnet sind und mit zumindest einem Rad 126 kraftübertragend gekoppelt sind. So wird eine Drehbewegung der Pedale auf das zumindest eine Rad 126 übertragen und ein Fahrer kann durch seine Muskelkraft das Fahrzeug 110 in Bewegung setzen und beschleunigen.

Bei Varianten des Fahrzeugs 110 umfasst das Antriebssystem 148 ergänzend oder beispielsweise alternativ einen Kleinmotor mit kleiner Leistung, insbesondere einen Elektromotor, zum Antrieb des Fahrzeugs 110. Insbesondere ist der Kleinmotor ein Hilfsmotor. Beispielsweise beträgt die kleine Leistung des Motors höchstens einige Kilowatt, insbesondere weniger als 10 kW.

Bei einigen Varianten ist das insbesondere lenkergeführte Fahrzeug 110 ein Motorrad beispielweise mit einem Verbrennungsmotor.

Bei einigen Varianten des Fahrzeugs 110, beispielsweise bei Lastenrädern, ist ferner eine Lastentransportvorrichtung 154 vorgesehen, wie beispielhaft in Fig. 2 dargestellt ist.

Insbesondere ist die Lastentransportvorrichtung 154 an dem Rahmen 114 angeordnet und/oder sie wird von dem Rahmen 114 mit ausgebildet. Insbesondere definiert die Lastentransportvorrichtung 154 einen Lastenaufnahmeraum, in welchem Lasten mit dem Fahrzeug 110 transportiert werden können. Bei einigen Varianten ist die Lastentransportvorrichtung 154 an der hinteren Seite 128 ausgebildet und bei einigen Varianten ist die Lastentransportvorrichtung an der Vorderseite 122 ausgebildet.

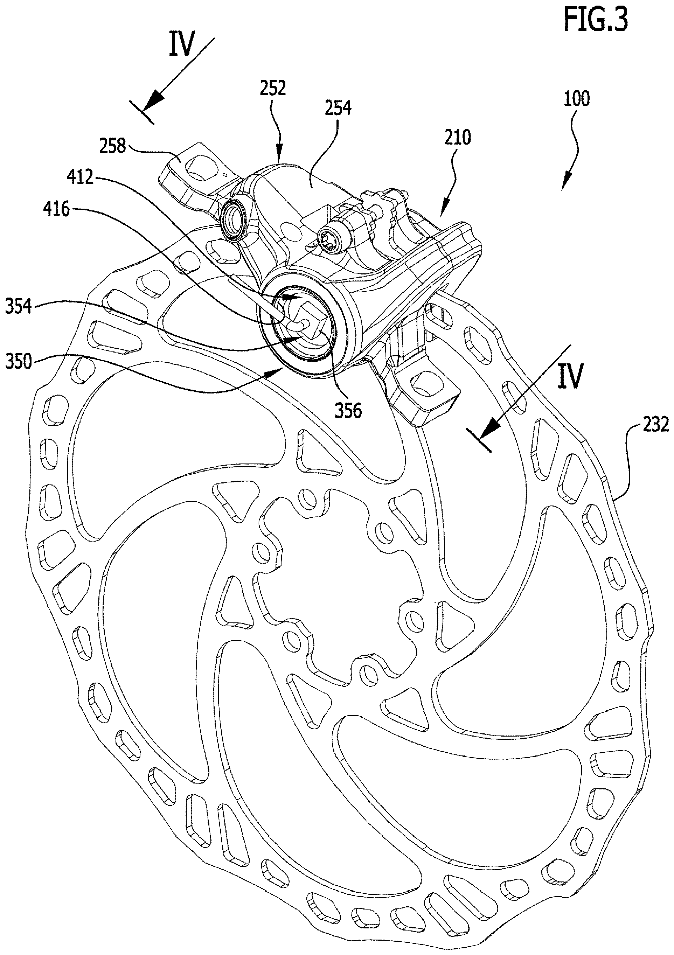

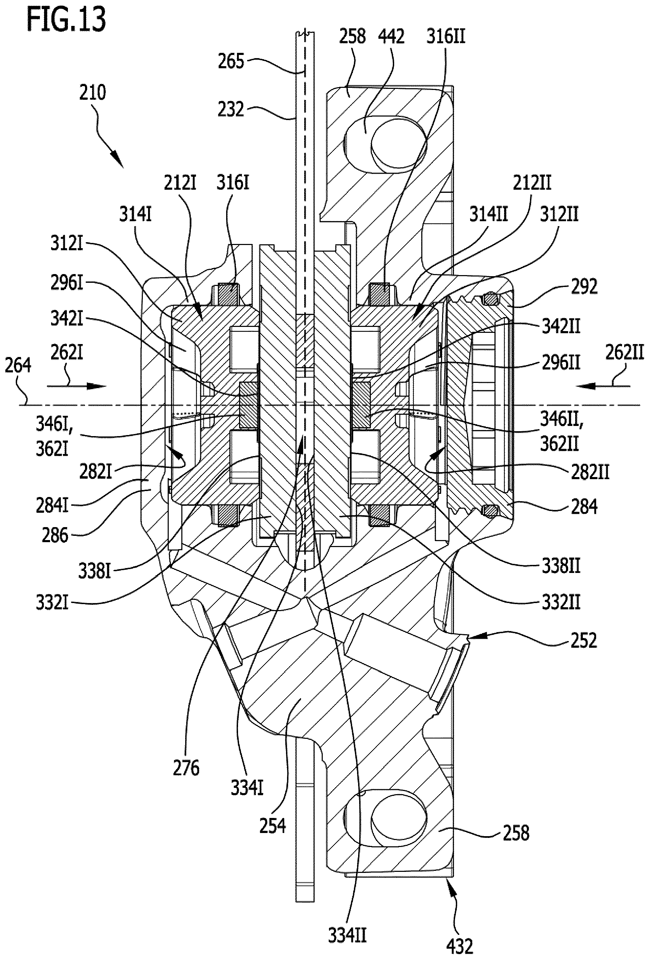

Das Bremssystem 100 umfasst eine Bremsvorrichtung 210 mit zumindest einer Beaufschlagungseinheit 212, wie beispielhaft für verschiedene Ausführungsbeispiele in den Fig. 3 bis 19 dargestellt ist, und eine Betätigungseinrichtung 220, wobei mit der Betätigungseinrichtung 220 die Bremsvorrichtung 210 betätigbar ist.

Insbesondere ist bei einigen Varianten die Betätigungseinrichtung 220 zumindest teilweise an den Lenker 136 angeordnet. Beispielsweise umfasst die Betätigungseinrichtung 220 einen am Lenker 136 angeordneten Bremshebel 222, welcher betätigungswirksam mit der Bremsvorrichtung 210 verbunden ist.

Bei einigen Varianten ist die Betätigungseinrichtung 220 eine fußbetätigte Betätigungseinrichtung und insbesondere im Bereich einer Fußraste mittelbar oder unmittelbar am Rahmen 112 angeordnet.

Beispielsweise ist bei einigen Varianten die Betätigungseinrichtung 220 eine hydraulische Betätigungseinrichtung, bei welcher bei einer Betätigung, insbesondere des Bremshebels 222, ein Druck auf ein Hydraulikmedium in einem Hydrauliksystem 226 ausgeübt wird und der Druck über eine die Betätigungseinrichtung 220 und die Bremsvorrichtung 210 verbindende Hydraulikleitung zur Betätigung der Bremsvorrichtung 210 weitergeleitet wird. Insbesondere wird durch das druckbeaufschlagte Hydraulikmedium die zumindest eine Beaufschlagungseinheit 212 beaufschlagt und diese wirkt durch die Beaufschlagung bremswirksam.

Bei einigen Varianten ist die Betätigungseinrichtung 220 eine elektrische Betätigungseinrichtung. Bei einer Betätigung derselben, beispielsweise bei einer Betätigung des Bremshebels 222, sendet die Betätigungseinrichtung 220 über eine die Betätigungseinrichtung 220 und die Bremsvorrichtung 210 verbindende Leitung elektrische Signale an die Bremsvorrichtung 210, um diese zu betätigen. Insbesondere lösen die elektrischen Signale die bremswirksame Beaufschlagung durch die zumindest eine Beaufschlagungseinheit 212 aus.

Insbesondere beaufschlagt die zumindest eine Beaufschlagungseinheit 212 ein Bremsgegenstück, wobei durch die Beaufschlagung eine Bremswirkung unmittelbar oder mittelbar auf zumindest ein Rad 126 ausgeübt wird. Insbesondere ist das Bremsgegenstück ein Bremsring 232. Nachfolgend ist unter Bezugnahme auf einen Bremsring zu verstehen, dass bei Varianten auch ein anderes Bremsgegenstück vorgesehen und gemeint ist.

Günstigerweise ist der Bremsring 232 mittelbar oder unmittelbar an dem zumindest einen Rad 126, beispielsweise an dessen Nabe, montiert.

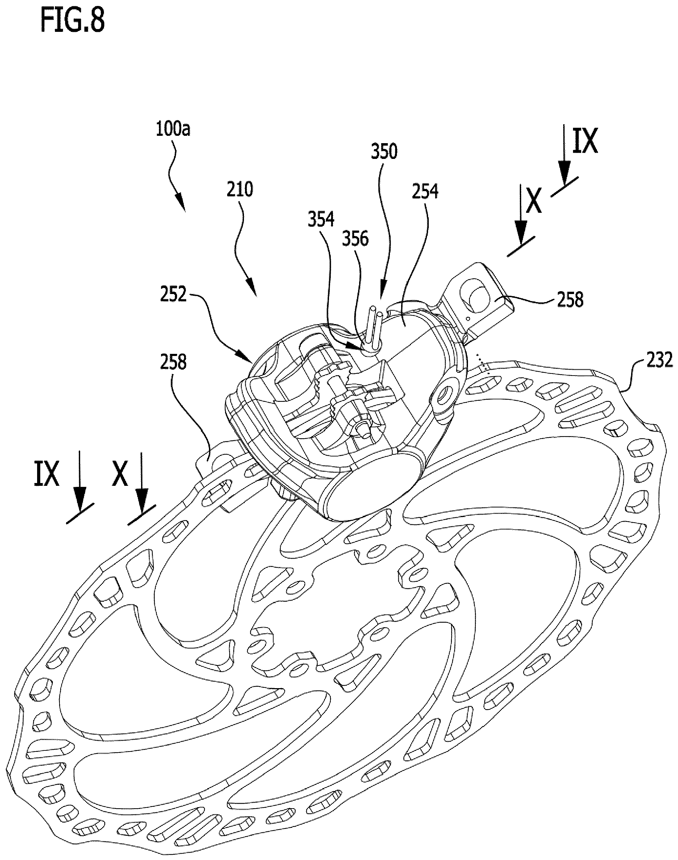

Die Bremsvorrichtung 210 umfasst ein Gehäuse 252, welches einen beispielsweise einstückigen Gehäusekörper 254 umfasst, wie beispielhaft für ein erstes Ausführungsbeispiel in der Fig. 3 und für weitere Ausführungsbeispiele in den Fign. 8, 11, 12, 14 und 15 dargestellt ist.

Das Gehäuse 252 umfasst Befestigungselemente 258 zur relativ zu der Drehbewegung des Rades 126 stationären Befestigung, insbesondere unmittelbar oder mittelbar an dem Rahmen 114. Beispielsweis sind die Befestigungselemente 258 aus dem Gehäusekörper 254 ausgebildet.

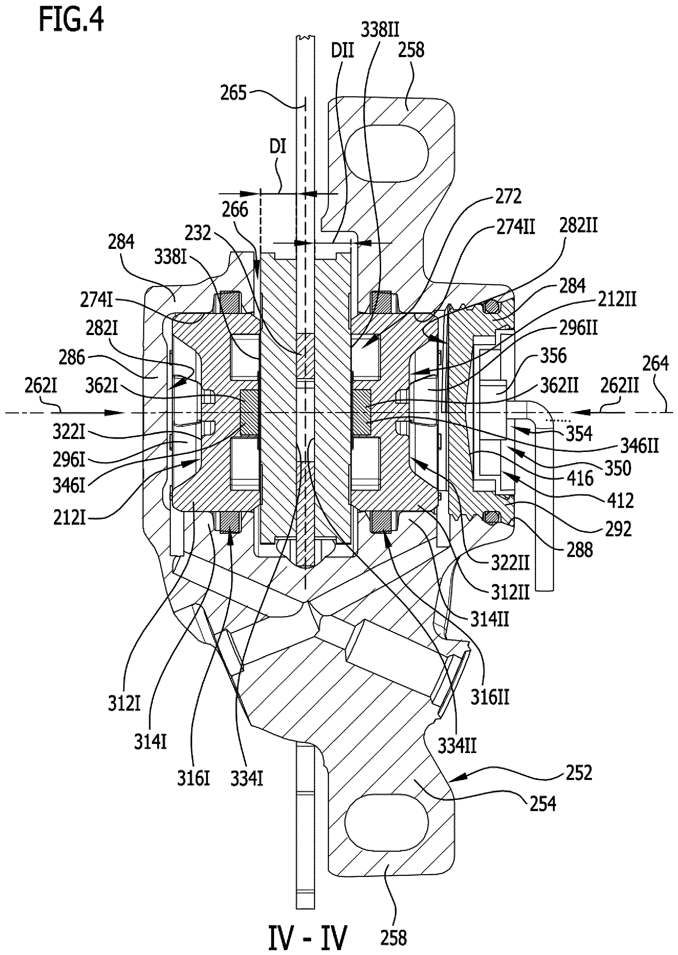

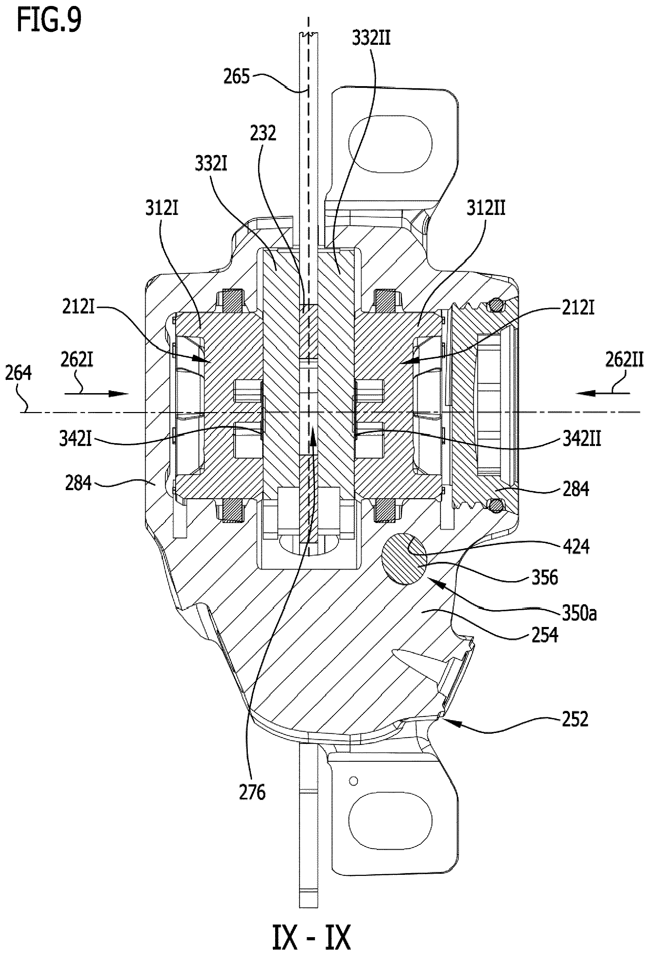

In dem Gehäuse 252 ist die zumindest eine Beaufschlagungseinheit 212 insbesondere in einer Beaufschlagungsrichtung 262 linear beweglich gelagert. Vorzugsweise sind zwei Beaufschlagungseinheiten 212 I, II insbesondere in einer jeweiligen Beaufschlagungsrichtung 262 I, II linear beweglich in dem Gehäuse 252 gelagert. Beispielhaft ist dies für das erste Ausführungsbeispiel in der Fig. 4 und für weitere Ausführungsbeispiele in den Fign. 9, 10, 13, 16 und 17 dargestellt.

Insoweit, wie mehrere Beaufschlagungseinheiten 212 I, II zumindest im Wesentlichen gleich ausgebildet sind, werden diese gemeinsam beschrieben. Insbesondere ist somit voranstehend und nachfolgend unter der Bezugnahme auf eine Beaufschlagungseinheit im Zusammenhang mit einem Merkmal zu verstehen, dass die genau eine Beaufschlagungseinheit 212 oder zumindest eine Beaufschlagungseinheit, vorzugsweise zumindest einige, beispielsweise sämtliche, der mehreren Beaufschlagungseinheiten 212 dieses Merkmal aufweist/aufweisen, sofern im Kontext nichts explizit anderes angegeben ist.

Insbesondere ist die Beaufschlagungsrichtung 262 zumindest näherungsweise parallel zu einer Beaufschlagungsachse 264 ausgerichtet.

Insbesondere verläuft die Beaufschlagungsachse 264 zumindest näherungsweise senkrecht zu einer geometrischen Bremsebene 265.

Beispielsweise erstreckt sich der Bremsring 232 zumindest im Wesentlichen in der geometrischen Bremsebene 265.

Beispielsweise ist beidseits der geometrischen Bremsebene 265 jeweils eine Gehäusehälfte des Gehäuses 252 ausgebildet.

Insbesondere weist das Gehäuse 252 einen Eingriffsraum 266 auf. Der Eingriffsraum 266 ist zumindest zu einer Seite nach außen bezogen auf das Gehäuse 252 geöffnet und in diesen greift der Bremsring 232 ein.

Insbesondere ist die zumindest eine Beaufschlagungseinheit 212 zumindest teilweise seitlich des Eingriffsraums 266 angeordnet und günstigerweise teils in diesen hineinragend ausgebildet, sodass bei einer Betätigung der Beaufschlagungseinheit 212 diese in dem Eingriffsraum 266 den Bremsring 232 beaufschlagt. Vorzugsweise sind die zwei Beaufschlagungseinheiten 212 insbesondere bezogen auf die Beaufschlagungsachse 264 und/oder die Bremsebene 265 beidseits des Eingriffsraums 266 angeordnet und günstigerweise teils in diesen hineinragend ausgebildet, sodass bei einer Betätigung der zwei Beaufschlagungseinheiten 212 I, II diese in dem Eingriffsraum 266 den Bremsring 232 bremswirksam beaufschlagen.

Günstigerweise ist in dem Gehäuse 252, insbesondere in dem Gehäusekörper 254, ein Führungsraum 272 ausgebildet, in welchem die zumindest eine Beaufschlagungseinheit 212 in einen Führungsabschnitt 274 vorzugsweise geführt gelagert ist.

Günstigerweise erstreckt sich der Führungsraum 272 im Wesentlichen in zur Beaufschlagungsachse 264 axialer Richtung.

Günstigerweise schneiden sich der Führungsraum 272 und der Eingriffsraum 266 und weisen einen gemeinsamen Raumbereich 276 auf. Insbesondere erstreckt sich ein jeweiliger Führungsabschnitt 274 in zur Beaufschlagungsachse 264 axialer Richtung von dem gemeinsamen Raumbereich 276 hinweg und in Richtung auf ein jeweiliges axiales Ende 282 des Führungsraums 272 zu.

Günstigerweise ist der Führungsraum 272 an einem bezogen auf die Beaufschlagungsachse 264 axialen Ende 282 durch ein Gehäuseteil 284 nach außen, das heißt insbesondere zu einer Umgebung des Gehäuses 252 hin, verschlossen.

Beispielsweise ist das Gehäuseteil 284 an einem axialen Ende 282, hier beispielsweise am axialen Ende 282I, ein Körperabschnitt 286 des Gehäusekörpers 254.

Günstigerweise ist an einem axialen Ende 282, hier beispielsweise am axialen Ende 282II, ein den Führungsraum 272 ausbildender Raum nach außen, das heißt insbesondere zu einer Umgebung des Gehäuses 252 hin, geöffneter Raum. An diesem axialen Ende 282 weist das Gehäuse 252 eine Öffnung 288 auf. In der Öffnung 288 ist ein Verschlusselement 292 angeordnet. Insbesondere bildet das Verschlusselement 292 das Gehäuseteil 284, welches den Führungsraum 272 an diesem axialen Ende 282 verschließt, aus.

Bei günstigen Varianten ist das Verschlusselement 292 lösbar in der Öffnung 288 befestigt. Beispielsweise ist das Verschlusselement 292 mit einer Schraubverbindung in der Öffnung 288 gehalten.

Beispielsweise ist der den Führungsraum 272 ausbildende Raum durch eine Bohrung, insbesondere eine Sacklochbohrung, in dem Gehäusekörper 254 ausgebildet. Die Bohrung erstreckt sich von dem zur Umgebung hin geöffneten axialen Ende 282II bis zu dem durch den Körperabschnitt 286 verschlossenen axialen Ende 282I.

Insbesondere ist bei einigen Varianten in dem Führungsraum 272 eine Drucckammer 296 des Hydrauliksystems 226 ausgebildet. Günstigerweise ist die Druckkammer 296 zumindest zwischen dem Führungsabschnitt 274 und dem Gehäuseteil 284 an dem axialen Ende 282 gelegen. Vorteilhafterweise begrenzt zumindest ein Element der Beaufschlagungseinheit 212 die Druckkammer 296.

Bei einer Betätigung der Betätigungseinrichtung 220 wird druckbeaufschlagtes Hydraulikmedium in die Druckkammer 296 geleitet und hierdurch die Beaufschlagungseinheit 212 in der Beaufschlagungsrichtung 262 auf den Bremsring 232 zu bewegt und beaufschlagt diesen.

Insbesondere umfasst die Beaufschlagungseinheit 212 ein Kolbenelement 312, welches in dem Führungsabschnitt 274 in zur Beaufschlagungsachse 264 axialen Richtung beweglich gelagert ist. Vorzugsweise ist das Kolbenelement 312 durch eine Seitenwand 314 des Gehäusekörpers 254 geführt gelagert. Die Seitenwand 314 begrenzt den Führungsraum 272 zumindest in dem Führungsabschnitt 274 quer zur Beaufschlagungsachse 264. Insbesondere liegt das Kolbenelement 312 mit einer zur Beaufschlagungsachse 264 radialen Außenseite zumindest teilweise an der Seitenwand 314 beweglich gelagert an.

Insbesondere ist eine Dichtung 316 vorgesehen, welche die Druckkammer 296 zu dem gemeinsamen Raumbereich 276 des Führungsraums 272 mit dem Eingriffsraum 266 hin abdichtet. Insbesondere wirkt die Dichtung 316 zwischen dem Kolbenelement 312 und der Seitenwand 314. Beispielsweise umfasst die Dichtung 316 einen Dichtring, welcher zumindest teilweise in einer von der Seitenwand 314 ausgebildeten Nut angeordnet ist.

Insbesondere begrenzt das Kolbenelement 312 vorzugsweise zumindest mit einer Stirnseite 322 die Druckkammer 296 zumindest teilweise. Insbesondere ist die Stirnseite 322 eine dem gemeinsamen Raumbereich 276 des Führungsraums 272 und des Eingriffsraums 266 abgewandte Stirnseite und/oder eine dem Gehäuseteil 284 am axialen Ende 282 zugewandte Stirnseite.

Bei einigen Varianten ist in dem Gehäuse 252, günstigerweise in dem Führungsraum 272, ein elektrischer Antrieb angeordnet.

Vorteilhafterweise werden bei einer Betätigung der Bremsvorrichtung 210 durch den elektrischen Antrieb zumindest Teile der Beaufschlagungseinheit 212 in der Beaufschlagungsrichtung 262 auf den Bremsring 232 zu bewegt und beaufschlagen diesen. Insbesondere umfassen die bewegten Teile der Beaufschlagungseinheit 212 zumindest einen Bremsbelag 332 und/oder einen Träger 342 für einen Bremsbelag 332 und beispielsweise das Kolbenelement 312, an welchem der Bremsbelag 332 und/oder der Träger 342 angeordnet sind.

Günstigerweise ist dabei das Kolbenelement 312 zumindest teilweise wie voranstehend erläutert ausgebildet und/oder angeordnet.

Beispielsweise greift der elektrische Antrieb an der Stirnseite 332 und/oder an einem die Stirnseite 332 umfassenden Endbereich des Kolbenelementes 312 an das Kolbenelement 312 an.

Die Beaufschlagungseinheit 212 umfasst an einer dem Bremsring 232 zugewandten Seite einen Bremsbelag 332.

Bei einer bremswirksamen Beaufschlagung der Beaufschlagungseinheit 212 ist der Bremsbelag 332 in Kontakt mit dem Bremsgegenstück, insbesondere dem Bremsring 232, und wird auf diesen gedrückt, sodass eine Bremswirkung erreicht wird.

Insbesondere weist der Bremsbelag 332 eine dem Bremsring 232 zugewandte Bremsseite 334 auf.

Insbesondere weist der Bremsbelag 332 eine in zur Beaufschlagungsrichtung 262 der Bremsseite 334 entgegengesetzte Seite 338 auf, die auch eine dem Bremsring 232 abgewandte Seite 338 ist. Insbesondere ist die entgegengesetzte Seite 338 des Bremsbelages 332 dem Kolbenelement 312 zugewandt.

Der Bremsbelag 332 weist eine Dicke D auf, welche in der Beaufschlagungsrichtung 262, also insbesondere in zur Beaufschlagungsachse 264 axialen Richtung und/oder zwischen der Bremsseite 334 und der entgegengesetzten Seite 338, gemessen wird.

Durch die bremswirksame Beaufschlagung des Bremsbelags 332 auf den Bremsring 232 weist der Bremsbelag 332 während seiner Einsatzzeit zumindest an der Bremsseite 334 einen Verschleiß auf, wobei durch die Materialabnutzung an der Bremsseite 334 die Dicke D des Bremsbelags 332 abnimmt.

Insbesondere umfasst die Beaufschlagungseinheit 212 einen Träger 342 für den Bremsbelag 332. Günstigerweise ist dabei der Träger 342 ausgebildet, um den Bremsbelag 332 zu tragen und beispielsweise in einer definierten Position entlang der und/oder quer zu der Beaufschlagungsachse 264 festzulegen.

Bei einigen vorteilhaften Varianten umfasst der Träger 342 ein Trägerblech, welches günstigerweise an dem Kolbenelement 312, insbesondere an dessen dem Bremsring 232 zugewandten Seite, befestigt ist.

Bei einigen günstigen Varianten bildet beispielsweise das Kolbenelement 312 den Träger 342 zumindest mit aus.

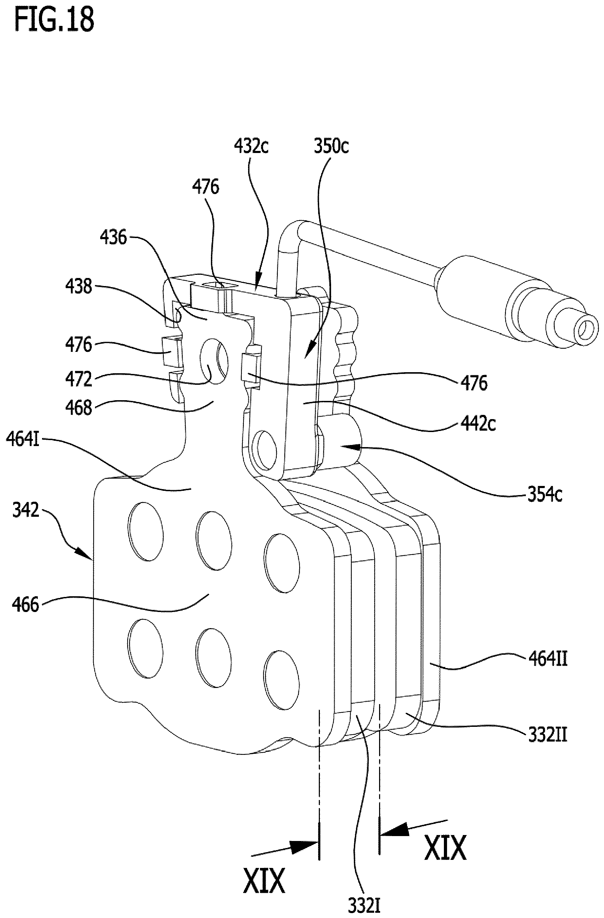

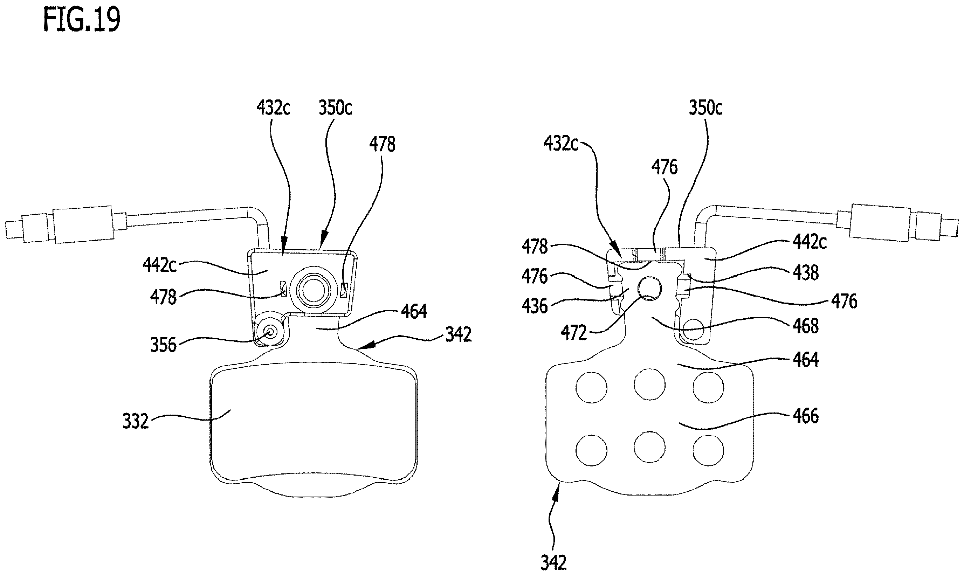

Ein günstiges Ausführungsbeispiel eines Trägers 342 wird nachfolgend beispielhaft im Zusammenhang mit den Fign. 18 und 19 erläutert.

Vorzugsweise ist der Bremsbelag 332 in dem gemeinsamen Raumbereich 276 des Führungsraums 272 und des Eingriffsraums 266 angeordnet.

Bei vorteilhaften Varianten ist ein Magnet 346 der Beaufschlagungseinheit 212 vorgesehen, welcher den Bremsbelag 332 hält.

Insbesondere ist der Magnet 346 vorzugsweise direkt an und/oder in dem Kolbenelement 312 angeordnet, beispielsweise an einer dem Bremsbelag 332 zugewandten Seite, die eine zu der die Druckkammer 296 begrenzenden Stirnseite 322 entgegengesetzte Seite ist.

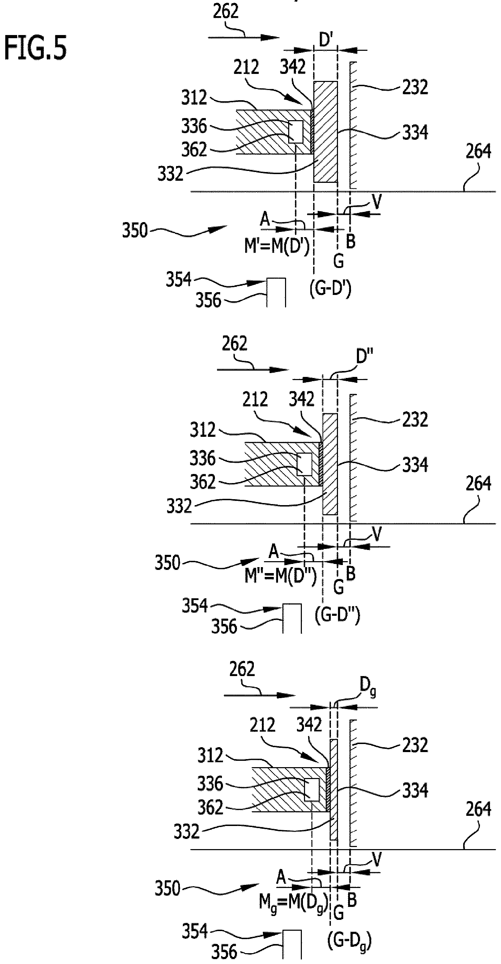

Insbesondere ist eine Ausgangsstellung der Beaufschlagungseinheit 212 definiert, die beispielhaft in Fig. 5 skizziert ist.

Insbesondere ist die Bremsseite 334 des Bremsbelags 332 in der Ausgangsstellung in einer Ausgangsposition G entlang der Beaufschlagungsachse 264 gelegen.

Günstigerweise ist die Ausgangsstellung so ausgelegt, dass in dieser die Beaufschlagungseinheit 212 einen im Wesentlichen fest definierten Verfahrweg V in der Beaufschlagungsrichtung 262 hat, bis der Bremsbelag 332 den Bremsring 232 bremswirksam beaufschlagt. Insbesondere ist die Bremsseite 334 in dem beaufschlagenden Zustand in einer Bremsposition B entlang der Beaufschlagungsachse 264 gelegen.

Insbesondere sind zumindest die meisten weiteren Teile der Beaufschlagungseinheit 212 in der Ausgangsstellung an einer jeweiligen von der Dicke D des Bremsbelages 332 abhängigen Position gelegen.

So ist beispielsweise die entgegengesetzte Seite 338 des Bremsbelags 332 und insbesondere der an der entgegengesetzten Seite 338 anliegende Träger 342 bei einer Dicke D' des Bremsbelags 332 an einer Position (G-D') entlang der Beaufschlagungsachse 264 gelegen und bei einer Dicke D" des Bremsbelags 332 an einer Position (G-D") entlang der Beaufschlagungsachse 264 gelegen.

Entsprechend weisen weitere Teile der Beaufschlagungseinheit 212 in der Ausgangsstellung eine von der Dicke D abhängige Position auf. Beispielsweise weist der Magnet 346 eine von der Dicke D des Bremsbelags 332 abhängige Position M(D) entlang der Beaufschlagungsachse 264 auf.

Günstigerweise ist die Beaufschlagungseinheit 212 vorgespannt und zwar derart, dass in der Ausgangsstellung die Bremsseite 334 stets zumindest im Wesentlichen an der Ausgangsposition G entlang der Beaufschlagungsachse 264 gelegen ist.

Beispielsweise ist die Beaufschlagungseinheit 212 mit einer Feder vorgespannt, wobei die Feder sich an der Bremsseite 334 abstützt und so die Bremsseite 334 in der Ausgangsstellung zumindest im Wesentlichen in der Ausgangsposition G hält.

Vorzugsweise hat die Feder eine kleine Federkonstante, sodass diese bei einer Betätigung der Bremsvorrichtung 210 eine Bewegung des Bremsbelags 332 und insbesondere der gesamten Beaufschlagungseinheit 212 in Richtung auf den Bremsring 232 zu und eine Beaufschlagung zumindest im Wesentlichen nicht beeinträchtigt.

Bei einigen Varianten ist der Verfahrweg V bei einem Bremsvorgang von der Dicke D des Bremsbelages 332 abhängig.

Das Bremssystem 100 ist mit einer im Ganzen mit 350 bezeichneten Detektionsvorrichtung zumindest ausrüstbar und/oder umfasst diese.

Günstigerweise ist die Detektionsvorrichtung 350 ausgebildet, um einen Verschleiß bei dem Bremsbelag 332, also insbesondere eine Abnahme der Dicke D des Bremsbelags 332 zu detektieren.

Insbesondere umfasst die Detektionsvorrichtung 350 zumindest eine Sensoreinheit 354 mit einem Sensor 356. Der Sensor 356 ist vorgesehen und ausgebildet, um zumindest einen für den Verschleiß des Bremsbelages 332 indikativen Parameter zu detektieren und beispielsweise zu messen.

Insbesondere kann aus dem von dem Sensor 356 detektierten Parameter unmittelbar oder mittelbar auf einen Zustand des Bremsbelags 332 geschlossen werden. Vorzugsweise kann aus dem detektierten Parameter zumindest darauf geschlossen werden, ob die Dicke D des Bremsbelages 332 größer oder kleiner als ein Schwellenwert Ds ist. Beispielsweise kann aus dem detektierten Parameter auf die tatsächliche Dicke D des Bremsbelages 332 zumindest innerhalb vordefinierter Toleranzgrenzen geschlossen werden.

Bei vorteilhaften Ausführungsbeispielen umfasst die Detektionsvorrichtung 350 zumindest einen Magneten 362, welcher so mit dem Bremsbelag 332 gekoppelt ist, dass aus dem Magnetfeld 364 des zumindest einen Magneten 362 zumindest auf einen Zustand des Bremsbelages 332, insbesondere auf die Dicke D des Bremsbelages 332, geschlossen werden kann.

Günstigerweise ist der zumindest eine Magnet 362 positionsgetreu mittelbar oder unmittelbar an den Bremsbelag 332 gekoppelt, sodass eine Position M(D) des zumindest einen Magneten 362 für eine Position des Bremsbelages 332, insbesondere für die Position der Bremsseite 334, entlang der Beaufschlagungsachse 264 zumindest indikativ ist und/oder bei einer Bewegung des Bremsbelages 332 der zumindest eine Magnet 362 entsprechend mitbewegt wird und so das Magnetfeld 364 des Magneten 362 für die Bewegung des Bremsbelags 332, insbesondere für eine Bewegung der Bremsseite 334, entlang der Beaufschlagungsachse 264 zumindest indikativ ist.

Vorzugsweise ist der zumindest eine Magnet 362 in einem Abstand A, welcher größer oder gleich null ist, von der entgegengesetzten Seite 338 des Bremsbelags 332 fest montiert. Damit hat der zumindest eine Magnet 362 entlang der Beaufschlagungsachse 264 einen Abstand (A+D) von der Bremsseite 334. Somit ist die Position des Magneten 362 für die Dicke D zumindest indikativ.

Vorteilhafterweise sind zwei Magneten 362I und 362II vorgesehen und günstigerweise weist jede der zwei Beaufschlagungseinheiten 212I,II jeweils einen Magneten 362I,II auf.

Insbesondere detektiert der Sensor 356 das gemeinsame Magnetfeld 364 der zwei Magnete 362I,II.

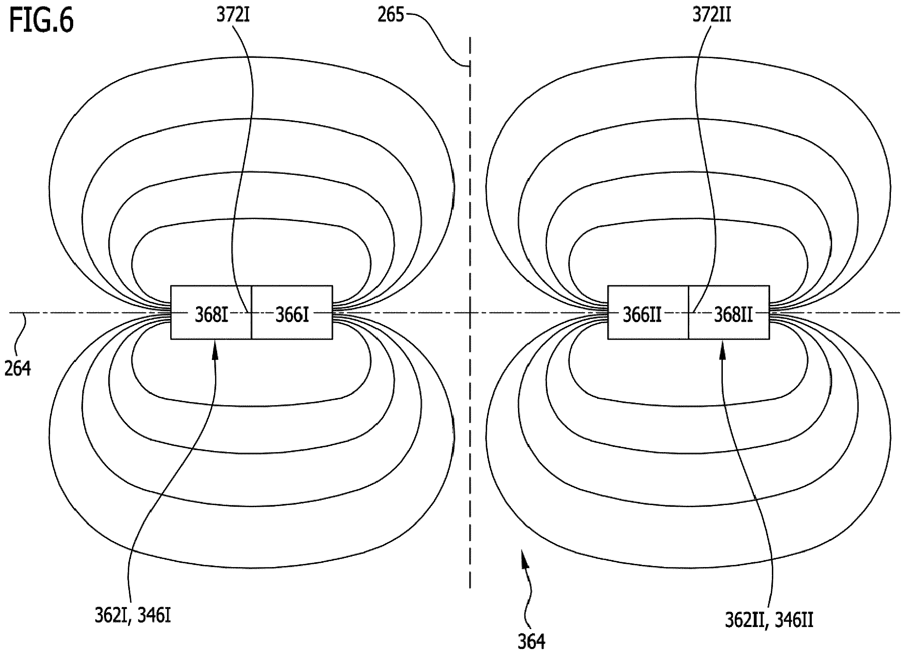

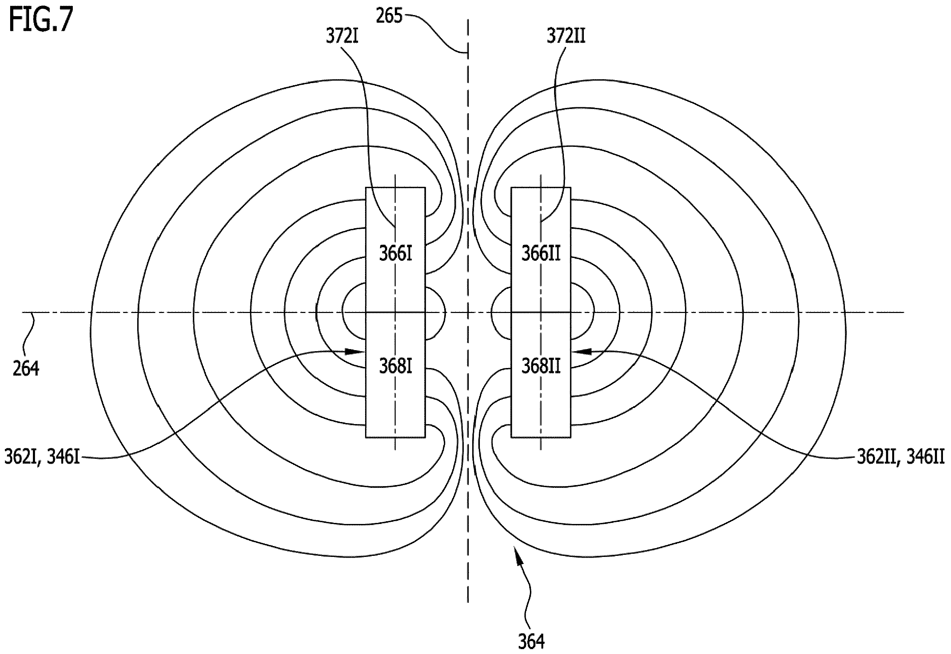

Günstigerweise sind die zwei Magnete 362I,II in der axialen Richtung der Beaufschlagungsachse 264 einander mit zumindest einem gleichen magnetischen Pol 366I,II und/oder 368I,II einander zugewandt, wie beispielhaft in Varianten in den Fign. 6 und 7 skizziert ist.

Bei einigen günstigen Varianten sind die zwei Magnete 3621 und 362II einander in der axialen Richtung der Beaufschlagungsachse 264 zumindest mit ihrem jeweiligen Nordpol zugewandt.

Bei einigen günstigen Varianten sind die zwei Magnete 362I und 362II einander in der axialen Richtung der Beaufschlagungsachse 264 zumindest mit ihrem jeweiligen Südpol zugewandt.

Vorteilhafterweise sind die zwei Magnete 362I und 362II zur Bremsebene 265 zumindest im Wesentlichen spiegelsymmetrisch angeordnet.

Bei bevorzugten Varianten sind die zwei Magnete 362I, 362II mit einem gleichen Pol 366I,II in der axialen Richtung der Beaufschlagungsachse 264 einander zugewandt angeordnet, wobei der jeweilige andere magnetische Pol 368I, 368II von dem anderen Magneten 362 bezogen auf die axiale Richtung der Beaufschlagungsachse 264 abgewandt angeordnet ist, wie beispielhaft in Fig. 6 dargestellt ist.

Insbesondere ist eine jeweilige Magnetachse 372, welche von dem einen magnetischen Pol 368 zu dem anderen magnetischen Pol 366 orientiert ist, zumindest näherungsweise parallel zu der Beaufschlagungsachse 264 orientiert.

Bei einigen günstigen Varianten sind die zwei Magnete 3621 und 362II mit beiden ihrer magnetischen Pole 366 und 368 in zur Beaufschlagungsachse 264 axialen Richtung jeweils dem gleichen magnetischen Pol 366, 368 des anderen Magneten 362 zugewandt, wie beispielhaft in Fig. 7 dargestellt ist. Insbesondere sind dabei die unterschiedlichen magnetischen Pole 366, 368 quer, insbesondere im Wesentlichen senkrecht, zur Beaufschlagungsachse 264 versetzt zueinander angeordnet.

Insbesondere ist bei Varianten die Magnetachse 372, welche von dem einen magnetischen Pol 366 zum anderen magnetischen Pol 368 eines der Magneten 362 orientiert ist, quer, insbesondere zumindest im Wesentlichen senkrecht, zu der Beaufschlagungsachse 264 orientiert.

Insbesondere ist ein Vorteil davon, dass die zwei Magneten 362I,II einander mit zumindest einem gleichen magnetischen Pol 366, 368 zugewandt sind, dass hierdurch die Magnetfeldlinien des gemeinsamen Magnetfelds 364 aus dem Zwischenraum zwischen den zwei Magneten 362I und 362II herausgedrängt werden und das Magnetfeld 364 in einer Umgebung der Magneten 362I,II stärker ist. Somit kann günstigerweise das Magnetfeld 364 von dem Sensor 356 besser und präziser detektiert werden.

In bevorzugten Varianten ist der zumindest eine Magnet 362, dessen Magnetfeld 364 detektiert wird, der Magnet 346, der zum Halten des Bremsbelags 332vorgesehen und ausgebildet ist.

Insbesondere ist dies vorteilhaft, da der den Bremsbelag 332 haltende Magnet 346 typischerweise zumindest in der Nähe des Bremsbelages 332 angeordnet ist und so in günstiger Weise gut indikativ für den Verschleiß des Bremsbelages 332 ist und mit wenig Toleranz behaftet ist.

Insbesondere ist die Nutzung des zum Halten des Bremsbelags 332 vorgesehenen Magneten 346 auch als für den Bremsbelagverschleiß indikativen Magneten 362 vorteilhaft, da so durch die Funktionsintegration weniger Bauteile nötig sind.

Insbesondere ist die Nutzung des zum Halten des Bremsbelags 332 vorgesehenen Magneten 346 auch als für den Bremsbelagverschleiß indikativen Magneten 362 vorteilhaft, da so eine Bremsvorrichtung 210, welche zumindest einen zum Halten eines Bremsbelages 332 vorgesehener Magneten 346 umfasst, mit einer als ein Nachrüstsatz ausgebildeten Detektionsvorrichtung 350, welche zumindest die den Sensor 356 umfassende Sensoreinheit 354 umfasst, nachgerüstet werden kann.

Entsprechend ist es vorteilhaft, wenn der zumindest eine zum Halten vorgesehene Magnet 346, insbesondere die zwei zum Halten vorgesehenen Magneten 346I,II zumindest teilweise entsprechend wie voranstehend im Zusammenhang mit den zumindest einen für den Bremsbelagverschleiß indikativen Magneten 362, insbesondere im Zusammenhangmit den zwei für den Bremsbelagverschleiß indikativen Magneten 362I,II, erläutert angeordnet ist/sind und vice versa.

Insbesondere ist der Sensor 356 ein Magnetfeldsensor, welcher beispielsweise eine Stärke und/oder eine Ausrichtung zumindest eines lokalen Bereiches des zu detektierenden Magnetfeldes 364 detektiert.

Bei unterschiedlichen Varianten des Ausführungsbeispiels können unterschiedlichste Sensoren 356 verwendet werden.

Bei vorteilhaften Varianten ist der Sensor 356 ein Hall-Sensor.

Insbesondere wird der Sensor 356 bei einer bekannten Dicke D des Bremsbelages 332 kalibriert.

Günstigerweise kann somit die Sensoreinheit 354 durch Veränderungen des Magnetfelds 364 in der Ausgangsstellung der Beaufschlagungseinheit 212 auf eine Abnahme der Dicke D des Bremsbelags 332 schließen und/oder aus einer Änderung des Magnetfelds 364, die bei einem Bremsvorgang durch den Verfahrweg der Beaufschlagungseinheit 212 und die entsprechende Positionsänderung des zumindest einen Magneten 362 erfolgt, zumindest auf einen Bremsbelagverschleiß und beispielsweise auf die Dicke D des Bremsbelages 332 schließen.

Bei einigen vorteilhaften Ausführungsbeispielen ist der Sensor 356 in einem in dem Gehäuse 252 gelegenen Hohlraum 412 angeordnet, wie beispielhaft in Fign. 3 und 4 dargestellt ist.

Beispielsweise weist das Verschlusselement 292 eine Aussparung 416 auf, in welcher der Sensor 356 angeordnet ist. Insbesondere ist die Aussparung 416 nach außen, das heißt zu einer Umgebung des Gehäuses 252 hin, geöffnet ausgebildet. Vorzugsweise ist zum Abdecken der Aussparung 416 eine Blende vorgesehen, welche den Raum der Aussparung 416 zur Umgebung hin abtrennt. Günstigerweise wird der in der Aussparung 416 angeordnete Sensor 356 durch die Blende vor schädlichen Einwirkungen von außen, beispielsweise vor Schmutz, zumindest teilweise geschützt.

Insbesondere ist eine Anordnung des Sensors 356 in einem in dem Gehäuse 252 bereits vorhandenen Hohlraum 412 günstig, da so ein bereits vorhandener Bauraum für den Sensor 356 genutzt wird und/oder der Sensor in dem Hohlraum 412 zumindest teilweise geschützt ist.

Insbesondere ist die Anordnung des Sensors 356 in einem bereits vorhandenen Hohlraum 412 auch bei einer als ein Nachrüstsatz ausgebildeten Detektionsvorrichtung 350 vorteilhaft, da so der Sensor 356 ohne großen Umrüstaufwand an das Gehäuse 356 und insbesondere in einen zumindest teilweise geschützten Raum, beim Nachrüsten montiert werden kann.

Beispielsweise ist der Sensor 356 bei einigen günstigen Varianten dieses Ausführungsbeispiels in zur Beaufschlagungsachse 264 axialen Richtung versetzt zu dem zumindest einen Magneten 362 angeordnet, wie beispielhaft in Fig. 4 dargestellt ist.

Bei einigen anderen vorteilhaften Varianten des Ausführungsbeispiels, welche nicht explizit in den Zeichnungen dargestellt sind, ist der Sensor 356 quer zu der Beaufschlagungsachse 264 versetzt zu dem zumindest einen Magneten 362 in einem Hohlraum 412 angeordnet.

Bei weiteren nachfolgend erläuterten Ausführungsbeispielen sind diejenigen Elemente und/oder Merkmale, welche zumindest im Wesentlichen gleich ausgebildet sind und/oder zumindest im Wesentlichen die gleiche grundlegende Funktion erfüllen wie bei einem anderen Ausführungsbeispiel, insbesondere wie bei dem voranstehend erläuterten Ausführungsbeispiel und/oder beispielsweise wie bei einem anderen der nachstehend erläuterten Ausführungsbeispiele, mit dem gleichen Bezugszeichen versehen und bezüglich der Beschreibung derselben wird soweit im Zusammenhang mit einem Ausführungsbeispiel nichts Abweichendes erläutert wird vollinhaltlich auf die Beschreibung derselben im Zusammenhang mit den anderen Ausführungsbeispielen verwiesen, um Wiederholungen zu vermeiden.

Insbesondere wenn auf eine Ausgestaltung bei einem der nachfolgend erläuterten Ausführungsbeispiele im Besonderen hingewiesen werden soll, wird dem entsprechenden Bezugszeichen ein das entsprechende Ausführungsbeispiel kennzeichnender Buchstabe als Suffix angehängt.

Insbesondere sind die nachfolgend erläuterten Ausführungsbeispiele eines Bremssystems 100 und/oder einer Detektionsvorrichtung 350 für ein Fahrzeug 110, insbesondere ein lenkergeführtes und/oder leichtgewichtiges Fahrzeug, ausgelegt und ausgebildet, vorzugsweise zumindest teilweise wie voranstehend insbesondere zumindest im Zusammenhang mit den Fign. 1 bis 4 erläutert wurde.

Insbesondere umfasst die Bremsvorrichtung 210 bei den nachfolgend erläuterten Ausführungsbeispielen zumindest eine Beaufschlagungseinheit 212 mit einem Träger 342 für einen Bremsbelag 332 und/oder mit einem Bremsbelag 332.

Beispielsweise umfasst das Bremssystem 100 bei den nachfolgend erläuterten Ausführungsbeispielen eine Betätigungseinrichtung 220. Dabei ist/sind vorzugsweise die Bremsvorrichtung 210 und insbesondere deren zumindest eine Beaufschlagungseinrichtung 212 und/oder die Betätigungseinheit 220 zumindest teilweise wie voranstehend im Zusammenhang mit den Fign. 1 bis 7 ausgebildet.

Bei einem Ausführungsbeispiel eines Bremssystems 100a, welches beispielhaft in den Fign. 8 bis 10 dargestellt ist, ist eine zumindest eine Sensoreinheit 354 mit einem Sensor 356 umfassende Detektionsvorrichtung 350a vorgesehen.

Bei günstigen Varianten umfasst das Bremssystem 100a die Detektionsvorrichtung 350a ab Werk und bei einigen Varianten ist die Detektionsvorrichtung 350a Teil eines Nachrüstsatzes und/oder als Nachrüstsatz ausgebildet.

Insbesondere ist der Sensor 356 ein Magnetfeldsensor zum Detektieren eines Magnetfeldes 364 zumindest eines Magneten 362, vorzugsweise eines Magnetfeldes 364 von zumindest zwei Magneten 362, vorzugsweise zumindest teilweise wie voranstehend erläutert.

Bei diesem Ausführungsbeispiel ist in dem Gehäuse 252, insbesondere in dem Gehäusekörper 254, eine Sensorkammer 424 ausgebildet, wie beispielhaft in Fign. 8 und 9 dargestellt ist.

Insbesondere ist eine Form der Sensorkammer 424 entsprechend einer äußeren Form des Sensors 356 ausgebildet. Vorteilhafterweise bildet die Sensorkammer 424 für den Sensor 356 eine Fassung aus.

Beispielsweise ist die Sensorkammer 424 als Bohrung in dem Gehäusekörper 254 ausgebildet.

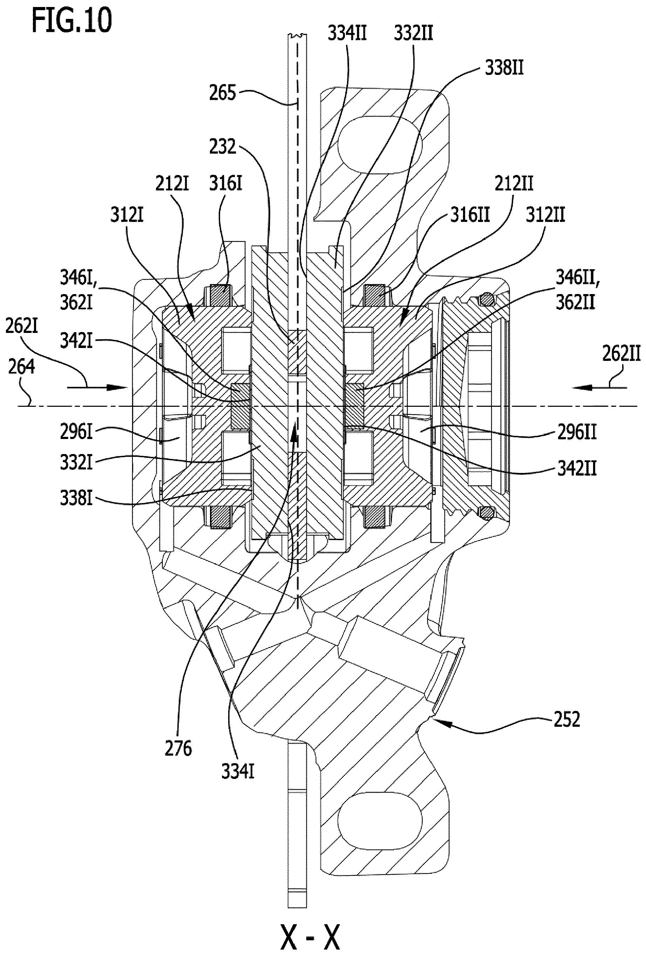

Insbesondere ist die Sensorkammer 424 bei einigen bevorzugten Varianten des Ausführungsbeispiels bezogen auf die Beaufschlagungsachse 264 quer zu dem zumindest einen Magneten 362 versetzt angeordnet, wie beispielhaft in den Fign. 9 und 10 dargestellt ist.

Bei einigen günstigen Varianten, welche nicht explizit in den Zeichnungen dargestellt sind, ist die Sensorkammer 424 zumindest im Wesentlichen in zur Beaufschlagungsachse 264 axialer Richtung versetzt zu dem zumindest einen Magneten 362 angeordnet.

Günstigerweise ist die Sensorkammer 424 an einer Stelle ausgebildet, an welcher das Magnetfeld 364 und/oder Veränderungen in dem Magnetfeld 364 gut zu detektieren sind.

Insbesondere ist der Sensor 356 zumindest teilweise gut geschützt vor äußeren Einflüssen in der Sensorkammer 424 angeordnet.

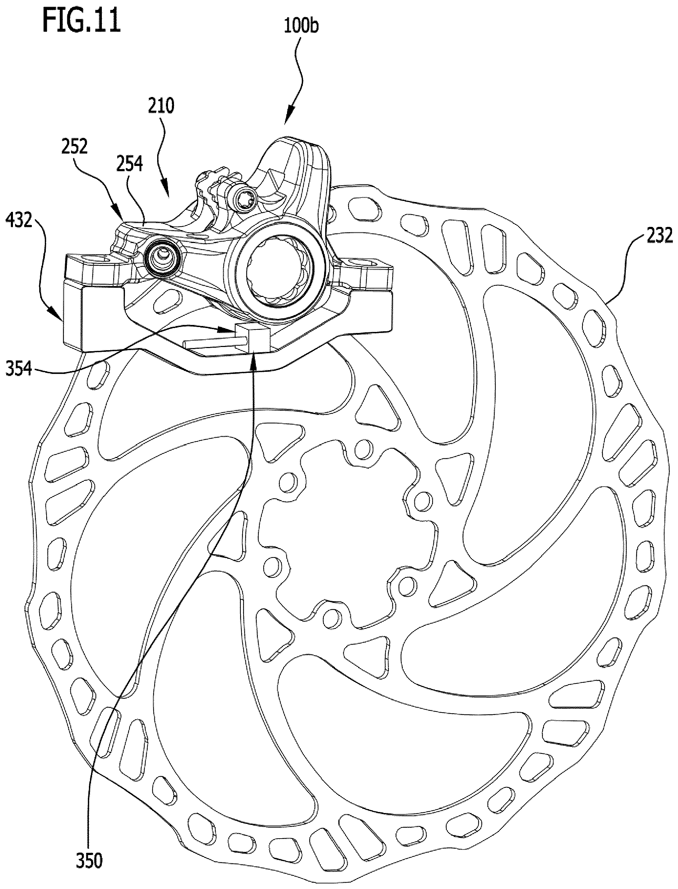

Ein Bremssystem 100b eines weiteren Ausführungsbeispiels ist beispielhaft in den Fign. 11 bis 13 dargestellt.

Bei diesem weiteren Ausführungsbeispiel ist eine Detektionsvorrichtung 350b, welche zumindest eine Sensoreinheit 354 mit zumindest einem Sensor 356 umfasst, vorgesehen.

Bei einigen vorteilhaften Varianten des Ausführungsbeispiels ist die Detektionsvorrichtung 350b bereits Teil eines ab dem Werk gelieferten Bremssystems.

Bei einigen bevorzugten Varianten des Ausführungsbeispiels ist die Detektionsvorrichtung 350b zumindest Teil eines Nachrüstsatzes und/oder als Nachrüstsatz ausgebildet. Insbesondere kann ein bereits ausgeliefertes Bremssystem 100 mit zumindest einer Bremsvorrichtung 210 mit dem Nachrüstsatz nachträglich mit der Detektionsvorrichtung 350b ausgestattet werden.

Insbesondere ist bei diesem Ausführungsbeispiel der Sensor 356 an einer Halterung 432 für den Sensor 356 angeordnet. Günstigerweise wird der Sensor 356 von der Halterung 432 gehalten. Beispielsweise ist der Sensor 356 fest an der Halterung 432 montiert.

Bei vorteilhaften Varianten ist die Halterung 432 Teil des Nachrüstsatzes.

Bei einigen günstigen Varianten ist die Halterung 432 Teil des ab dem Werk ausgelieferten Bremssystems mit einer Bremsvorrichtung.

Bei einigen günstigen Varianten ist die Halterung 432 Teil des Gehäuses 252.

Bei vorteilhaften Varianten ist die Halterung 432 an das Gehäuse 252, insbesondere an den Gehäusekörper 254, montierbar.

Vorzugsweise weist die Halterung 432 zumindest eine Formschlussausbildung, vorteilhafterweise mehrere Formschlussausbildungen, auf, welche mit einer jeweiligen korrespondierenden Formschlussausbildung in einem verbundenen und insbesondere anmontierten Zustand zusammenwirken und eine formschlüssige Verbindung ausbilden.

Beispielsweise umfassen zueinander korrespondierende Formschlussausbildungen ein Formschlusselement 436 und eine Formschlussaufnahme 438, wobei günstigerweise das Formschlusselement 436 in die Formschlussaufnahme 438 eingreift und von dieser aufgenommen wird.

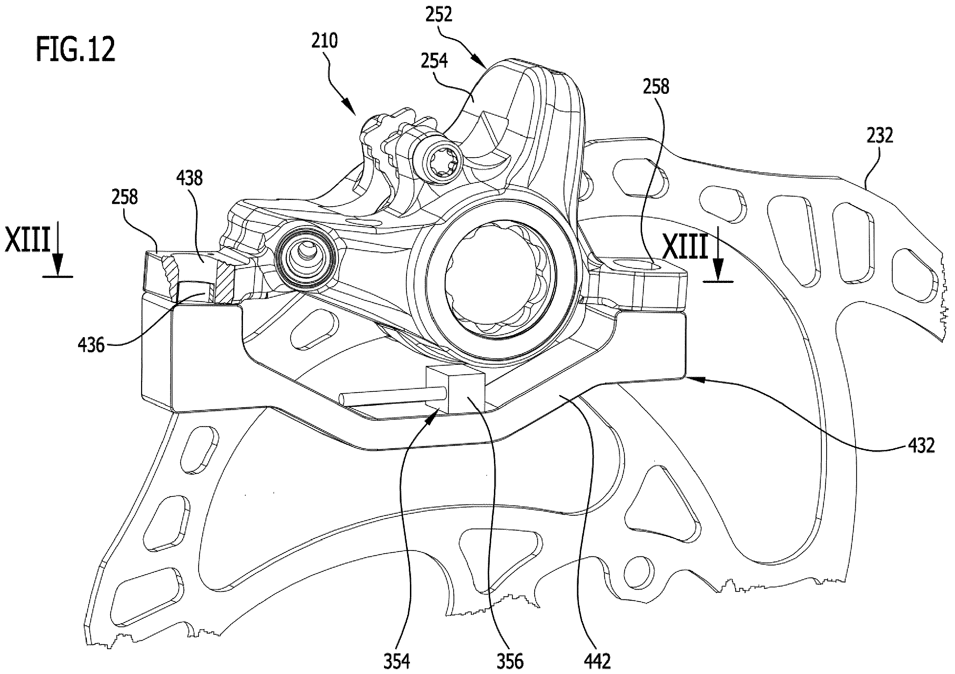

Beispielhaft ist eine Variante von Formschlussausbildungen, die zumindest ein Formschlusselement 436 und eine Formschlussaufnahme 438 umfassen, wie in der Fig. 12 dargestellt ist.

Bei einigen vorteilhaften Varianten ist die Halterung 432 ausgebildet, um an den Befestigungselementen 258 und/oder in deren Bereich an das Gehäuse 252, insbesondere an den Gehäusekörper 254, befestigt zu werden und in einem anmontierten Zustand ist die Halterung 432 zumindest in dem Bereich der Befestigungselemente 258 anmontiert.

Insbesondere weist zumindest ein Befestigungselement 258 einen Durchbruch, beispielsweise ein Langloch, auf zur Befestigung des Gehäuses 252 an dem Rahmen 114.

Bei einigen vorteilhaften Varianten ist vorgesehen, dass ein zur Befestigung vorgesehener Durchbruch auch als Formschlussaufnahme 438 genutzt wird. Insbesondere weist dabei die Halterung 432 ein korrespondierendes Formschlusselement 436, welches formschlüssig in diesen Durchbruch eingreift, auf.

Bei einigen bevorzugten Varianten weist beispielsweise die Halterung 432 Formschlusselemente auf, welche formschlüssig ein Gehäuseteil 252, insbesondere ein Teil des Gehäusekörpers 254, beispielsweise zumindest einen Teil der Befestigungselemente 258, formschlüssig umgreifen.

Insbesondere sind die Formschlussausbildungen so ausgebildet, dass die Halterung 432 in einer definierten Position relativ zu der zumindest einen Beaufschlagungseinheit 212 angeordnet und festgelegt ist. Günstigerweise ist hierdurch auch der an der Halterung 432 angeordnete Sensor 356 in einer vordefinierten Relativposition relativ zu der zumindest einen Beaufschlagungseinheit 212 und somit zu dem Träger 342 für den Bremsbelag 332 und/oder zu dem Bremsbelag 332 festgelegt.

Beispielsweise weist die Halterung 432 zumindest einen Durchbruch auf, welcher in dem formschlüssig verbundenen Zustand mit zumindest einem zur Befestigung vorgesehenen Durchbruch bei einem Befestigungselement 258 fluchtet, sodass günstigerweise die Halterung 432 zusammen mit dem Gehäuse 252 an dem Rahmen 114 befestigt werden können.

Beispielsweise umfasst die Halterung 432 zumindest ein Halteelement 442, an welchem der Sensor 356 angeordnet und befestigt ist.

Insbesondere erstreckt sich in dem verbundenen Zustand das Halteelement 442 zumindest teilweise in einem außerhalb des Gehäuses 252 gelegenen Bereichs, in welchem das Magnetfeld 364 des zumindest einen Magneten 362 und insbesondere Änderungen in dem Magnetfeld 364 gut detektierbar sind und der Sensor 356 ist in diesem Teilbereich an das Halteelement 442 angeordnet.

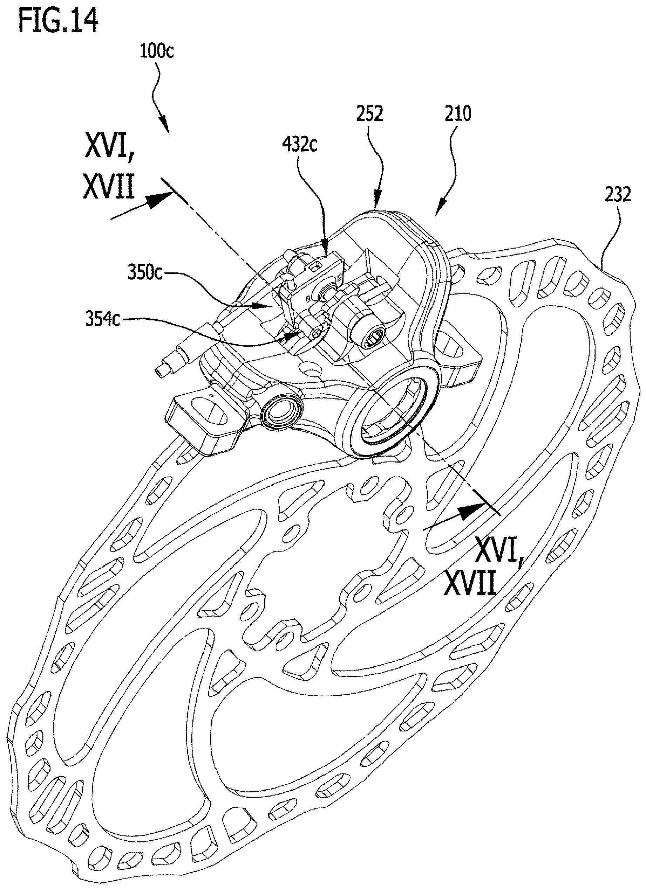

Ein weiteres Ausführungsbeispiel eines Bremssystems 100c ist beispielhaft in den Fign. 14 bis 19 dargestellt.

Insbesondere ist bei diesem Ausführungsbeispiel eine Detektionsvorrichtung 350c, welche zumindest eine Sensoreinheit 354c mit einem Sensor 356c umfasst, vorgesehen.

Bei einigen vorteilhaften Varianten des Ausführungsbeispiels umfasst ein ab dem Werk geliefertes Bremssystem 100c mit einer Bremsvorrichtung 210 bereits die Detektionsvorrichtung 350c.

Bei einigen bevorzugten Varianten des Ausführungsbeispiels umfasst ein Nachrüstsatz die Detektionsvorrichtung 350c und/oder ist die Detektionsvorrichtung 350c zumindest im Wesentlichen als Nachrüstsatz ausgebildet. Insbesondere kann mit dem Nachrüstsatz ein bereits aus dem Werk geliefertes Bremssystem 100 mit einer Bremsvorrichtung 210 nachträglich mit der Detektionsvorrichtung 350c ausgerüstet werden.

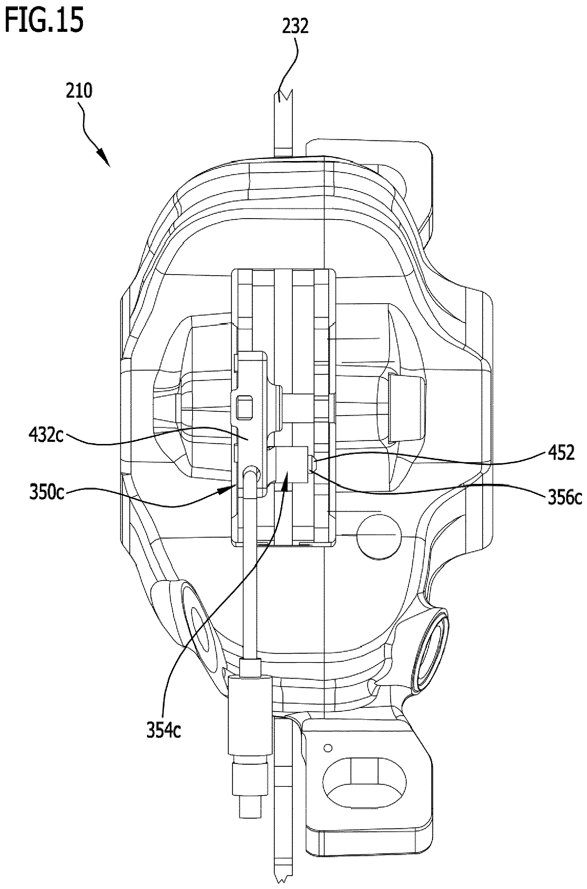

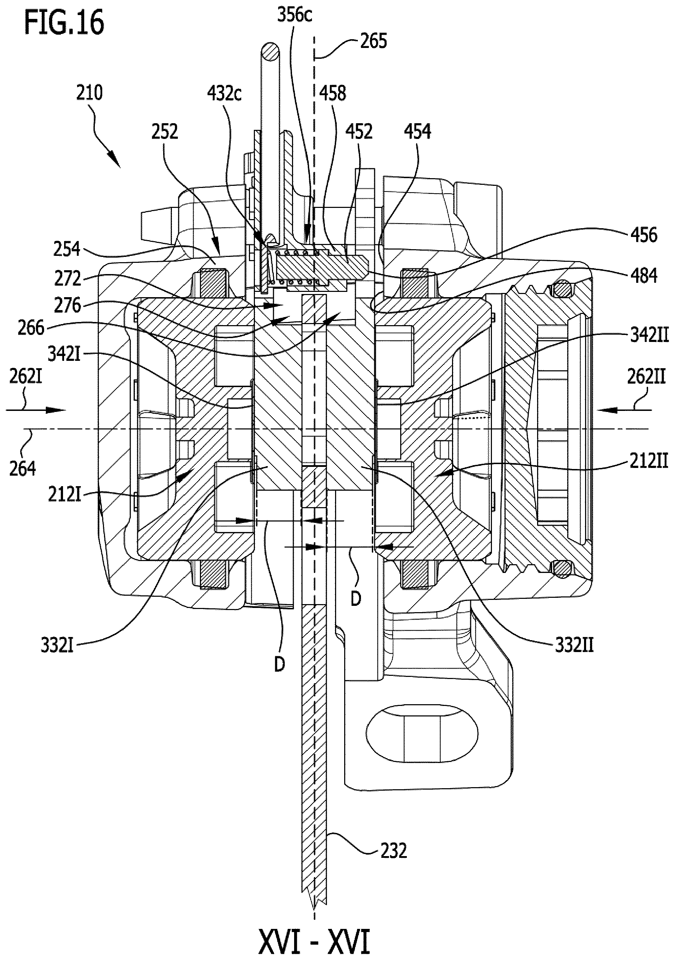

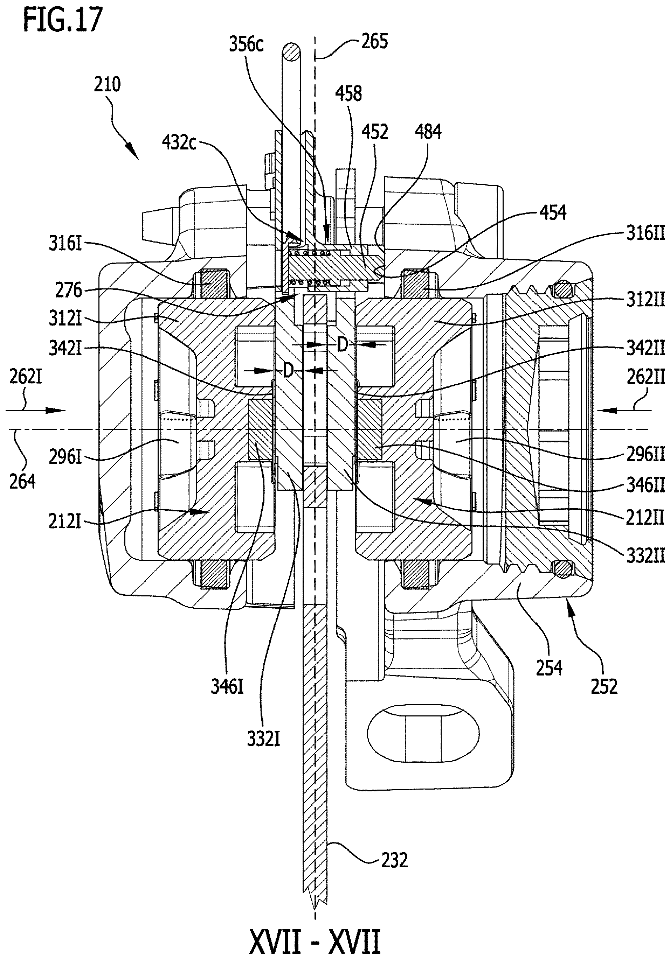

Insbesondere ist bei diesem Ausführungsbeispiel der Sensor 356 als Kontaktsensor ausgebildet, wie beispielhaft in Fig. 15 dargestellt ist. Insbesondere umfasst die Sensoreinheit 354c ein Kontaktelement 452 und eine Kontaktstelle 454, wobei in einer kontaktfreien Relativstellung das Kontaktelement 452 die Kontaktstelle 454 nicht kontaktiert, insbesondere von dieser beabstandet ist, wie beispielhaft in Fig. 16 dargestellt ist und bei einer, insbesondere signalgebenden, Kontaktierung das Kontaktelement 452 die Kontaktstelle 454 kontaktiert, insbesondere direkt berührt, wie beispielhaft in Fig. 17 dargestellt ist.

Insbesondere wird ein Stromkreis bei einer Kontaktierung geschlossen und der Stromkreis ist in der kontaktfreien Relativstellung unterbrochen.

Günstigerweise ist das Kontaktelement 452 mit einem Pol des Stromkreises stromführend verbunden und die Kontaktstelle 454 ist mit dem anderen Pol des Stromkreises stromführend verbunden.

Bei einigen vorteilhaften Varianten sind das Kontaktelement 452 und die Kontaktstelle 454 jeweils mit einer jeweiligen Leitung mit dem jeweiligen Pol des Stromkreises stromführend verbunden.

Günstigerweise sind bei diesen Varianten das Kontaktelement 452 und die Kontaktstelle 454 elektrisch von dem Gehäuse 252 getrennt. Insbesondere sind bei dem in dem Gehäuse 252 angeordneten Sensor 356 das Kontaktelement 452 und die Kontaktstelle 454 und deren elektrischen Leitungen gegenüber dem Gehäuse 252 elektrisch isoliert ausgebildet. Beispielsweise sind die Leitungen zumindest teilweise in dem Gehäuse 252, insbesondere in dem Gehäusekörper 254 eingegossen, wodurch diese geschützt sind und beispielsweise ein günstiger Korrosionsschutz gegeben ist.

Bei einigen bevorzugten Varianten ist die Kontaktstelle 454 unmittelbar und/oder mittelbar über das Gehäuse 252, insbesondere über den Gehäusekörper 254, mit dem ihr zugeordneten Pol des Stromkreises, insbesondere mit der Masse, elektrisch leitend verbunden.

Günstigerweise wird hierbei die Kontaktstelle 454 durch ein Teil des Gehäuses 252, vorzugsweise durch den Gehäusekörper 254, ausgebildet. Das Kontaktelement 452 und die ihr zugeordnete Leitung sind, außer in der Kontaktstellung, von dem Gehäuse 252 elektrisch getrennt. Beispielsweise kann auch bei diesen Varianten die dem Kontaktelement 452 zugeordnete Leitung zumindest teilweise in dem Gehäuse 252 angeordnet, beispielsweise eingegossen, sein.

Insbesondere ist der Kontaktsensor 356c in der kontaktfreien Relativstellung, solange der zumindest eine Bremsbelag 332 eine noch hinreichend große Dicke Dh aufweist.

Insbesondere sind die hinreichend großen Dicken Dh größer als ein Kontaktwert Dk der Dicke.

Günstigerweise umfasst die kontaktfreie Relativstellung mehrere Relativpositionen des Kontaktsensors 356c und seiner Teile. Insbesondere ist das Kontaktelement 452 von der Kontaktstelle 454 in unterschiedlichen Positionen der kontaktfreien Relativstellung unterschiedlich weit beabstandet, wobei beispielsweise die unterschiedlichen Positionen in Abhängigkeit von unterschiedlichen noch hinreichend großen Dicken Dh des zumindest einen Bremsbelages 332 eingenommen werden.

Insbesondere erfolgt eine Kontaktierung bei geringen Dicken Dg des zumindest einen Bremsbelages 332. Die geringen Dicken Dg sind kleiner oder gleich groß wie der Kontaktwert Dk der Dicke des Bremsbelages 332.

Insbesondere weist das Kontaktelement eine Stirnseite 456 auf, die der Kontaktstelle 454 zugewandt ist. Günstigerweise ist der Abstand zwischen der Stirnseite 456 und der Kontaktstelle 454 von der Dicke D des Bremsbelages 332 abhängig. Vorzugsweise ist das Kontaktelement 452 in einem Lagerelement 458 zumindest zwischen zwei Positionen, insbesondere zwischen einer Grundposition und einer Mindestposition, beweglich gelagert, insbesondere linear beweglich gelagert.

Beispielsweise ist das Lagerelement 458 eine Hülse, in welcher das günstigerweise als Kontaktstift ausgebildete Kontaktelement 452 beweglich gelagert ist.

Insbesondere ist das Kontaktelement 452 vorzugsweise in dem Lagerelement 458 in die Grundposition vorgespannt, beispielsweise in die Grundposition federbeaufschlagt. Günstigerweise ist ein Anschlag vorgesehen, welcher in der Grundposition das Kontaktelement 452 gegen die Vorspannung hält. Insbesondere ist somit das Kontaktelement 452 in Richtung der Vorspannung nicht über die Grundposition hinaus beweglich gelagert. Günstigerweise ist das Kontaktelement 452 gegen die Vorspannung aus der Grundposition heraus insbesondere bis mindestens zu der Mindestposition beweglich gelagert.

Günstigerweise ist der Kontaktsensor 356c, insbesondere das Kontaktelement 452 vorzugsweise zusammen mit dem Lagerelement 458, mit der Beaufschlagungseinheit 212 so gekoppelt, dass bei einer Bewegung der Beaufschlagungseinheit 212 für die bremswirksame Beaufschlagung der Kontaktsensor 356c mitbewegt wird.

Günstigerweise ist die Kontaktstelle 454 so angeordnet, dass in der Ausgangsstellung der Beaufschlagungseinheit 212 das Kontaktelement 452 in der kontaktfreien Relativstellung ist und das Kontaktelement 452 einen solchen Abstand zu der Kontaktstelle 454 aufweist, dass auch bei dem Mitbewegen des Kontaktelements 452 mit der Beaufschlagungseinheit 212 bis zu der bremswirksamen Beaufschlagung das Kontaktelement 452 in der kontaktfreien Relativstellung verbleibt, solange der Bremsbelag 332 eine hinreichend große Dicke Dh aufweist und dass bei dem Mitbewegen mit der Beaufschlagungseinheit 212 für die bremswirksame Beaufschlagung das Kontaktelement 452 in die Kontaktstellung versetzt wird, wenn der Bremsbelag 332 eine geringe Dicke Dg aufweist.

Bei einigen günstigen Varianten ist die Anordnung des Kontaktsensors 356c und der Kontaktstelle 454 so, dass diese sich kontaktieren, wenn eine Dicke D eines Bremsbelages kleiner ist als eine kritische Dicke Dc.

Beispielsweise ist die kritische Dicke Dc kleiner als der Kontaktwert Dk.

Insbesondere ist es dabei günstig, wenn das Kontaktelement 452 in dem Lagerelement 458 so beweglich gelagert ist, dass wenn das Kontaktelement 452 die Kontaktstelle 454 kontaktiert, das Lagerelement 458 relativ zu dem Kontaktelement 452 weiterhin mit der Beaufschlagungseinheit 212 für die bremswirksame Beaufschlagung bewegbar ist. Insbesondere wird dabei das Kontaktelement 452 entgegen der Vorspannung aus seiner Grundposition heraus versetzt.

Insbesondere ist die Mindestposition so ausgelegt, dass die Kontaktierung des Kontaktelements 452 an der Kontaktstelle 454, insbesondere durch die bewegliche Lagerung des Kontaktelements 452 in dem Lagerelement 458, eine bremswirksame Beaufschlagung der Beaufschlagungseinheit 212 zumindest nicht wesentlich beeinträchtigt, zumindest solange der Bremsbelag 332 eine Dicke D aufweist, welche größer ist als eine Minimaldicke Dm. Günstigerweise ist die Minimaldicke Dm kleiner als der Kontaktwert Dk und/oder als die kritische Dicke Dc.

Insbesondere ist so eine bremswirksame Beaufschlagung auch noch möglich, wenn die Dicke D des Bremsbelages 332 kleiner ist als der Kontaktwert Dk und/oder als die kritische Dicke Dc aber größer ist als die Minimaldicke Dm.

Vorzugsweise wird der Sensor 356 zumindest teilweise, insbesondere werden das Kontaktelement 452 und beispielsweise das Lagerelement 458, mit einer Halterung 432c an der Beaufschlagungseinheit 212 gehalten, wie beispielhaft in vergrößerter Darstellung in den Fign. 18 und 19 dargestellt ist.

Vorzugsweise ist die Halterung 432c an den Träger 342 montierbar und/oder an diesen angeordnet, insbesondere montiert.

Insbesondere umfasst der Träger 342 zumindest ein insbesondere als Trägerblech ausgebildetes Tragelement 464 zum zumindest teilweisen Tragen des Bremsbelages 332. Beispielsweise weist das Tragelement 464 eine günstigerweise großflächige Tragefläche auf, an welcher der Bremsbelag 332 mit seiner entgegengesetzten Seite 338 insbesondere unmittelbar anliegt.

Insbesondere ist das Tragelement 464 zumindest mit einem Trageabschnitt 466, welcher günstigerweise die Tragefläche aufweist, in zur Beaufschlagungsachse 264 axialer Richtung zwischen dem Bremsbelag 332 und dem Kolbenelement 312 angeordnet.

Beispielsweise weist das Tragelement 464 einen Führungsabschnitt 468 auf, an welchem das Tragelement 464 für eine Bewegung bei der bremswirksamen Beaufschlagung geführt gelagert ist. Vorzugsweise ist der Führungsabschnitt 468 an den Trageabschnitt 466 angeformt. Beispielsweise ist in dem Führungsabschnitt 468 ein Durchbruch 472 für die Lagerung ausgebildet. Insbesondere erstreckt sich ein Führungsbolzen in dem montierten Zustand durch den Durchbruch 472 hindurch und bietet so eine Führung und Lagerung für das Tragelement 464.

Insbesondere ist das Tragelement 464 einstückig ausgebildet.

Vorzugsweise weist die Halterung 432c, insbesondere deren Halteelement 442c, zumindest eine Formschlussausbildung für eine formschlüssige Verbindung mit zumindest einem Teil der Beaufschlagungseinheit 212, günstigerweise einem Teil des Trägers 342 vorzugsweise mit dem Tragelement 464, auf.

Bei einigen günstigen Varianten ist das Teil der Beaufschlagungseinheit 212 für die formschlüssige Verbindung mit der Halterung 432c extra für diese formschlüssige Verbindung ausgebildet, sodass günstigerweise dieses Teil speziell für diese Funktion ausgelegt werden kann.

Bei einigen vorteilhaften Varianten ist die Formschlussausbildung bei der Halterung 432c so ausgelegt und ausgebildet, dass diese mit einem bereits bei der Beaufschlagungseinheit 212 vorhandenen Teil eine formschlüssige Verbindung ausbilden kann. Beispielsweise ist so keine Umkonstruktion der Beaufschlagungseinheit 212 notwendig. Insbesondere ist dies bei einem Nachrüstsatz, aber nicht nur bei diesem, vorteilhaft.

Beispielsweise ist die Formschlussausbildung bei der Halterung 432c als Formschlussaufnahme 438 ausgebildet. Diese Formschlussaufnahme 438 ist zur formschlüssigen Aufnahme des als Formschlusselement 436 dienenden Teils der Beaufschlagungseinheit 212, insbesondere eines Teils des Trägers342, vorzugsweise eines Teils des Tragelements 464, ausgebildet. Bei vorteilhaften Varianten dient zumindest ein Teil des Führungsabschnitts 468 des Tragelements 464 als Formschlusselement 436.

Vorzugsweise weist die Formschlussaufnahme 438 zumindest einen Hinterschnitt 476 auf zur Aufnahme eines Vorsprungs 478 der korrespondierenden Formschlussausbildung, insbesondere des Formschlusselements 436.

Günstigerweise ist die Halterung 432c als Aufsetzer für das Tragelement 464, insbesondere zum Aufsetzen auf den Führungsabschnitt 468, ausgelegt und ausgebildet.

Insbesondere ist der Sensor 356 außerhalb des Bereichs des Bremsbelags 332 und innerhalb des Gehäuses 252 angeordnet.

Beispielsweise ist der Sensor 356 quer zu der Beaufschlagungsachse 264 versetzt zu dem Bremsbelag 332 angeordnet.

Günstigerweise ist die Kontaktstelle 454 an einem Teil des Gehäusekörpers 254 ausgebildet, welcher eine Führung für ein Kolbenelement 312 ausbildet.

Insbesondere begrenzt eine Innenseite 484 des Gehäusekörpers 254 einen in dem Gehäuse 252 ausgebildeten Innenraum, welcher beispielsweise zumindest teilweise den Eingriffsraum 266 und/oder den Führungsraum 272 umfasst und insbesondere den gemeinsamen Raumbereich 276 mitumfasst.

Insbesondere ist die Kontaktstelle 454 an der Innenseite 484 des Gehäusekörpers 254 angeordnet und/oder ausgebildet.

Günstigerweise ist der Sensor 356 in dem Innenraum angeordnet, insbesondere in einem Bereich, in welchen der Bremsring 232 nicht hineingreift.

Insbesondere ist der Kontaktsensor 356c zur Mitbewegung an eine der zwei Beaufschlagungseinheiten 212I,II gekoppelt und die Kontaktstelle 454 ist im Bereich der anderen der zwei Beaufschlagungseinheiten 212I,II, insbesondere an einem Teil des Gehäusekörpers 254 zur Führung dieser anderen Beaufschlagungseinheit 212I,II, angeordnet und/oder ausgebildet.

Insbesondere ist die Sensoreinheit 354c sich über die Bremsebene 265 erstreckend ausgebildet, sodass zumindest einige Teile auf beiden Seiten der Bremsebene 265 angeordnet sind. Insbesondere ist die Kontaktstelle 454 auf einer Seite der Bremsebene 265 angeordnet und/oder ausgebildet und das Kontaktelement 452 auf der anderen Seite der Bremsebene 265 mit der Beaufschlagungseinheit 212 gekoppelt. Insbesondere erstreckt sich das Kontaktelement 452 quer zu der Bremsebene 265 von der einen Seite zu der anderen Seite.

Insbesondere sind die voranstehend erläuterten Ausführungsbeispiele im Übrigen, soweit keine weiteren und/oder abweichenden Details gegeben wurden, vorzugsweise zumindest teilweise wie eines der anderen Ausführungsbeispiele ausgebildet, sodass, um Wiederholungen zu vermeiden, vollinhaltlich auf die jeweiligen Ausführungen im Zusammenhang mit den anderen Ausführungsbeispielen verwiesen wird.

Bei Ausführungsbeispielen einer Detektionsvorrichtung 350 umfasst diese eine Anzeigeeinrichtung 510 insbesondere zur Anzeige zumindest eines Zustandes eines Bremsbelages 332 einer Bremsvorrichtung 210. Insbesondere ist die Anzeigeeinrichtung 510 zumindest zur Anzeige, ob eine Dicke D des Bremsbelages 332 einen Schwellenwert Ds unterschritten hat, vorgesehen.

Insbesondere ist die Detektionsvorrichtung 350 zumindest zur Detektierung eines Zustandes des Bremsbelages 332, insbesondere zur Detektierung der Dicke D des Bremsbelages 332, zumindest teilweise wie voranstehend im Zusammenhang mit den weiteren Ausführungsbeispielen erläutert, ausgebildet.

Insbesondere umfassen Varianten der voranstehend erläuterten Ausführungsbeispiele eine Anzeigeeinrichtung 510 wie nachfolgend erläutert.

Insbesondere ist die Bremsvorrichtung 210 mit dem Bremsbelag 332 zumindest teilweise wie voranstehend im Zusammenhang mit den weiteren Ausführungsbeispielen erläutert ausgebildet.

Insbesondere weist die Anzeigeeinrichtung 510 zumindest eine Schnittstelle für eine signalübertragende Verbindung mit einem Anzeigegerät auf.

Bei einigen günstigen Varianten ist die Schnittstelle für eine drahtlose Signalübertragung, insbesondere für eine Nahfeldkommunikation und/oder Bluetooth-Verbindung, ausgelegt und ausgebildet.

Bei einigen vorteilhaften Varianten ist die Schnittstelle für eine drahtgebundene Signalübertragung ausgelegt und ausgebildet.

Bei einigen vorteilhaften Varianten ist das Anzeigegerät ein externes Gerät, mit welchem die Anzeigeeinrichtung 510 signalübertragend über die Schnittstelle verbindbar ist.

Vorzugsweise ist das externe Gerät ein mobil tragbares Gerät, insbesondere ein Kommunikationsgerät, beispielsweise ein Smartphone.

Insbesondere ist das externe Gerät mit der Schnittstelle drahtlos und/oder drahtgebunden signalübertragbar verbindbar.

Bei einigen günstigen Varianten ist zumindest eine Anzeigeeinheit der Anzeigeeinrichtung 510 an dem Gehäuse 252 der Bremsvorrichtung angeordnet.

Bei einigen vorteilhaften Varianten umfasst die Anzeigeeinrichtung 510 ein an einem Lenker 136 eines Fahrzeugs 110 anordenbares Anzeigegerät 514.

Bei einigen günstigen Varianten ist das Anzeigegerät 514 außen an den Lenker 136 befestigbar, insbesondere lösbar befestigbar. Insbesondere weist das Anzeigegerät 514 hierfür einen Befestigungsmechanismus auf. Beispielsweise umfasst der Befestigungsmechanismus zumindest eine Schraubverbindung und/oder einen Schnappverschluss.

Bei einigen bevorzugten Varianten ist das Anzeigegerät 514 in den Lenker 136, beispielsweise in ein Rohr des Lenkers 136, integriert.

Insbesondere umfasst das Anzeigegerät 514 eine Anzeigeeinheit, welche insbesondere zumindest eine LED und/oder ein Display umfasst.

So kann mit der Anzeigeeinheit zumindest der Zustand des Bremsbelages 332, insbesondere ob die Dicke D des Bremsbelages 332 größer und/oder kleiner als ein Schwellenwert Ds ist, beispielsweise die detektierte Dicke D zumindest innerhalb Toleranzgrenzen, basierend auf den über die Schnittstelle empfangenen Signalen angezeigt werden.

Bei einigen günstigen Varianten ist das Anzeigegerät 514 auch zur Anzeige weiterer Informationen, beispielsweise betreffend eines Zustandes des Fahrzeugs 110 und/oder Teile desselben und/oder von Fahrdaten einer Fahrt mit dem Fahrzeug 110, wie beispielsweise Geschwindigkeit und/oder Ort und/oder zurückgelegte Strecke, vorgesehen. Beispielsweise weist die Anzeigeeinrichtung 510, insbesondere das Anzeigegerät 514, zumindest eine Schnittstelle auf, über welche diese/dieses mit zumindest einer die weiteren Informationen detektierenden Detektionseinrichtung signalübertragend drahtgebunden und/oder drahtlos verbindbar ist und in einem verbundenen Zustand signalübertragend verbunden ist.

Bei einigen günstigen Varianten der voranstehend erläuterten Ausführungsbeispiele umfasst die Detektionsvorrichtung 350 zumindest eine Energieversorgung, die elektrische Energie bereitstellt, insbesondere zumindest für die Sensoreinheit 354 und/oder für das Anzeigegerät 514.

Beispielsweise umfasst die Energieversorgung eine Batterie und/oder einen Akku und/oder eine Solarzelle.

Bei einigen Varianten ist genau eine Energieversorgung vorgesehen und die elektrische Energie wird insbesondere über Leitungen zumindest der Sensoreinheit 354 und/oder der Anzeigeeinrichtung 510, beispielsweise der Schnittstelle und/oder dem Anzeigegerät 514 derselben, zugeführt.

Insbesondere, aber nicht ausschließlich, ist dies vorgesehen, wenn auch die Signalübertragung kabelgebunden erfolgt.

Bei einigen Varianten sind zumindest zwei Einrichtungen für die Energieversorgung vorgesehen, insbesondere eine Einrichtung für die Sensoreinheit 354 und beispielsweise einer mit der Sensoreinheit 354 verbundenen Schnittstelle und eine Einrichtung für das Anzeigegerät 514 und beispielsweise einer mit dem Anzeigegerät 514 verbundenen Schnittstelle. Insbesondere, aber nicht ausschließlich, ist dies vorgesehen, wenn die Signalübertragung drahtlos erfolgt, sodass beispielsweise keine direkte Drahtverbindung zwischen der Sensoreinheit 354 und dem Anzeigegerät 514 vorhanden ist.

### BEZUGSZEICHENLISTE

- 100: Bremssystem
- 110: Fahrzeug
- 114: Rahmen
- 122: Vorderseite
- 124: Radaufhängung
- 126: Rad
- 128: hintere Seite
- 132: Laufrichtung
- 136: Lenker
- 138: Lenkerdrehachse
- 144: Sattel
- 148: Antriebssystem
- 154: Lastentransportvorrichtung
- 210: Bremsvorrichtung
- 212: Beaufschlagungseinheit
- 220: Betätigungseinrichtung
- 222: Bremshebel
- 226: Hydrauliksystem
- 232: Bremsring
- 252: Gehäuse
- 254: Gehäusekörper
- 258: Befestigungselement
- 262: Beaufschlagungsrichtung
- 264: Beaufschlagungsachse
- 265: Bremsebene
- 266: Eingriffsraum
- 272: Führungsraum
- 274: Führungsabschnitt
- 276: gemeinsamer Raumbereich
- 282: axiales Ende
- 284: Gehäuseteil
- 286: Körperabschnitt
- 288: Öffnung
- 292: Verschlusselement
- 296: Druckkammer
- 312: Kolbenelement
- 314: Seitenwand
- 316: Dichtung
- 322: Stirnseite
- 332: Bremsbelag
- 334: Bremsseite
- 338: entgegengesetzte Seite
- 342: Träger
- 346: Magnet
- 350: Detektionsvorrichtung
- 354: Sensoreinheit
- 356: Sensor
- 362: Magnet
- 364: Magnetfeld
- 366: Magnetpol
- 368: Magnetpol
- 372: Magnetachse
- 412: Hohlraum
- 416: Aussparung
- 424: Sensorkammer
- 432: Halterung
- 436: Formschlusselement
- 438: Formschlussaufnahme
- 442: Halteelement
- 452: Kontaktelement
- 454: Kontaktstelle
- 456: Stirnseite
- 458: Lagerelement
- 464: Tragelement
- 466: Trageabschnitt
- 468: Führungsabschnitt
- 472: Durchbruch
- 476: Hinterschnitt
- 478: Vorsprung
- 484: Innenseite
- 510: Anzeigeeinrichtung
- 514: Anzeigegerät

## Patentansprüche

1. Bremssystem (100), insbesondere für ein lenkergeführtes Fahrzeug (110) und/oder für ein Leichtfahrzeug (110), mit einer Bremsvorrichtung (210), welche zumindest einen Träger (342) für einen Bremsbelag (332) und/oder zumindest einen Bremsbelag (332) umfasst,
wobei das Bremssystem (100) eine Detektionsvorrichtung (350) zum Detektieren eines Verschleißes eines Bremsbelages (332) der Bremsvorrichtung (210), insbesondere zum Detektieren eines Verschleißes eines von dem zumindest einen Träger (342) getragenen Bremsbelages (332) und/oder zum Detektieren eines Verschleißes des zumindest einen Bremsbelages (332), umfasst.

2. Verwendung einer Detektionsvorrichtung (350) zum Detektieren eines Verschleißes eines Bremsbelages (332) einer Bremsvorrichtung (210) insbesondere bei einem lenkergeführten Fahrzeug (110) und/oder einem Leichtfahrzeug (110).

3. Nachrüstsatz für eine Bremsvorrichtung (210), insbesondere für eine Bremsvorrichtung (210) eines lenkergeführten Fahrzeuges (110) und/oder eines Leichtfahrzeuges (110), umfassend eine Detektionsvorrichtung (350) zum Detektieren eines Verschleißes zumindest eines Bremsbelages (332) der Bremsvorrichtung (210).

4. Bremssystem (100) und/oder Verwendung und/oder Nachrüstsatz nach einem der voranstehenden Ansprüche, **dadurch gekennzeichnet,**
- **dass** die Detektionsvorrichtung (350) eine Sensoreinheit (354) mit zumindest einem berührungsfrei detektierenden Sensor (356) umfasst und/oder zumindest einen elektromagnetisch wirkenden Sensor (356) umfasst;
und/oder
- **dass** die Detektionsvorrichtung (350) eine Sensoreinheit (354) mit zumindest einem als Magnetfeldsensor ausgebildeten Sensor (356) zur Detektion eines Magnetfeldes (364) umfasst, wobei insbesondere das zu detektierende Magnetfeld (364) zumindest indikativ für einen Verschleiß eines Bremsbelages (332) ist.

5. Bremssystem (100) und/oder Verwendung und/oder Nachrüstsatz nach einem der voranstehenden Ansprüche, **gekennzeichnet durch** zumindest eines der Folgenden:
- dass die Bremsvorrichtung (210) zumindest einen Magneten (362, 346) umfasst, wobei insbesondere das Magnetfeld (364) des zumindest einen Magneten (362, 346) zumindest indikativ für einen Verschleiß zumindest eines von dem zumindest einen Träger (342) getragenen Bremsbelages (332) und/oder zumindest indikativ für einen Verschleiß des zumindest einen Bremsbelages (332) ist;
und/oder
- dass durch die Kopplung eine Relativposition des zumindest einen Magneten (362, 346) zu dem zumindest einen Träger (342) und/oder zu dem zumindest einen Bremsbelag (332) festgelegt ist;
und/oder
- dass zumindest ein Magnet (362, 346) in der Beaufschlagungseinheit (212) mit dem zumindest einen Träger (342) und/oder dem zumindest einen Bremsbelag (332) angeordnet ist;
und/oder
- dass zumindest ein Magnet (362, 346) in der Beaufschlagungseinheit (212) an der Seite, an welcher der zumindest eine Träger (342) und/oder der zumindest eine Bremsbelag (332) angeordnet ist, angeordnet ist;
und/oder
- dass zumindest ein Magnet (362, 346), dessen Magnetfeld (364) von der Detektionsvorrichtung (350) detektiert werden soll, vorgesehen und insbesondere ausgebildet und/oder angeordnet ist, den Bremsbelag (332), dessen Bremsbelagverschleiß detektiert werden soll, zu halten.

6. Bremssystem (100) und/oder Verwendung und/oder Nachrüstsatz nach einem der voranstehenden Ansprüche, **gekennzeichnet durch** zumindest eines der Folgenden:
- dass die Bremsvorrichtung (210) zumindest zwei Magnete (362, 346) umfasst, wobei insbesondere das Magnetfeld (364) der zumindest zwei Magnete (362, 346) zumindest indikativ für den Bremsbelagverschleiß zumindest eines Bremsbelages (332) ist und/oder das Magnetfeld (364) der zumindest zwei Magnete (362, 346) von der Detektionsvorrichtung (350) für die Bremsbelagsverschleißerkennung detektiert wird;
und/oder
- dass die Bremsvorrichtung (210) zwei Beaufschlagungseinheiten (212) mit je zumindest einem Magneten (362, 346) umfasst;
und/oder
- dass zumindest zwei Magnete (362, 346) mit einem gleichen magnetischen Pol (366, 368) einander zugewandt sind;
und/oder
- dass eine Magnetachse (372) zumindest eines Magneten (362, 346), insbesondere eine jeweilige Magnetachse (372) von zumindest zwei Magneten (362, 346), zumindest näherungsweise parallel zu einer Beaufschlagungsachse (264) der Bremsvorrichtung (210) ausgerichtet ist/sind.

7. Bremssystem (100) und/oder Verwendung und/oder Nachrüstsatz nach einem der voranstehenden Ansprüche, **dadurch gekennzeichnet, dass** zumindest ein Sensor (356) der Detektionsvorrichtung (350) ein Kontaktsensor ist.

8. Bremssystem (100) und/oder Verwendung und/oder Nachrüstsatz nach einem der voranstehenden Ansprüche, **gekennzeichnet durch** zumindest eines der Folgenden:
- dass der Kontaktsensor (356c) so ausgelegt ist, dass bei einer signalauslösenden Kontaktierung ein Stromkreis geschlossen wird;
und/oder
- dass ein Pol des zu schließenden Stromkreises mit dem Kontaktelement (452) elektrisch leitend verbunden ist und der andere Pol des zu schließenden Stromkreises zumindest mit einer Kontaktstelle (454) elektrisch leitend verbindbar ist, insbesondere ist der andere Pol zumindest in einem montierten Zustand mit der Kontaktstelle elektrisch leitend verbunden;
und/oder
- dass die Kontaktstelle (454) zumindest von einem Gehäusekörper (254) eines Gehäuses (252) der Bremsvorrichtung (210) elektrisch getrennt ist;
und/oder
- dass der andere Pol des zu schließenden Stromkreises mit einem Gehäusekörper (254) eines Gehäuses (252) der Bremsvorrichtung (210) zu verbinden ist.

9. Bremssystem (100) und/oder Verwendung und/oder Nachrüstsatz nach einem der voranstehenden Ansprüche, **dadurch gekennzeichnet,**
- **dass** die Kontaktstelle (454) an einem Gehäusekörper (254) eines Gehäuses der Bremsvorrichtung (210) angeordnet ist;
und/oder
- **dass** die Kontaktstelle (454) an einem Träger (342) für einen Bremsbelag (332) angeordnet und insbesondere ausgebildet ist.

10. Bremssystem (100) und/oder Verwendung und/oder Nachrüstsatz nach einem der voranstehenden Ansprüche, **dadurch gekennzeichnet,**
- **dass** das Kontaktelement (452) aus einer Grundposition heraus zumindest teilweise relativ zu dem zumindest einen Träger (342) und/oder dem zumindest einen Bremsbelag (332) beweglich gelagert ist;
und/oder
- **dass** das beweglich gelagerte Kontaktelement (452) in die Grundposition vorgespannt, insbesondere federvorgespannt, ist.

11. Bremssystem (100) und/oder Verwendung und/oder Nachrüstsatz nach einem der voranstehenden Ansprüche, **gekennzeichnet durch** zumindest eines der Folgenden:
- dass zumindest ein Sensor (356) der Detektionsvorrichtung (350) in einem Gehäuse des Bremssystems (100) angeordnet ist;
und/oder
- dass zumindest ein Sensor (356) der Detektionsvorrichtung (350) in einer Sensorkammer (424) des Gehäusekörpers (254) des Gehäuses (252) der Bremsvorrichtung (210) angeordnet ist;
und/oder
- dass zumindest ein Sensor (356) der Detektionsvorrichtung (350) in einem freien Hohlraum (412) eines Gehäuses (252) des Bremssystems (100), insbesondere der Bremsvorrichtung (210), angeordnet ist;
und/oder
- dass zumindest ein Sensor (356) der Detektionsvorrichtung (350) an einem Verschlusselement (292) des Gehäuses (252), insbesondere in einer Aussparung (416) des Verschlusselementes (292), angeordnet ist;
und/oder
- dass zumindest ein Sensor (356) der Detektionsvorrichtung (350) in einem Eingriffsraum (266) des Gehäuses für ein Bremsgegenstück (232) und/oder in einem Führungsraum (272) des Gehäuses (252) zumindest teilweise angeordnet ist;
und/oder
- dass zumindest ein Sensor (356) der Detektionsvorrichtung (350) außerhalb des Gehäuses (252) der Bremsvorrichtung (210) angeordnet ist.

12. Bremssystem (100) und/oder Verwendung und/oder Nachrüstsatz nach einem der voranstehenden Ansprüche, **dadurch gekennzeichnet, dass** zumindest ein Sensor (356) der Detektionsvorrichtung (350) an einer Halterung (432) angeordnet ist;
wobei insbesondere zumindest eines der Folgenden vorgesehen ist:
- dass die Halterung (432) zumindest eine Formschlussausbildung (436, 438), insbesondere zumindest ein Formschlusselement (436) und/oder eine Formschlussaufnahme (438), aufweist für eine formschlüssige Verbindung;
und/oder
- dass die Halterung (432) insbesondere mit zumindest einer Formschlussausbildung (436, 438) für eine positionsgenaue Festlegung ausgebildet ist;
und/oder
- dass die Halterung (432) für eine Befestigung an dem Gehäusekörper (254) des Gehäuses (252) der Bremsvorrichtung (210) ausgelegt und ausgebildet ist;
und/oder
- dass die Halterung (432) für eine Befestigung an einer Beaufschlagungseinheit (212) der Bremsvorrichtung (210) ausgelegt und ausgebildet ist.

13. Bremssystem (100) und/oder Verwendung und/oder Nachrüstsatz nach einem der voranstehenden Ansprüche, **dadurch gekennzeichnet, dass** die Halterung (432) für eine Befestigung an einem Träger (342) für einen Bremsbelag ausgelegt und ausgebildet ist;
wobei insbesondere eines der Folgenden vorgesehen ist:
- dass die Halterung (432) eine Aufnahme, insbesondere eine Formschlussaufnahme (438), für einen Teil des Trägers (342) aufweist;
und/oder
- dass die Halterung (432) einen Hinterschnitt (476) für die Befestigung mit dem Träger (342), insbesondere zur positionsgenauen Festlegung der Halterung (432), aufweist;
und/oder
- dass die Halterung (432) als Aufstecker für den Träger (342) ausgebildet ist.

14. Bremssystem (100) und/oder Verwendung und/oder Nachrüstsatz nach einem der voranstehenden Ansprüche, **gekennzeichnet durch** zumindest eines der Folgenden:
- dass die Detektionsvorrichtung (350) zumindest eine Schnittstelle für eine signalübertragende Verbindung mit einem Gerät zur Übertragung von Signalen, die zumindest für einen Zustand eines Bremsbelages (332) zumindest repräsentativ sind, umfasst;
und/oder
- dass die Detektionsvorrichtung (350) eine Anzeigeeinrichtung (510) zur Anzeige von Signalen, die zumindest für einen Zustand eines Bremsbelages (332) zumindest repräsentativ sind, umfasst;
und/oder
- dass zumindest eine Anzeigeeinheit der Anzeigeeinrichtung (510), insbesondere ein Anzeigegerät (514), zur Anordnung an ein Gehäuse (252) der Bremsvorrichtung (210) ausgebildet ist und / oder insbesondere dass die zumindest eine Anzeigeeinheit, insbesondere das Anzeigegerät (514), an das Gehäuse (252) der Bremsvorrichtung (210) angeordnet ist;
und/oder
- dass ein Anzeigegerät (514) der Anzeigeeinrichtung (510) zur Anordnung an einen Lenker (136) eines lenkergeführten Fahrzeuges (110) ausgebildet ist;
und/oder
- dass ein Anzeigegerät (514) der Anzeigeeinrichtung (510) zur Integration in einen Lenker (136) eines lenkergeführten Fahrzeuges (110) ausgebildet ist und insbesondere in einen Lenker (136) integriert ist;
und/oder
- dass ein Anzeigegerät (514) der Anzeigeeinrichtung (510) zur Befestigung an einem Lenker (136) eines lenkergeführten Fahrzeugs (110) ausgebildet ist und insbesondere an einem Lenker (136) befestigt ist.

15. Fahrzeug (110), insbesondere lenkergeführtes Fahrzeug (110) und/oder Leichtfahrzeug (110), umfassend ein Bremssystem (100) nach einem der voranstehenden Ansprüche.
